(19) Europäisches Patentamt

European Patent Office

Office européen des brevets

(11) **EP 1 605 002 A1**

(12) **EUROPEAN PATENT APPLICATION**
published in accordance with Art. 158(3) EPC

(43) Date of publication:
**14.12.2005 Bulletin 2005/50**

(51) Int Cl.⁷: **C08F 297/04**, C08F 8/04,
C08L 53/02

(21) Application number: **04720238.7**

(22) Date of filing: **12.03.2004**

(86) International application number:
**PCT/JP2004/003313**

(87) International publication number:
**WO 2004/081069 (23.09.2004 Gazette 2004/39)**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **14.03.2003 JP 2003069864
01.12.2003 JP 2003401606
26.12.2003 JP 2003435537**

(71) Applicant: **JSR Corporation
Tokyo 104-8410 (JP)**

(72) Inventors:
• **Shimakage, Masashi
Tokyo 104-8410 (JP)**
• **Toyoizumi, Takashi
Tokyo 104-8410 (JP)**
• **Toyoda, Nobuyuki
Tokyo 104-8410 (JP)**
• **Kodama, Kazuhisa
Tokyo 104-8410 (JP)**

(74) Representative: **TBK-Patent
Bavariaring 4-6
80336 München (DE)**

(54) **HYDROGENATED DIENE COPOLYMER, POLYMER COMPOSITION, AND MOLDED OBJECT**

(57)     A hydrogenated diene-based copolymer satisfying predetermined conditions, which is obtained by hydrogenating a block copolymer containing at least two polymer blocks (A) composed mainly of a vinyl aromatic compound and at least one vinyl aromatic compound-conjugated diene compound copolymer block (B). The hydrogenated diene-based copolymer is per se superior in processability, flexibility, weather resistance, vibration-damping property and mechanical properties, and can provide a shaped article highly flexible and superior in various properties such as mechanical properties, appearance, mar resistance, weather resistance, heat resistance, vibration-damping property, processability and the like.

EP 1 605 002 A1

**Description**

Technical Field

The present invention relates to a hydrogenated block copolymer (hydrogenated diene-based copolymer) having a particular structure; a polymer composition comprising the copolymer; a powder made of the polymer composition; a shaped article obtained by powder molding of the powder; a shaped article obtained by extrusion molding of the hydrogenated diene-based copolymer; a shaped article obtained by extrusion molding of the polymer composition; a composition for foamed material, comprising the hydrogenated diene-based copolymer; a foamed material obtained by foaming of the foaming resin composition; a soft film or sheet; a tube; a multilayered laminate and a process for production thereof; and a medical resin composition and a medical shaped article obtained by using the medical resin composition.

Background Art

In powder molding using a soft powder material, there has been widely employed a powder slush molding method using a soft polyvinyl chloride resin powder, for molding of a surface layer of interior automotive trim (e.g. instrument panel, console box or door trim). A shaped article made of a soft polyvinyl chloride resin has a soft touch, can have leather grains or stitches formed thereon, and is easy to design. However, the soft polyvinyl chloride resin is inferior in lightweightness and, moreover, has a problem in environmental sanitation because, when incinerated after the use, it generates an acidic substance derived from vinyl chloride. In order to solve such a problem, there were proposed thermoplastic elastomer powders made of an olefin-based thermoplastic elastomer which is a blend of a polypropylene resin and an ethylene-propylene rubber (see, for example, JP-A-1993-1183).

However, a shaped article obtained by powder molding of the thermoplastic elastomer powder is hard as compared with a shaped article of vinyl chloride-based resin; moreover, it tends to show whitening when bent and, therefore, when it is released from a mold, the bent portion of shaped article has tended to show whitening, leading to inferior appearance. In order to improve the whitening when bent, there were proposed thermoplastic elastomer powders which is a blend of a polypropylene resin and a styrene-based thermoplastic elastomer of low styrene content (see, for example, JP-A-1995-82433, JP-A-2001-49051, JP-A-2001-49052 and JP-A-2002-166498).

A shaped article obtained by powder molding of one of the thermoplastic elastomer powders proposed in the above-mentioned patent literatures is improved in whitening when bent by lowering of the styrene content of hydrogenated diene-based copolymer for increased fluidity. However, the low styrene content gives a hydrogenated diene-based copolymer/olefin-based polymer composition low in tensile strength, and a shaped article made of this composition has been insufficient in mar resistance.

Further, when this composition is used for extrusion molding of packaging film, industrial material film, sheet or the like, the molded product has had a problem of breakage or inferior appearance caused by friction and mar, when the product has, for example, contacted with, rubbed against or collided with other substance such as wood or the like.

Meanwhile, there are proposals on various block copolymers containing a vinyl aromatic polymer block and a conjugated diene compound polymer block; and such block copolymers per se or blends thereof with other material are in use in various shaped articles as a substitute for vulcanized rubber or soft vinyl chloride resin. Incidentally, it is known that a hydrogenated styrene-isoprene-styrene block copolymer (SEPS) and a hydrogenated styrene-styrene-isoprene-styrene block copolymer (SSEPS), both of which belong to the above-mentioned block copolymers and contain an isoprene block as the conjugated diene compound polymer block (see, for example, JP-A-2002-284830), show vibration-damping property at around normal temperature by controlling the content of 1,2- and 3,4- configurations of isoprene.

However, the SEPS and SSEPS, as compared with a hydrogenated styrene-butadiene-styrene block copolymer (SEBS), which is an above-mentioned block copolymer containing a butadiene block as the conjugated diene compound polymer block, tend to cause cleavage owing to the higher content of tertiary carbon atom and have been insufficient in weather resistance and heat resistance in some cases.

The SEBS, when the content of 1,2- configuration of butadiene is higher, is not sufficiently high in tan $\delta$ peak temperature which has a correlation with the glass transition temperature, and accordingly has a problem of exhibiting no vibration-damping property at around normal temperature. Thus, there has yet been developed no copolymer or composition thereof, superior in vibration-damping property, flexibility, dynamic properties, weather resistance and moldability.

The present invention has been made in view of such problems of conventional techniques and aims at providing a novel hydrogenated diene-based copolymer having a particular structure, which is superior per se in processability, flexibility, vibration-damping property and mechanical properties and which can provide a shaped article superior in flexibility, mechanical properties, appearance, mar resistance, weather resistance, heat resistance, vibration-damping property and processability; a polymer composition comprising the hydrogenated diene-based copolymer; a powder made of the polymer composition; a shaped article obtained by powder molding of the powder; a shaped article obtained by extrusion molding of the hydrogenated diene-based copolymer; a shaped article obtained by extrusion molding of the polymer composition; a composition for foamed material, comprising the hydrogenated diene-based copolymer; and a foamed material obtained by foaming of the composition for foamed material.

Meanwhile, a polypropylene-made film or sheet is inexpensive and superior in heat resistance and mechanical properties and, therefore, is being used suitably in various applications. However, it was insufficient in low-temperature impact resistance, etc. in some cases and has limitations in properties such as flexibility, heat-sealing property and the like; therefore, has had various restrictions in applications.

In order to solve the above problem, there were disclosed polypropylene-based soft films or sheets (see, for example, JP-A-1997-25347). The polypropylene-based soft film or sheet disclosed in the patent literature is superior in various properties such as impact resistance, flexibility, heat-sealing property and the like. However, it is not sufficient in the properties such as fretting resistance, breakage resistance and the like, required in association with the recent years' rapid progress of technological development and needs further improvement.

The present invention has been made in view of such problems of conventional techniques and aims at providing a soft film or sheet having superior strength, fretting resistance and breakage resistance.

In recent years, thermoplastic elastomers, which are a soft material having rubber elasticity, have the same moldability and processability as thermoplastic resins, and are recyclable, have been used widely in various fields such as automotive parts, household electric appliance parts and the like. Of these thermoplastic elastomers, polystyrene-based thermoplastic elastomers, for example, a styrene-butadiene block polymer and a styrene-isoprene block polymer (which are each an aromatic vinyl compound-conjugated diene compound block copolymer), have flexibility and good normal-temperature rubber elasticity. Further, thermoplastic elastomer compositions using such a thermoplastic elastomer have excellent processability. Therefore, these plastic elastomers and compositions thereof are being used widely as a substitute for vulcanized rubber. Further, products obtained by hydrogenating the intra-molecular double bonds of such a thermoplastic elastomer or the like, i.e. hydrogenated block copolymers are improved in heat stability and weather resistance and are being used more widely.

However, thermoplastic elastomer compositions using such a hydrogenated block copolymer have had a problem in that they are not sufficient in the rubber-like properties required for vulcanized rubber substitutes, such as oil resistance, high-temperature rubber elasticity and the like. Hence, in order to solve such a problem, there were proposed crosslinked materials obtained by crosslinking the above-mentioned composition of hydrogenated block copolymer (see, for example, JP-A-1984-6236, JP-A-1988-57662, JP-B-1991-49927, JP-B-1991-11291 and JP-B-1994-13628); thermoplastic elastomer compositions obtained by improving such a crosslinked material; and tube and hose members using such a composition, superior in kinking and extrusion moldability (see, for example, JP-A-2003-183448).

The tube and hose members proposed in the above-mentioned JP-A-2003-183448, however, are not well balanced in strength and hardness and still have room for improvement in kinking. Also, they need be further improved also in the properties (e.g. fretting resistance) required in association with recent years' rapid progress of technological development.

The present invention has been made in view of such problems of conventional techniques and aims at providing a tube superior in kinking and fretting resistance and well balanced in strength and hardness.

Meanwhile, a polypropylene-made film or sheet is inexpensive and superior in heat resistance and mechanical properties and, therefore, is being used suitably in various applications. However, it was insufficient in low-temperature impact resistance, etc. in some cases and has limitations in properties such as flexibility, fretting resistance, breaking-through resistance and the like; therefore, has had various restrictions in applications.

In order to solve the above problem, there were disclosed polypropylene-based soft films or sheets (see, for example, JP-A-1997-25347). The polypropylene-based soft film or sheet disclosed in the patent literature is superior in various properties such as impact resistance, flexibility, heat-sealing property and the like. However, it is not sufficient in the properties such as fretting resistance, breaking-through resistance and the like, required in association with the recent years' rapid progress of technological development and needs further improvement.

In order to solve these problems, there has been disclosed to the public, in recent years, a technique of applying secondary processing (e.g. lamination) to a film or sheet made of a composition composed mainly of:

a hydrogenated diene-based copolymer obtained by hydrogenating a block copolymer constituted by at least two kinds of blocks selected from a vinyl aromatic compound-based polymer block, a conjugated diene type compound polymer block, a vinyl aromatic compound-conjugated diene type compound random copolymer block and a taper block composed of a vinyl aromatic compound and a conjugated diene type compound, wherein the vinyl aromatic compound increases gradually, and
an olefin-based resin (see, for example, Journal of Technical Disclosure No. 94-12864).

It was also disclosed that a film superior in flexibility, transparency, heat resistance, low-temperature impact resistance and heat-sealing property is obtained by superimposing a surface layer made mainly of a polypropylene-based resin, on a base material layer comprising a polypropylene copolymer and a hydrogenated block copolymer containing at least one polymer block composed mainly of a vinyl aromatic compound and a hydrogenated polymer block composed mainly of a conjugated diene compound (see, for example, JP-A-1995-227938). However, even these films or sheets are not yet satisfactory in balance of properties of flexibility, fretting resistance and breaking-through resistance.

In order to solve the above problems, there were disclosed multilayered laminates formed by superimposing, on a base layer which is a composition of an olefin-based resin and a particular hydrogenated diene-based copolymer, a surface layer which is a composition of an olefin-based resin and a particular hydrogenated diene-based copolymer different from the above hydrogenated diene-based copolymer (see, for example, JP-A-1997-327893). The multilayered laminate disclosed in the above patent literature is superior in transparency, flexibility, low-temperature resistance, heat-sealing property, strength, etc. and is low in change of transparency with time. However, the multilayered laminate is not yet sufficient in the flexibility required in association with recent years' rapid progress of technological development and needs further improvements in fretting resistance and breaking-through resistance.

The present invention has been made in view of such problems of conventional techniques and aims at providing a film-like or sheet-like multilayered laminate superior in fretting resistance, breaking-through resistance and flexibility, and a process for production thereof.

Materials constituting the medical shaped articles (e.g. container and tube) used in medical practices such as blood drawing, blood transfusion, clysis transfusion and the like, are required to have safety, sanitation and other various properties. They need to have, in particular, flexibility, transparency and heat resistance and further have these properties in good balance.

As representative examples of the polymer materials constituting medical shaped articles, which have been used heretofore, there can be mentioned polyethylene type polymers such as soft polyvinyl chloride, ethylene-vinyl acetate copolymer, low-density polyethylene and the like. Of these polyethylene type polymers, the soft polyvinyl chloride, however, may cause problems in dissolution of plasticizer used therein, adsorption of drug, coloring, waste disposal, etc.

The polyethylene polymers have also a problem of not being sufficient in balance of flexibility, transparency and heat resistance. Further, the low-density polyethylene is relatively good in flexibility and transparency but low in melting point (inferior in heat resistance). Therefore, the low-density polyethylene is unable to withstand the high-pressure steam sterilization conducted ordinarily at 100 to 130°C and tends to cause inconveniences such as blocking, loss of clarity (whitening), generation of pits, deformation and the like. Incidentally, crosslinking such as chemical crosslinking, radiation crosslinking or the like is considered in order to enhance the heat resistance of the low-density polyethylene; however, it inevitably invites complication of the production process.

In order to solve these problems, there were disclosed, for example, materials for medical container comprising a layer made of a crystalline copolymer composed mainly of a crystalline polypropylene, a crystalline polybutene-1 or the like and a layer containing a polypropylene type amorphous polymer (see, for example, JP-A-1994-171040); and medical resin compositions which are a blend of an ethylene-$\alpha$-olefin copolymer (the $\alpha$-olefin is a particular $\alpha$-olefin) and a particular polyolefin type resin and wherein the ratio of weight-average molecular weight (Mw) and number-average molecular weight (Mn) and the density are set at predetermined levels (see, for example, JP-A-2003-699).

Medical shaped articles made of such medical container materials or medical resin compositions, disclosed in the above-mentioned conventional techniques are subjectable to high-pressure steam sterilization; however, in view of the fact that the property requirements for these medical shaped articles in medical treatment sites are becoming increasingly higher in recent years, they need further improvements. Moreover, these medical container materials and shaped articles are not yet sufficient in fretting resistance and breaking-through resistance and need be further improved in fretting resistance and breaking-through resistance.

The present invention has been made in view of these problems of conventional techniques and aims at providing a medical resin composition capable of forming a medical shaped article superior in fretting resistance and breaking-through resistance and subjectable to high-pressure steam sterilization, and a medical shaped article made therefrom, superior in fretting resistance and breaking-through resistance and subjectable to high-pressure steam sterilization.

Disclosure of the Invention

The present inventors made an intensive study in order to achieve the above aims. As a result, it was found that, by allowing a hydrogenated diene-based copolymer to contain a block of a vinyl aromatic compound at a particular proportion, there can be obtained, with no reduction in fluidity, a blend thereof with improved tensile strength and a shaped article thereof with improved mar resistance. The present invention has been completed based on this finding.

The present inventors also found that, by allowing a hydrogenated diene-based copolymer to contain a vinyl aromatic compound at a particular proportion and in a particular block structure, the resulting hydrogenated diene-based copolymer can be improved in strength, fretting resistance and breakage resistance. The present invention has been completed based on this finding.

The present inventors further found that, by allowing a hydrogenated diene-based copolymer to contain a vinyl aromatic compound at a particular proportion and in a particular block structure, the hydrogenated diene-based copolymer can be improved in kinking and fretting resistance and can be made well-balanced in strength and hardness. The present invention has been completed based on this finding.

The present inventors further found that, by allowing a hydrogenated diene-based copolymer to contain a vinyl aromatic compound at a particular proportion and in a particular block structure, the hydrogenated diene-based copolymer can be improved in fretting resistance, breaking-through resistance and flexibility and, depending upon the material selected for a layer to be superimposed thereon, even in transparency. The present invention has been completed based on this finding.

The present inventors further found that by using a hydrogenated diene-based copolymer containing a vinyl aromatic compound at a particular proportion and in a particular block structure, or using a blend of the hydrogenated diene-based copolymer with a particular polyolefin type resin, the resulting shaped article can be improved in fretting resistance and breaking-through resistance and moreover can withstand high-pressure steam sterilization. The present invention has been completed based on this finding.

Thus, according to the present invention, there are provided a hydrogenated diene-based copolymer, a polymer composition, a powder and a shaped article obtained by powder molding thereof, a shaped article obtained by extrusion molding of the hydrogenated diene-based copolymer, a shaped article obtained by extrusion molding of the polymer composition, a composition for foamed material and a foamed material obtained by foaming thereof, a soft film or sheet, a tube, a multilayered laminate and a process for production thereof, and a medical resin composition and a medical shaped article obtained by use thereof, all described below.

[1] A hydrogenated diene-based copolymer which is obtained by hydrogenating a block copolymer containing at least two polymer blocks (A) composed mainly of a vinyl aromatic compound and at least one vinyl aromatic compound-conjugated diene compound copolymer block (B), and satisfies the following conditions (1) to (3):

(1) a content of the total vinyl aromatic compound units in the hydrogenated diene-based copolymer is 20 to 70% by mass,
(2) a proportion (BS) of the content of the vinyl aromatic compound unit contained in the block (B), to the content of the total vinyl aromatic compound units in the hydrogenated diene-based copolymer is 10 to 80%, and
(3) a content of the vinyl configuration derived from the conjugated diene compound, in the hydrogenated diene-based copolymer is 30 to 75%.

[2] A hydrogenated diene-based copolymer which is obtained by hydrogenating a block copolymer containing at least two polymer blocks (A) composed mainly of a vinyl aromatic compound and at least one vinyl aromatic compound-conjugated diene compound copolymer block (B), and satisfies the following conditions (1) to (3):

(1) a content of the total vinyl aromatic compound units in the hydrogenated diene-based copolymer is 20 to 70% by mass,
(2) a proportion (LS) of the content of the long-chain vinyl aromatic compound unit to the content of the total vinyl aromatic compound units in the hydrogenated diene-based copolymer is 10 to 80%, and
(3) a content of the vinyl configuration derived from the conjugated diene compound, in the hydrogenated diene-based copolymer is 30 to 75%.

[3] A hydrogenated diene-based copolymer according to the above [1] or [2], wherein at least 90% of the double bonds derived from the conjugated diene compound is hydrogenated.
[4] A hydrogenated diene-based copolymer according to any of the above [1] to [3], which has a melt flow rate (MFR) of 10 to 200 g/10 min when measured at 230°C at a load of 21.2 N.
[5] A hydrogenated diene-based copolymer according to any of the above [1] to [3], which has a melt flow rate (MFR) of 0.01 to 100 g/10 min when measured at 230°C at a load of 21.2 N.
[6] A hydrogenated diene-based copolymer according to any of the above [1] to [4], which has a melt viscosity of 2,000 Pa·s or less at 230°C at 0.1 Hz.
[7] A polymer composition comprising a hydrogenated diene-based copolymer (a) set forth in any of the above [1] to [6] and a thermoplastic polymer (b) other than the hydrogenated diene-based copolymer (a), at a mass ratio of (a)/(b) = 99/1 to 1/99 [(a) + (b) = 100].

[8] A polymer composition according to the above [7], wherein the thermoplastic polymer (b) is a propylene-based polymer.

[9] A powder obtained by subjecting a polymer composition set forth in the above [8], to mechanical grinding, die face cutting or strand cutting.

[10] A powder according to the above [9], which has a bulk specific gravity of 0.38 or more and a sphere-reduced average particle diameter of 1.2 mm or less.

[11] A shaped article obtained by subjecting a powder set forth in the above [9] or [10], to powder molding.

[12] A shaped article obtained by subjecting a hydrogenated diene-based copolymer set forth in the above [5], to extrusion molding.

[13] A shaped article obtained by subjecting to extrusion molding a polymer composition set forth in the above [5], comprising a hydrogenated diene-based copolymer (a) and a thermoplastic polymer (b) at a mass ratio of (a)/(b) = 99/1 to 1/99 [(a) + (b) = 100].

[14] A composition for foamed material, comprising a hydrogenated diene-based copolymer set forth in any of the above [1] to [6] and a foaming agent.

[15] A composition for foamed material according to the above [14], further comprising a thermoplastic polymer other than the hydrogenated diene-based copolymer.

[16] A foamed material obtained by foaming a composition for foamed material set forth in the above [14] or [15].

[17] A soft film or sheet made of a hydrogenated diene-based copolymer set forth in any of the above [1] to [6].

[18] A soft film or sheet made of a polymer composition comprising a hydrogenated diene-based copolymer (a) set forth in any of the above [1] to [6] and a thermoplastic polymer (b) other than the hydrogenated diene-based copolymer (a), at a mass ratio of (a) / (b) = 99/1 to 1/99 [(a) + (b) = 100].

[19] A soft film or sheet according to the above [17] or [18], wherein the thermoplastic polymer (b) is an olefin-based polymer.

[20] A soft film or sheet according to the above [19], wherein the olefin-based polymer is a propylene-based polymer.

[21] A tube made of a polymer composition comprising a hydrogenated diene-based copolymer (a) set forth in any of the above [1] to [6] and a thermoplastic polymer (b) other than the hydrogenated diene-based copolymer (a), at a mass ratio of (a)/(b) = 99/1 to 50/50 [(a) + (b) = 100].

[22] A multilayered laminate comprising a base material layer and a surface layer formed on at least one side of the base material layer, wherein the surface layer is made of a polymer composition comprising an olefin-based resin (c) and a hydrogenated diene-based copolymer (a) set forth in any of the above [1] to [6], at a mass ratio of (c)/(a) = 95/5 to 20/80 [(c) + (a) = 100].

[23] A multilayered laminate according to the above [22], wherein the base material layer is made of a resin composition comprising the olefin-based resin (c) and a hydrogenated diene-based copolymer (d) at a mass ratio of (c)/(d) = 100/0 to 20/80 [(c) + (d) = 100].

[24] A process for producing a multilayered laminate comprising a base material layer and a surface layer formed on at least one side of the base material layer, which process comprises a step of subjecting to co-extrusion a polymer composition comprising an olefin-based resin (c) and a below-shown hydrogenated diene-based copolymer (a) at a mass ratio of (c)/(a) = 95/5 to 20/80 [(c) + (a) = 100] and a resin composition comprising the olefin-based resin (c) and a hydrogenated diene-based copolymer (d) at a mass ratio of (c)/(d) = 100/0 to 20/80 [(c) + (d) = 100], to form a surface layer made of the polymer composition on at least one side of a base material layer made of the resin composition.

A hydrogenated diene-based copolymer (a) which is obtained by hydrogenating a block copolymer containing at least two polymer blocks (A) composed mainly of a vinyl aromatic compound and at least one vinyl aromatic compound-conjugated diene compound copolymer block (B) and which satisfies the following conditions (1) to (3):

(1) a content of the total vinyl aromatic compound units in the hydrogenated diene-based copolymer is 20 to 70% by mass,

(2) a proportion (BS) of the content of the vinyl aromatic compound unit contained in the block (B), to the content of the total vinyl aromatic compound units in the hydrogenated diene-based copolymer is 10 to 80%, and

(3) a content of the vinyl configuration derived from the conjugated diene compound, in the hydrogenated diene-based copolymer is 30 to 75%.

[25] A medical resin composition comprising a hydrogenated diene-based copolymer set forth in any of the above [1] to [6] and a polyolefin type resin having a melting peak temperature of 100 to 200°C as measured by a differential scanning calorimetry (DSC).

[26] A medical resin composition according to the above [25], wherein the proportions of the hydrogenated diene-based copolymer (a) and the polyolefin type resin (e) are (a)/(e) = 90/10 to 10/90 [(a) + (e) = 100] in terms of mass ratio.

[27] A medical resin composition according to the above [25] or [26], wherein the polyolefin type resin is a polypropylene type resin.

[28] A medical shaped article made of a medical resin composition set forth in any of the above [25] to [27].

[29] A medical shaped article according to the above [28], which is a medical tube, a cathetel, a clysis bag, a blood bag, a bag for continuous ambulatory peritoneal dialysis (CAPD), or a drainage bag for continuous ambulatory peritoneal dialysis (CAPD).

Brief Description of the Drawings

Fig. 1 is a sectional view schematically showing an embodiment of the multilayered laminate of the present invention.

Fig. 2 is a sectional view schematically showing other embodiment of the multilayered laminate of the present invention.

Fig. 3 is a sectional view schematically showing still other embodiment of the multilayered laminate of the present invention.

Fig. 4 is a $^{1}$H-NMR spectrum (frequency: 270 MHz, region: 7.6 - 6.0 ppm) of a hydrogenated diene-based copolymer (H-2).

Best Mode for Carrying Out the Invention

1. Hydrogenated Diene-Based Copolymer

The best embodiment of the hydrogenated diene-based copolymer of the present invention is specifically described below.

Hydrogenated diene-based copolymer (a)

The hydrogenated diene-based copolymer of the present invention is a hydrogenated diene-based copolymer [hereinafter, also called component (a)] which is obtained by hydrogenating a block copolymer containing at least two polymer blocks (A) composed mainly of a vinyl aromatic compound and at least one vinyl aromatic compound-conjugated diene compound copolymer block (B) and which satisfies the following conditions (1) to (3):

(1) the content of the total vinyl aromatic compound units in the hydrogenated diene-based copolymer is 20 to 70% by mass,

(2) the proportion (BS) of the content of the vinyl aromatic compound unit contained in the block (B), to the content of the total vinyl aromatic compound units in the hydrogenated diene-based copolymer is 10 to 80%, or, the proportion (LS) of the content of the long-chain vinyl aromatic compound unit to the content of the total vinyl aromatic compound units in the hydrogenated diene-based copolymer is 10 to 80%, and

(3) the content of the vinyl configuration derived from the conjugated diene compound, in the hydrogenated diene-based copolymer is 30 to 75%.

Specifically, there can be mentioned, for example, hydrogenation products of block copolymers represented by the following structural formulas (1) to (3).

$(A-B)_m$ Structural formula (1)

$(A-B)_m$-Y Structural formula (2)

$A-(B-A)_n$ Structural formula (3)

{In the above structural formulas (1) to (3), "A" is a polymer block composed mainly of a vinyl aromatic compound [hereinafter, this block is also called "block (A)"] and may partially contain a conjugated diene compound as long as it is a polymer block composed substantially of the vinyl aromatic compound. The amount of the structural unit derived from the vinyl aromatic compound in the block (A) is ordinarily 80% by mass or more, preferably 90% by mass or more, more preferably 95% by mass or more, particularly preferably 99% by mass or more. "B" is a vinyl aromatic compound-conjugated diene compound copolymer block [hereinafter, this block is also called "block (B)"] and is preferably a vinyl aromatic compound-conjugated diene compound copolymer block containing the conjugated diene compound in an amount of 20% by mass or more. Y is a residue of a coupling agent; m is an integer of 2 to 5; and n is an integer of 1 to 5.}

Here, two or more "blocks (A)" in each of the block copolymers represented by the structural formulas (1) to (3) may be the same or different in composition, molecular weight, etc. Similarly, when two or more "blocks (B)" are contained in each block copolymer, the "blocks (B)" may be the same or different in composition, molecular weight, etc. Further, in each block copolymer, at least one polymer block [hereinafter, this polymer block is also called "block (C)"] other than the above polymer block or copolymer block, for example, a hydrogenated conjugated diene compound polymer may be contained at the terminal of or in the chain of the block copolymer.

Each block copolymer represented by the structural formulas (1) to (3) can be obtained, for example, by subjecting a vinyl aromatic compound and a conjugated diene compound, or a vinyl aromatic compound, a conjugated diene compound and other monomer copolymerizable therewith, to living anionic polymerization using an organic alkali metal compound as a polymerization initiator in an inert organic solvent such as aliphatic hydrocarbon solvent (e.g. pentane, hexane, heptane or octane), alicyclic hydrocarbon solvent (e.g. cyclopentane, methylcyclopentane, cyclohexane or methylcyclohexane), aromatic hydrocarbon solvent (e.g. benzene, xylene, toluene or ethylbenzene) or the like. By hydrogenating this block copolymer (hereinafter, also called "before-hydrogenation polymer"), the hydrogenated diene-based copolymer of the present invention can be obtained easily.

As the vinyl aromatic compound, there can be mentioned styrene, tert-butylstyrene, $\alpha$-methylstyrene, p-methylstyrene, p-ethylstyrene, divinylbenzene, 1,1-diphenylstyrene, vinylnaphthalene, vinylanthracene, N,N-diethyl-p-aminoethylstyrene, vinylpyridine, etc. Of these, styrene is preferred. As the conjugated diene compound, there can be mentioned, for example, 1,3-butadiene, isoprene, 2,3-dimethyl-1,3-butadiene, 1,3-pentadiene, 2-methyl-1,3-octadiene, 1,3-hexadiene, 1,3-cyclohexadiene, 4,5-diethyl-1,3-octadiene, 3-butyl-1,3-octadiene, myrcene and chloroprene. Of these, 1,3-butadiene and isoprene are preferred.

As the organic alkali metal compound, there can be mentioned organic lithium compound, organic sodium compound, etc. particularly preferred is an organic lithium compound such as n-butyllithium, sec-butyllithium, tert-butyllithium or the like. As to the use amount of the organic alkali metal compound, there is no particular restriction, and the compound can be used in various amounts as necessary. However, the compound is used ordinarily in an amount of 0.02 to 15% by mass per 100% by mass of the monomers, preferably in an amount of 0.03 to 5% by mass.

The polymerization temperature is generally -10 to 150°C, preferably 0 to 120°C. The atmosphere in the polymerization system is desired to be replaced by an inert gas such as nitrogen gas or the like. The polymerization pressure may be a level sufficient to allow the monomers and the solvent to be maintained in a liquid state in the above polymerization range, and there is no particular restriction.

In the process for producing the block copolymer containing a vinyl aromatic compound and a conjugated diene compound, there is no particular restriction as to the method for feeding these compound monomers into the polymerization system, and there can be used a one-time feeding method, a continuous feeding method, an intermittent feeding method, or a combination method thereof. Further, in the process for producing the block copolymer containing a vinyl aromatic compound and a conjugated diene compound, there can be appropriately selected the addition amount of other copolymerizable component, the addition amount of polar substance, the number and kind of reactor, and the above-mentioned monomer-feeding method so that the resulting hydrogenated diene copolymer, a composition thereof, a shaped article made of the composition, etc. can have desired properties.

The before-hydrogenation polymer may be a copolymer obtained by allowing a coupling agent to act on a block copolymer produced as above and bonding the block copolymer molecules via the residue of the coupling agent. As the coupling agent used, there can be mentioned, for example, divinylbenzene, 1,2,4-trivinylbenzene, epoxidized 1,2-polybutadiene, epoxidized soybean oil, epoxidized linseed oil, benzene-1,2,4-triisocyanate, diethyl oxalate, diethyl malonate, diethyl adipate, dioctyl adipate, dimethyl phthalate, diethyl phthalate, diethyl terephthalate, pyromellitic dianhydride, diethyl carbonate, 1,1,2,2-tetrachloroethane, 1,4-bis(trichloromethyl)benzene, trichlorosilane, methyltrichlorosilane, butyltrichlorosilane, tetrachlorosilane, (dichloromethyl)trichlorosilane, hexachlorosilane, tetraethoxysilane, tetrachlorotin and 1,3-dichloro-2-propanone. Of these, preferred are divinylbenzene, epoxidized 1,2-polybutadiene, trichlorosilane, methyltrichlorosilane and tetrachlorosilane.

The hydrogenated diene-based copolymer of the present invention is obtained by partially or selectively hydrogenating the block copolymer obtained as above. There is no particular restriction as to the method or conditions of hydrogenation. The hydrogenation is conducted ordinarily at 20 to 150°C at a hydrogen pressure of 0.1 to 10 MPa in the presence of a hydrogenation catalyst.

In this case, the hydrogenation ratio can be selected as desired, by changing the amount of hydrogenation catalyst used, the hydrogen pressure used in hydrogenation, the time of reaction, etc. As the hydrogenation catalyst, there can be ordinarily used a compound containing any of group Ib, IVb, Vb, VIb, VIIb and VIII metals of periodic table; for example, a compound containing a Ti, V, Co, Ni, Zr, Ru, Rh, Pd, Hf, Re or Pt atom. Specifically, there can be mentioned, for example, a metallocene type compound of Ti, Zr, Hf, Co, Ni, Pd, Pt, Ru, Rh, Re or the like; a loaded heterogeneous catalyst obtained by loading a metal such as Pd, Ni, Pt, Rh, Ru or the like on a carrier such as carbon, silica, alumina, diatomaceous earth or the like; a homogeneous Ziegler type catalyst which is a combination of an organic salt of metal (e.g. Ni or Co) and a reducing agent (e.g. organoaluminum); a organometal compound or complex of Ru, Rh or the like; and a fullerene or carbon nanotube having hydrogen occluded therein. Of these, a metallocene compound containing any of Ti, Zr, Hf, Co and Ni is preferred because it can give rise to hydrogenation in a homogeneous system in an inert organic solvent. A metallocene compound containing any of Ti, Zr and Hf is more preferred. A hydrogenation catalyst obtained by a reaction of a titanocene compound with an alkyllithium is particularly preferred because it is inexpensive and highly useful in industry. Incidentally, the hydrogenation catalyst may be used in one kind or in combination of two or more kinds. After the hydrogenation, the catalyst residue is removed as necessary or a phenol or amine type anti-oxidant is added, after which the hydrogenated diene-based copolymer of the present invention is isolated from the hydrogenated diene-based copolymer solution. The isolation of the hydrogenated diene-based copolymer can be carried out, for example, by a method of adding acetone, an alcohol or the like to the hydrogenated diene-based copolymer solution to give rise to precipitation or a method of pouring the hydrogenated diene-based copolymer solution into hot water with stirring to distil and remove the solvent contained in the solution.

The content of the total vinyl aromatic compound units in the hydrogenated diene-based copolymer (hereinafter, the content is also called "the content of total vinyl aromatic compound units") is 20 to 70% by mass, preferably 25 to 65% by mass. When the content of total vinyl aromatic compound units is more than 70% by mass, the later-described film or sheet, tube, multilayered laminate and shaped article (including medical shaped article), all obtained by using the hydrogenated diene-based copolymer, tend to be hard and insufficient in flexibility. When the content of total vinyl aromatic compound units is less than 20% by mass, the film or sheet, tube, multilayered laminate and shaped article (including medical shaped article), all obtained by using the hydrogenated diene-based copolymer, tend to be low in mechanical strength as well as in fretting resistance, breakage resistance, strength and breaking-through resistance.

The proportion (BS) of the content of the vinyl aromatic compound unit in the block (B), to the content of the total vinyl aromatic compound units in the hydrogenated diene-based copolymer of the present invention [hereinafter, the proportion (BS) is also called "BS proportion"] is 10 to 80%, preferably 25 to 75%, more preferably 30 to 70%. When the BS proportion is less than 10%, the soft film or sheet, tube, multilayered laminate and shaped article (including medical shaped article), all obtained by using the hydrogenated diene-based copolymer, tend to be low in mechanical strength and insufficient in fretting resistance, breakage resistance and strength. When the BS proportion is more than 80%, the soft film or sheet, tube, multilayered laminate and shaped article (including medical shaped article), all obtained by using the hydrogenated diene-based copolymer, tend to be insufficient in flexibility.

Incidentally, the BS proportion is determined from the amount of the vinyl aromatic compound fed in polymerization, using the following expression.

$$BS \text{ proportion } (\%) =$$

$$[\text{the total fed amount of the vinyl aromatic compound}$$

$$\text{contained in the block (B) of the hydrogenated diene-based}$$

$$\text{copolymer/the total fed amount of the total vinyl aromatic}$$

$$\text{compound contained in the hydrogenated diene-based copolymer}]$$

$$\times 100$$

Also, in the hydrogenated diene-based copolymer of the present invention, the proportion (LS) of the content of the long-chain vinyl aromatic compound unit to the content of the total vinyl aromatic compound units in the hydrogenated diene-based copolymer [hereinafter, the proportion (LS) is also called "LS proportion"] is 10 to 80%, preferably 20 to 70%, more preferably 30 to 50%. When the LS proportion is less than 10%, the soft film or sheet, tube, multilayered laminate and shaped article (including medical shaped article), all obtained by using the hydrogenated diene-based copolymer, tend to be low in mechanical strength and insufficient in flexibility. When the LS proportion is more than 80%, the soft film or sheet, tube, multilayered laminate and shaped article (including medical shaped article), all obtained by using the hydrogenated diene-based copolymer, tend to be low in flexibility and insufficient in fretting resistance, breakage resistance and breaking-through resistance.

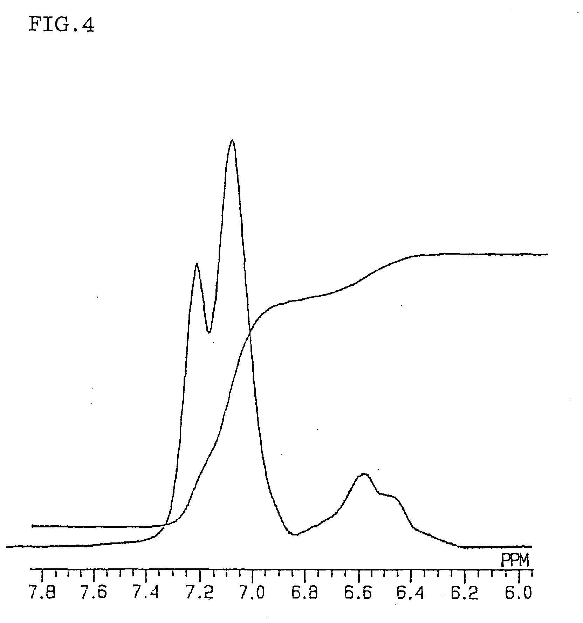

Here, explanation is made on the "LS proportion" used in the present invention. It is generally understood that in the $^1$H-NMR spectrum of styrene-butadiene copolymer, the chemical shift of the phenyl proton of styrene shows two peaks at around 7 ppm and around 6.5 ppm and the peak at around 6.5 ppm is the ortho-position phenyl proton of styrene forming a long chain (Bovey et al., J. Polym. Sci. Vol. 138, 1959, pp. 73 to 90). Hence, in the present invention, in the $^1$H-NMR spectrum (Fig. 4) of 7.6 to 6.0 ppm region, of the hydrogenated diene-based copolymer (H-2) produced in accordance with Production Example 1 (described later), the peak at around 6.5 ppm at a high magnetic field side is regarded as "long-chain vinyl aromatic compound"; the areal intensity of the 7.6 to 6.0 ppm portion measured by $^1$H-NMR of 270 MHz is taken as "the content of total vinyl aromatic compound units"; the areal intensity of the 6.8 to 6.0 ppm portion is taken as "the content of long-chain vinyl aromatic compound unit"; and the LS proportion is determined using the following expression.

$$LS\ proportion\ (\%) =$$

$$[(areal\ intensity\ of\ 6.8\ to\ 6.0\ ppm\ portion\ x\ 2.5)/(areal$$

$$intensity\ of\ 7.6\ to\ 6.0\ ppm\ portion)] \times 100$$

In the hydrogenated diene-based copolymer of the present invention, the before-hydrogenation content of vinyl configurations (1,2- and 3,4-vinyl configurations) derived from the conjugated diene compound is 30 to 75%, preferably 40 to 75%, more preferably 50 to 75%, most preferably 60 to 75%. When the content is less than 30%, the soft film or sheet, tube, multilayered laminate and shaped article (including medical shaped article), all obtained by using the hydrogenated diene-based copolymer, tend to be hard and insufficient in flexibility. Meanwhile, when the vinyl configurations content is more than 75%, the soft film or sheet, tube, multilayered laminate and shaped article (including medical shaped article), all obtained by using the hydrogenated diene-based copolymer, tend to be low in heat resistance and mechanical strength and may be very small in production speed; therefore, such a content is not preferred.

In the hydrogenated diene-based copolymer of the present invention, it is preferred that 90% or more, particularly 95% or more of the double bonds derived from the conjugated diene compound is hydrogenated. When the hydrogenation ratio is less than 90%, the soft film or sheet, tube, multilayered laminate and shaped article (including medical shaped article), all obtained by using the hydrogenated diene-based copolymer, tend to be low in weather resistance as well as in heat resistance and strength. Incidentally, the double bonds derived from the conjugated diene compound include 1,2- and 3,4-vinyl configurations as side chain double bonds and a 1,4-configuration as main chain double bond. It is preferred that, of these configurations, at least the 1,2- and 3,4- vinyl configurations are hydrogenated by 90% or more.

The melt flow rate of the present hydrogenated diene-based copolymer as measured at 230°C at a load of 21.2 N (hereinafter, this melt flow is also called simply "MFR") differs depending upon the application of the copolymer and, when the copolymer is used in powder molding, is preferably 10 to 200 g/10 min, more preferably 15 to 100 g/10 min, particularly preferably 20 to 100 g/10 min. When the MFR is less than 10 g/10 min, it tends to be difficult to obtain a fine powder and the shaped article obtained tends to be inferior in appearance. Meanwhile, when the MFR is more than 200 g/10 min, the shaped article obtained tends to be inferior in heat resistance, weather resistance and mechanical strength.

When the hydrogenated diene-based copolymer of the present invention is used in extrusion molding, the MFR thereof is preferably 0.01 to 100 g/10 min, more preferably 0.05 to 50 g/10 min, particularly preferably 0.05 to 15 g/10 min. A MFR smaller than 0.01 g/10 min is not preferred because the load required during extrusion molding is too large and the extrudate (shaped article) may have a rough surface. A MFR larger than 100 g/10 min is not preferred because there may be a problem of extrusion moldability in draw-down, etc. When the hydrogenated diene-based copolymer of the present invention is used in injection molding, the MFR thereof is preferably 0.1 to 200 g/10min, more preferably 0.1 to 100 g/10 min, particularly preferably 0.1 to 50 g/10 min. A MFR smaller than 0.01 g/10 min is not preferred because the injection-molded material may have inferior appearance. Meanwhile, a MFR larger than 200 g/10 min is not preferred because the molded material obtained may have a low mechanical strength.

Meanwhile, when the hydrogenated diene-based copolymer of the present invention is used in foaming applications, the MFR thereof differs depending upon the method of molding or processing thereof. When there is used a processing machine for rubber, such as Banbury mixer, pressure kneader, twin open rolls or the like, the MFR of the copolymer is preferably 0.01 to 100 g/10 min, more preferably 0.05 to 50 g/10 min, particularly preferably 0.05 to 15 g/10 min. A MFR smaller than 0.01 g/10 min is not preferred because, for example, the load required during polymer blending may be too large. Meanwhile, a MFR larger than 100 g/10 min is not preferred because there may be problems in processing, such as releasability from processing machine, stickiness and the like.

The melt viscosity at 230°C at 0.1 Hz, of the hydrogenated diene-based copolymer of the present invention is preferred to be 2,000 Pa·s or less and, when the copolymer is used in powder molding, 10 to 1,500 Pa·s.

The weight-average molecular weight (Mw) of the hydrogenated diene-based copolymer of the present invention is preferably 50,000 to 700,000, more preferably 80,000 to 350,000 in order to obtain a soft film or sheet, a tube, a multilayered laminate and a shaped article (including medical shaped article), all superior in appearance, strength and productivity. When the Mw is less than 50,000, it may be difficult to form bubbles when inflation is used and, when T-die extrusion is used, drawdown may be striking; in each case, productivity tends to be low and the shaped article may have stickiness and be insufficient in heat resistance and weather resistance. When the Mw is more than 400,000, the copolymer is inferior in fluidity; therefore, it may be difficult to obtain a shaped article having sufficient appearance and mechanical strength and, moreover, no sufficient extrusion speed may be obtainable, resulting in low productivity.

The glass transition temperature (Tg) of the hydrogenated diene-based copolymer of the present invention has influences on the heat resistance and low-temperature resistance thereof, in some cases. The hydrogenated diene-based copolymer has at least two Tgs. When the highest Tg is expressed as Tg (A) and the lowest Tg is expressed as Tg (B), the Tg (A) is 80 to 110°C, preferably 90 to 110°C and the Tg (B) is -60 to 10°C, preferably -55 to 5°C when the copolymer is used as a composition used for applications including powder slush. When low-temperature resistance is required for the copolymer, the Tg (B) is desirably -55 to -30°C and, when vibration-damping property is required for the copolymer, the Tg (B) is desired to be closer to the temperature range in which the vibration-damping property is required.

Incidentally, the hydrogenated diene-based copolymer of the present invention may be used as a modified hydrogenated diene-based copolymer by introducing, to the former copolymer, a functional group such as amino group, alkoxysilyl group, hydroxyl group, acid anhydride group, epoxy group or the like. As such a modified hydrogenated diene-based copolymer, there can be mentioned, for example, the following copolymers (1) to (6).

(1) A copolymer obtained by copolymerizing a vinyl aromatic compound and a conjugated diene compound in the presence of an organic alkali metal compound containing amino group and hydrogenating the resulting copolymer.

(2) A copolymer obtained by copolymerizing a vinyl aromatic compound, a conjugated diene compound and an unsaturated monomer having amino group in the presence of an organic alkali metal compound and hydrogenating the resulting copolymer.

(3) A copolymer obtained by copolymerizing a vinyl aromatic compound and a conjugated diene compound in the presence of an organic alkali metal compound, reacting the resulting copolymer with an alkoxysilane compound at the active site of the copolymer, and hydrogenating the resulting copolymer.

(4) A copolymer obtained by copolymerizing a vinyl aromatic compound and a conjugated diene compound in the presence of an organic alkali metal compound, reacting the resulting copolymer with an epoxy compound or a ketone compound at the active site of the copolymer, and hydrogenating the resulting copolymer.

(5) A copolymer obtained by copolymerizing a vinyl aromatic compound and a conjugated diene compound in the presence of an organic alkali metal compound and reacting the resulting copolymer with at least one member selected from a (meth)acryloyl group-containing compound, an epoxy group-containing compound and maleic anhydride in a solution or in a kneader such as extruder or the like.

(6) A copolymer obtained by copolymerizing a vinyl aromatic compound and a conjugated diene compound in the presence of an organic alkali metal compound and introducing, into the center of the molecular chain of the resulting copolymer, a functional group such as -OH group, -NH-CO- group, -NH- group, $-NH_2$ group or the like by using a coupling agent such as epoxidized 1,2-polybutadiene, epoxidized soybean oil, epoxidized linseed oil, benzene-1,2,4-triisocyanate, diethyl oxalate, diethyl malonate, diethyl adipate, dioctyl adipate, dimethyl phthalate, diethyl phthalate, diethyl terephthalate, pyromellitic dianhydride or the like.

Ordinarily, the proportion of the functional group in the modified hydrogenated diene-based copolymer is preferably 0.001 to 10 mole %, more preferably 0.005 to 8 mole %, particularly preferably 0.01 to 5 mole % relative to the molecule constituting the hydrogenated diene-based copolymer (a).

To the hydrogenated diene-based copolymer of the present invention can be added conventional additives such as anti-oxidant, thermal stabilizer, ultraviolet absorber, lubricant, coloring agent, flame-retardant and the like. The hydrogenated diene-based copolymer of the present inventor is used per se or as a resin modifier, and is useful in shaped articles such as automotive part, electrical or electronic part, film, sheet and the like.

Meanwhile, by being blended with a thermoplastic polymer, particularly an olefin-based polymer, the hydrogenated diene-based copolymer of the present invention can provide a shaped article highly flexible and superior in mechanical properties, appearance, mar resistance, weather resistance, heat resistance and low-temperature resistance, and is useful in applications of film, sheet and interior automotive trim. In-depth description is made below. Thermoplastic polymer (b)

The hydrogenated diene-based copolymer [(the component a)] of the present invention can be used as a composition (hereinafter, also called "the polymer composition of the present invention") by being blended with a thermoplastic polymer [hereinafter, also called "the component (b)"]. The proportions of the component (a) and the component (b) to be blended therewith are (a)/(b) = 99/1 to 1/99, preferably 3/97 to 97/3, in terms of mass ratio. The optimum blending ratio differs depending upon the application of the composition. However, the modification effect by the hydrogenated diene-based copolymer [the component (a)] of the present invention may not be achieved when the addition of the component (a) is less than 1% by mass.

Here, the component (b) (the thermoplastic polymer) contained in the polymer composition of the present invention excludes the component (a) (the hydrogenated diene-based copolymer) and may be any of a non-polar polymer and a polar polymer. As the non-polar polymer, there can be mentioned an olefin-based polymer (described later), a styrene-based polymer, etc. As examples of the styrene-based polymer, there can be mentioned styrene homopolymer (PS), impact-resistant polystyrene (HIPS), ethylene-styrene copolymer (ESI), acrylonitrile-styrene copolymer (AS), acrylonitrile-butadiene-styrene copolymer (ABS), acrylonitrile-ethylene/propylene rubber-styrene copolymer (AES), acrylonitrile-chlorinated polystyrene-styrene copolymer (ACS), styrene-methyl methacrylate copolymer (MS), butadiene-styrene-methyl methacrylate copolymer (MBS) and styrenemaleic anhydride copolymer (SMA).

As the polar polymer, there can be mentioned acrylic polymer, etc. As examples of the acrylic polymer, there can be mentioned poly[methyl (meth)acrylate], poly[ethyl (meth)acrylate, poly[butyl (meth)acrylate], poly[2-ethylhexyl (meth)acrylate] and poly[cyclohexyl (meth)acrylate]. Other than these acrylic polymers, there can be mentioned aromatic polycarbonate, polymethacrylonitrile, polyacetal, polyoxymethylene, ionomer, chlorinated polyethylene, coumarone-indene resin, regenerated cellulose, petroleum resin, cellulose derivative, alkali cellulose, cellulose ester, cellulose acetate, cellulose acetate butyrate, cellulose xanthate, cellulose nitrate, cellulose ether, carboxymethyl cellulose, cellulose ether ester, fluoroplastic, FEP, polychlorotrifluoroethylene, polytetrafluoroethylene, polyvinylidene fluoride, polyvinyl fluoride, aliphatic polyamides (e.g. nylon 11, nylon 12, nylon6, nylon 6,10, nylon 6,12, nylon 6,6 and nylon 4,6), aromatic polyamides (e.g. polyphenylene isophthalamide, polyphenylene terephthalamide and metaxylylenediamine), polyimide, polyphenylene ether, polyphenylene sulfide, polyether ether ketone, polyamide imide, polyarylate, polyvinylidene chloride, polyvinyl chloride, chlorinated polyethylene, chlorosulfonated polyethylene, polysulfone, polyether sulfone, polysulfonamide, polyvinyl alcohol, polyvinyl ester, polyisobutyl vinyl ether, polymethyl vinyl ether, polyphenylene oxide and aromatic polyesters (e.g. polyethylene terephthalate and polybutylene terephthalate). Of these, preferred thermoplastic polymers are the following olefin-based polymers.

As examples of the olefin-based polymer, there can be mentioned polyethylene, polypropylene, poly (1-butene), ethylene-$\alpha$-olefin-(non-conjugated diene) copolymers [e.g. propylene-ethylene copolymer, propylene-1-butene copolymer, propylene-ethylene-1-butene copolymer, ethylene-1-hexene copolymer, ethylene-1-octene copolymer, ethylene-propylene copolymer (EPM), ethylene-propylene-non-conjugated diene copolymer (EPDM), ethylene-1-butene copolymer (EBM) and ethylene-1-butene-non-conjugated diene copolymer (EBDM)], polar group-containing ethylene-$\alpha$-olefin copolymer, metal-crosslinked product thereof, ethylene-vinyl acetate copolymer, ethylene-ethyl acrylate copolymer, ethylene-ethyl methacrylate copolymer, ethylene-methyl acrylate copolymer, ethylene-methyl methacrylate copolymer and ethylene-butyl acrylate copolymer. These polymers can be used in one kind or in combination of two or more kinds. Of these, polyethylene and polypropylene are preferred, and polypropylene is particularly preferred because the composition obtained has excellent heat resistance.

When used as a powder for powder molding (described later) or as a raw material for extrusion molding, there are preferred, of the above-mentioned olefin-based polymers, propylene-based polymers such as propylene homopolymer, random copolymer of propylene and other $\alpha$-olefin (the content of $\alpha$-olefin = 20 mole % or less), block copolymer of propylene and other $\alpha$-olefin (the content of $\alpha$-olefin = 30 mole % or less) and the like. It is particularly preferred to use a copolymer between polypropylene and/or propylene and ethylene, which has a crystallinity of 50% or more, a density of 0.89 g/cm$^3$ or more, an ethylene unit content of 20 mole % or less and a melting point of 100°C or more. For such applications, there may also be used a blend with an olefin-based rubber such as ethylene-propylene copolymer (EPM), ethylene-propylene-non-conjugated diene copolymer (EPDM), ethylene-1-butene copolymer (EBM), ethylene-1-butene-non-conjugated diene copolymer (EBDM), polar group-containing ethylene-$\alpha$-olefin copolymer, metal-crosslinked material thereof or the like, and a thermoplastic elastomer obtained by subjecting such a blend to dynamic crosslinking in the presence of a crosslinking agent.

The MFR at 230°C at a load of 21.2 N, of the thermoplastic polymer [component (b)] contained in the polymer composition of the present invention differs depending upon the application of the polymer composition. When the polymer composition is used in powder molding, the MFR of the component (b) is preferably 10 to 500 g/10 min, more preferably 15 to 500 g/10 min, particularly preferably 20 to 500 g/10 min. When the polymer composition is used in extrusion molding, the MFR of the component (b) is preferably 0.01 to 100 g/10 min, more preferably 0.01 to 50 g/10 min, particularly preferably 0.05 to 15 g/10 min. When the polymer composition is used in injection molding, the MFR of the component (b) is preferably 1 to 500 g/10 min, more preferably 5 to 500 g/10 min, particularly preferably 10 to 500 g/10 min.

The polymer composition of the present invention may be used by adding thereto various additives as necessary. The additives include heat stabilizer (e.g. phenol type, sulfite type, phenylalkane type, phosphite type, amine type or amide type), weathering agent, metal deactivator, ultraviolet absorber, anti-static agent, light stabilizer, copper-harm inhibitor, antimicrobial and antifungal agent, antibacterial agent, dispersing agent, mineral oil type softening agent, plasticizer, lubricant, foaming agent, foaming aid, titanium oxide, pigment, metal (e.g. ferrite) powder, inorganic fiber (e.g. glass fiber or metal fiber), organic fiber (e.g. carbon fiber or aramid fiber), composite fiber, inorganic whiskers (e. g. potassium titanate whiskers), filler (e.g. glass beads, glass balloon, glass flake, asbestos, mica, calcium carbonate, talc, silica, calcium silicate, hydrotalcite, kaolin, diatomaceous earth, graphite, pumice, ebonite powder, cotton flock, cork powder, barium sulfate, fluoroplastic or polymer beads), mixture thereof, filler (e.g. polyolefin wax, cellulose powder or rubber powder), low-molecular weight polymer, etc.

By adding, as a lubricant, silicone oil silicone rubber, fatty acid amide or fluoroplastic to the polymer composition of the present invention, the shaped article obtained is further improved in mar resistance. Further, the present polymer composition can be subjected as necessary to crosslinking such as sulfur crosslinking, peroxide crosslinking, metal ion crosslinking, silane crosslinking, resin crosslinking or the like, according to a conventional known method.

The polymer composition of the present invention can be obtained, for example, by a method of melt-kneading the component (a) and the component (b). In the kneading, there can be used a single screw extruder, a double screw extruder, a kneader, rolls, etc. Incidentally, the compounding of the above-mentioned various additives and various polymers can be conducted, for example, by using a mixture of the component (a) and the component (b), already containing the additives or by adding the additives at the time of kneading of the components (a) and (b).

By using the polymer composition of the present invention, a shaped article of desired shape can be produced according to a known method such as injection molding, two-color injection molding, extrusion molding, rotational molding, press molding, hollow molding, sandwich molding, compression molding, vacuum molding, powder (powder slush) molding, double flash molding, laminating, calendering, blow molding or the like. As necessary, the shaped article may be subjected to processing such as foaming, stretching, adhesion, printing, coating, plating or the like. Incidentally, when the present polymer composition is used in extrusion molding, there can be applied various extrusion moldings such as profile extrusion, sheet extrusion, multi-layer extrusion and the like.

The molding temperature when the present polymer composition is subjected to melt molding such as extrusion molding, injection molding or the like, is appropriately set depending upon the melting points of the polymer composition and additives used, the kind of the molding machine used, etc. However, the molding temperature is ordinarily 120 to 350°C. The shaped article produced from the polymer composition of the present invention by a known molding method using an extruder, an injection molding machine or the like can be used per se or by being combined with other material (for example, the shaped material is used as a surface layer of a multilayered laminate). As the method for producing a multilayered laminate in which the surface layer is the polymer composition of the present invention, there can be mentioned known methods, for example, (a) a method of producing a base material layer and a surface layer in the form of film or sheet according to an ordinary manner using a T-die or the like and then heat-sealing them, (b) a method of direct lamination using an extruder, (c) a method of laminating, on at least one side of the base material layer or surface layer beforehand produced, for example, by the method (a), other layer by extrusion, and (d) a method of direct lamination using an injection molding machine.

In using the above method (b) of direct lamination using an extruder, a surface layer may be produced by extruding the polymer composition of the present invention on a beforehand-produced base material layer; however, it is also possible to connect two or more extruders to one die, feed a material for base material layer into one of the extruder and feed the polymer composition of the present invention into the other extruder, and operate the extruders simultaneously to produce, inside the die, a base material layer (lower layer) and a surface layer simultaneously. Such a method is described in, for example, JP-A-2001-10418.

Also, in using the method (d) of direct lamination using an injection molding machine, it is possible to place a beforehand-produced base material in a mold and inject therein the polymer composition of the present invention to produce a surface layer; however, it is also possible to use two injection molding machines and one mold, feed the polymer composition of the present invention into one of the injection molding machines and feed a material for base material layer into the other injection molding machine, operate the two injection molding machines continuously to produce, in the mold, a base material layer and a surface layer continuously.

When powder (powder slush) molding is conducted, the powder used can be produced by a method of subjecting the polymer composition of the present invention to mechanical grinding, a strand-cutting method or a die face cutting method. As the mechanical grinding method, there can be mentioned, for example, a method of freeze-grinding or normal-temperature grinding using, for example, a grinder such as turbo-mill, roller mill, ball mill, pin mill, hammer mill, centrifugal grinder or the like.

The strand-cutting method for powder production is a method of extruding a molten polymer composition from a die into air or water to form strands and cooling and cutting the strands. The outlet diameter of the die is ordinarily 0.1 to 3 mm, preferably 0.2 to 2 mm. The discharge speed of the polymer composition per one die outlet is ordinarily 0.1 to 5 kg/hr, preferably 0.5 to 3 kg/hr. The take-off speed of strands is ordinarily 1 to 100 m/min, preferably 5 to 50 m/min. The cooled strands are cut into a length of ordinarily 1.2 mm or less, preferably 0.1 to 1.0 mm.

The die face cutting method for powder production is a method of extruding a molten polymer composition from a die into water and simultaneously conducting cutting. The outlet diameter of the die is ordinarily 0.1 to 3 mm, preferably 0.2 to 2 mm. The discharge speed of the polymer composition per one die outlet is ordinarily 0.1 to 5 kg/hr, preferably 0.5 to 3 kg/hr. The temperature of water is ordinarily 30 to 70°C, preferably 40 to 60°C.

By subjecting the polymer composition to the mechanical grinding method, there can be easily obtained a powder suitable for powder molding, having a bulk specific gravity of 0.38 or more, preferably 0.40 or more and 0.70 or less and a sphere-reduced average particle diameter of 1.2 mm or less, preferably 0.1 to 0.7 mm. Here, the sphere-reduced average particle diameter of powder is defined as a diameter of a sphere having the same volume as the average volume of the powder particles. Incidentally, the average volume (V) of powder particles is defined by a relational expression (V = W/D) between the total mass (W) of randomly taken-out 100 powder particles, the density (D) of polymer composition, and the average volume (V). The bulk specific gravity of powder is defined and measured according to JIS K 6721.

The powder can be applied to various powder molding methods such as powder molding, dip coating, electrostatic coating, powder spraying, powder rotational molding and the like. In order to improve the fluidity of the powder, there may be added thereto known fluidity-improving fine particles such as inorganic particles (e.g. silica or alumina), polymer fine particles (e.g. polypropylene powder) and the like. For example, when the powder molding method is conducted, a powder is fed into a stainless steel-made square container fitted to a mono-axial rotary powder molding machine with a mono-axial rotary handle; then, to the top of this container is fitted an electroforming mold of predetermined shape, beforehand heated at 180 to 300°C, preferably at 200 to 280°C; the mono-axial rotary handle is rotated to simultaneously rotate the container and the electroforming mold to the left and the right several times; then, the electroforming mold is struck with a wooden hammer or the like several times to brush the excessive powder; then, the electroforming mold is separated from the container, melted in a heating oven of 250 to 450°C, preferably 300 to 430°C for 5 to 60 seconds, preferably 10 to 30 seconds, and water-cooled; thereby, the shaped article formed can be taken out from the electroforming mold.

The shaped article obtained by such a powder molding method is free from inconveniences such as cut-out or pinhole and superior in mechanical properties, heat resistance, emboss transferability and mar resistance and, therefore, is suitably used in interior automotive trims such as instrument panel, handle, curtain air bag, ceiling, door and seat.

Next, description is made on the composition for foamed material and the foamed material made of the composition, both of the present invention. The foamed material of the present invention is obtained by foaming a composition for foamed material (a composition for foamed material, of the present invention) comprising at least the above-described hydrogenated diene-based copolymer and a foaming agent. That is, the foamed material of the present invention is obtained by foaming a composition for foamed material, comprising a hydrogenated diene-based copolymer per se superior in processability, flexibility and mechanical properties, according to an appropriate molding method such as foam molding method (described later) or the like. Therefore, the present foamed material is superior not only in the above-mentioned properties possessed by the hydrogenated diene-based copolymer but also in vibration-damping property. Accordingly, the foamed material of the present invention is particularly suitable as various cushioning materials, for example, an impact-absorbing foamed material for sole and an impact-absorbing foamed material for insole, both required to be superior in vibration-damping property.

Next, description is made on examples of the production of the foamed material of the present invention. In order to produce the foamed material of the present invention, a foaming agent as an essential component is added to the hydrogenated diene-based copolymer of the present invention and, further, a crosslinking agent such as peroxide or the like is added as necessary. Components other than these may be added as necessary. Also, a thermoplastic polymer other than the hydrogenated diene-based copolymer may preferably be added. As the thermoplastic polymer, there can be mentioned those similar to the above-mentioned component (b) (thermoplastic polymer) contained in the polymer composition of the present invention.

Ordinarily, in compounding of a polymer, an oil, a filler, etc., a Banbury mixer, a kneader, or an extruder can be used and, in adding a crosslinking agent and a foaming agent, open twin-rolls are used suitably. The compound obtained is filled into a predetermined mold; a crosslinking reaction is allowed to proceed at a predetermined temperature for a given period of time using a hot press and simultaneously the foaming agent contained in the compound is decomposed; then, the mold contents are left open in the atmospheric pressure, whereby the hydrogenated diene-based copolymer can be foamed by the pressure of the gas generated from decomposition of the foaming agent. Other than this, injection foaming or extrusion foaming can be employed by selecting the kinds and amounts of the foaming agent, etc. used, the conditions of processing, etc.

An inorganic filler can be used in the composition for foamed material, of the present invention. This inorganic filler can function also as a nucleating agent for foaming, in foaming the composition for foamed material, of the present invention. As such an inorganic filler, there can be mentioned, for example, glass fiber, glass beads, potassium titanate, talc, mica, barium sulfate, carbon black, silica, carbon-silica dual-phase filler, clay, calcium carbonate and magnesium carbonate. The amount of the inorganic filler used is ordinarily 200 parts by mass or less, preferably 100 parts by mass or less relative to 100 parts by mass of the total amount of the hydrogenated diene-based copolymer of the present invention and other thermoplastic resin used as necessary. An amount of more than 200 parts by mass is not preferred because the foamed material obtained may be impaired in strength. Of the above inorganic fillers, preferred are calcium carbonate, silica and carbon black.

A softening agent can be used in the composition for foamed material, of the present invention. The softening agent can function also as a melt viscosity-controlling agent, in foaming the composition for foamed material, of the present invention. As to the softening agent, there is no particular restriction as long as it is an extender oil or a softening agent, both used ordinarily in the hydrogenated diene-based copolymer. A mineral oil type extender oil can be mentioned as a preferred example.

The mineral oil type extender oil used has a viscosity gravity constant (hereinafter, abbreviated as V.G.C.) of preferably 0.790 to 0.999, more preferably 0.790 to 0.949, particularly preferably 0.790 to 0.912. As the extender oil, there are generally known an aromatic extender oil, a naphthenic extender oil, and a paraffinic extender oil.

As the aromatic extender oil satisfying the above viscosity gravity constant, there can be mentioned, for example, Diana Process Oil AC-12, Diana Process Oil Ac 460, Diana Process Oil AH-16 and Diana Process Oil AH-58 (all are trade names) produced by Idemitsu Kosan; Mobilsol K, Mobilsol 22 and Mobilsol 130 (all are trade names) produced by Exxon Mobil; Kyoseki Process X 50, Kyoseki Process X 100 and Kyoseki Process X 140 (all are trade names) produced by Nikko Kyoseki; Resox No.3 and Duterex 729 UK (all are trade names) produced by Shell Kagaku; Komorex 200, Komorex 300, Komorex 500 and Komorex 700 (all are trade names) produced by Shinnihon Sekiyu (formerly, Nihon Sekiyu); ESSO Process Oil 110 and ESSO process Oil 120 (all are trade names) produced by Exxon Mobil; and Mitsubishi 34 Heavy Process Oil, Mitsubishi 44 Heavy Process Oil, Mitsubishi 38 Heavy Process Oil and Mitsubishi 39 Heavy Process Oil (all are trade names) produced by Shin Nihon Sekiyu (formerly, Mitsubishi Sekiyu).

As the naphthenic extender oil satisfying the above viscosity gravity constant, there can be mentioned, for example, Diana Process Oil NS-24, Diana Process Oil NS-100, Diana Process Oil NM-26, Diana Process Oil NM-280 and Diana Process Oil NP-24 (all are trade names) produced by Idemitsu Kosan; Naprex 38 (trade name) produced by Exxon Mobil; Fukkol FLEX # 1060 N, Fukkol FLEX # 1150 N, Fukkol FLEX # 1400 N, Fukkol FLEX # 2040 N and Fukkol FLEX # 2050 N (all are trade names) produced by Fuji Kosan; Kyoseki Process R 25, Kyoseki Process R 50, Kyoseki Process R 200 and Kyoseki Process R 1000 (all are trade names) produced by Nikko Kyoseki; Shell Flex 371 JY, Shell Flex 371 N, Shell Flex 451, Shell Flex N-40, Shell Flex 22, Shell Flex 22 R, Shell Flex 32 R, Shell Flex 100 R, Shell Flex 100 S, Shell Flex 100 SA, Shell Flex 220 RS, Shell Flex 220 S, Shell Flex 260, Shell Flex 320 R and Shell Flex 680 (all are trade names) produced by Shell Kagaku; Komorex No. 2 Process Oil (trade name) produced by Shin Nihon Sekiyu (formerly, Nihon Sekiyu); ESSO Process Oil L-2 and ESSO Process Oil 765 (all are trade names) produced by Exxon Mobil; and Mitsubishi 20 Light Process Oil (trade name) produced by Shin Nihon Sekiyu (formerly, Mitsubishi Sekiyu).

As the paraffinic extender oil satisfying the above viscosity gravity constant, there can be mentioned, for example, Diana Process Oil PW-90, Diana Process Oil PW-380, Diana Process Oil PS-32, Diana Process Oil PS-90 and Diana Process Oil PS-430 (all are trade names) produced by Idemitsu Kosan; Fukkol Process P-100, Fukkol Process P-200, Fukkol Process P-300, Fukkol Process P-400 and Fukkol Process P-500 (all are trade names) produced by Fiji Kosan; Kyoseki Process P-200, Kyoseki Process P-300, Kyoseki Process P-500, Kyoseki EPT 750, Kyoseki EPT 1000 and Kyoseki Process S 90 (all are trade names) produced by Nikko Kyoseki; Lubrex 26, Lubrex 100 and Lubrex 460 (all are trade names) produced by Shell kagaku; ESSO Process Oil 815, ESSO Process Oil 845, ESSO Process Oil B-1 and Naprex 32 (all are trade names) produced by Exxon Mobil; and Mitsubishi 10 Light Process Oil (trade name) produced by Shin Nihon Sekiyu (formerly, Mitsubishi Sekiyu).

The amount of the softening agent used is 100 parts by mass or less, preferably 50 parts by mass or less relative to 100 parts by mass of the total of the hydrogenated diene-based copolymer and other thermoplastic resin used as necessary. An amount of more than 100 parts by mass is not preferred because the foamed material obtained may be impaired in strength.

In the composition for foamed material, of the present invention, there may be used, as necessary, various other additives such as bitumen, flame retardant, anti-oxidant, lubricant, coloring agent, ultraviolet absorber, thermal stabilizer, age-resist agent, processing aid, light (weather)-resist agent, antibacterial agent and the like, as long as the purpose of the composition is not impaired.

As the bitumen which can be used in the composition for foamed material, of the present invention, there can be mentioned straight asphalt used extensively in automotive vibration-damping material, blown asphalt, and a compound which is a blend of such asphalt with an inorganic substance. As the flame retardant, there can be mentioned a halogen-based flame retardant, a phosphorus-based flame retardant and an inorganic flame retardant. A phosphorus-based flame retardant and an inorganic flame retardant, both free from hydrogen are preferred in view of a dioxin problem.

The phosphorus-based flame retardant can be exemplified by triphenyl phosphate, tricresyl phosphate, trixylenyl phosphate, cresyl diphenyl phosphate, xylenyl diphenyl phosphate, resorcinol-bis(diphenyl phosphate), 2-ethylhexyl diphenyl phosphate, dimethyl methyl phosphate, triallyl phosphate, a condensation product thereof, ammonium phosphate, a condensation product thereof and diethyl N,N-bis(2-hydroxyethyl)aminomethyl phosphate. The inorganic flame retardant can be exemplified by magnesium hydroxide, aluminum hydroxide, zinc borate, barium borate, kaolin clay, calcium carbonate, alumstone, basic magnesium carbonate and calcium hydroxide. Incidentally, the flame retardant includes a flame retardation aid which is per se low in flame retardation effect but, when used in combination with other flame retardant, exhibits an excellent synergistic effect.

As the lubricant which can be used in the composition for foamed material, of the present invention, there can be mentioned, for example, paraffinic type, hydrocarbon resin, metal soap, fatty acid, fatty acid amide, fatty acid ester and aliphatic metal salt, which are all used generally in order to impart molding stability. As the foaming agent, there can be used an inorganic or organic foaming agent which is known per se. As specific examples of the inorganic foaming agent, there can be mentioned sodium bicarbonate, ammonium bicarbonate, sodium carbonate and ammonium carbonate. As specific examples of the organic foaming agent, there can be mentioned azodicarbonamide, dinitrosopentamethylenetetramine, dinitrosoterephthalamide, azobisisobutyronitrile, barium azodicarboxylate and sulfonyl hydrazide (e.g. toluenesulfonyl hydrazide). Of these, organic foaming agents (e.g. azodicarbonamide) are preferred for their large expansion ratios. These foaming agents may be used in combination with a known foaming aid such as urea, urea derivative or the like.

The amount of the foaming agent used is 1 to 50 parts by mass, preferably 2 to 30 parts by mass relative to 100 parts by mass of the total of the hydrogenated diene-based copolymer and the thermoplastic resin added as necessary. When the amount of foaming agent used is less than 1 part by mass, only a foamed material low in expansion ratio is obtained. Meanwhile, when the amount is more than 50 parts by mass, the amount of the gas generated by the decomposition of the foaming agent is large and the gas pressure becomes abnormally high, which may allow the product obtained to have cracks.

As the crosslinking agent, there can be mentioned at least one member selected from the group consisting of sulfur, a compound generating sulfur when heated, an organic peroxide, a polyfunctional monomer and a silanol compound. In the crosslinking, there can also be used a combination of a polyfunctional monomer and electron beam application, or a combination of a photosensitizer and electron beam application.

As the sulfur, there can be used powder sulfur, precipitated sulfur, colloidal sulfur, surface-treated sulfur, etc. As the compound generating sulfur when heated, there can be used tetramethylthiuram disulfide (TMTD), tetraethylthiuram disulfide (TEYD), dipentamethylenethiuram tetrasulfide (DPTT), etc. As the curing accelerator used in combination with the sulfur or the compound generating sulfur when heated, there can be mentioned, for example, tetramethylthiuram disulfide (TMTD), N-oxydiethylene-2-benzothiazolylsulfenamide (OBS), N-cyclohexyl-2-benzothiazylsulfenamide (CBS), dibenzothiazyl disulfide (MBTS), 2-mercaptobenzothiazole (MBT), zinc di-n-butyldithiocarbamate (ZnBDC) and zinc dimethyldithiocarbamate (ZnMDC).

As the organic peroxide used for crosslinking, there can be used dicumyl peroxide, di-tert-butyl peroxy-3,3,5-trimethyl cyclohexane, $\alpha,\alpha'$-di-tert-butyl peroxy-di-p-diisopropyl benzene, n-butyl-4,4-bis-tert-butyl peroxyvalerate, tert-butyl peroxybenzoate, tert-butyl peroxyisopropyl carbonate, 2,5-dimethyl-2,5-di(tert-butylperoxy) hexane, etc. In the crosslinking by organic peroxide, a polyfunctional monomer, etc. may also be added. Specific examples of the polyfunctional monomer are trimethylolpropane trimethacrylate, ethylene glycol dimethacrylate, triallyl isocyanate and diallyl phthalate. In this case, the molar ratio of the organic peroxide/the polyfunctional monomer is ordinarily 1/1 to 1/50, preferably 1/2 to 1/40.

The amount of the crosslinking agent component used is 0.001 to 50 parts by mass, preferably 0.01 to 20 parts by mass in terms of the mass of, for example, sulfur or compound (e.g. organic peroxide), relative to 100 parts by mass of the total of the hydrogenated diene-based copolymer and the other thermoplastic resin added as necessary. With an amount of less than 0.001 part by mass, crosslinking is insufficient and no foamed material sufficient in dynamic strength may be obtained. Meanwhile, with an amount of more than 50 parts by mass, crosslinking is excessive and no required expansion ratio may be obtained.

2. Soft Film or Sheet

Next, the embodiment of the soft film or sheet of the present invention is described specifically. In the present specification, when simply "the soft film or sheet of the present invention" is mentioned, it indicates both of the first soft film or sheet and the second film or sheet. Also in the present specification, the "film" means a filmy shaped article having a thickness of 10 to 200 μm, and the "sheet" means a filmy shaped article having a thickness of more than 200μm to 20 mm or less.

The first soft film or sheet of the present invention is made of any of the above-mentioned hydrogenated diene-based copolymers and is superior in strength, fretting resistance and breakage resistance. The second soft film or sheet of the present invention is made of a polymer composition comprising any of the above-mentioned hydrogenated diene-based copolymers (a) and the above-mentioned thermoplastic polymer (b) other than the hydrogenated diene-based copolymers (a) at a mass ratio of (a)/(b) = 99/1 to 1/99 [(a) + (b) = 100], and is superior in strength, fretting resistance and breakage resistance.

The thermoplastic polymer (b) contained in the polymer composition constituting the second soft film or sheet of the present invention is preferably an olefin-based polymer, particularly preferably a polyethylene or a polypropylene. Use of a propylene-based polymer, particularly a polyproylene as the thermoplastic polymer (b) is preferred because the second soft film or sheet obtained has a higher balance in heat resistance, processability and strength.

When a polypropylene is used as the thermoplastic polymer (b), the mass ratio of the hydrogenated diene-based copolymer (a) and the thermoplastic polymer (b) (polypropylene) is preferably (a)/(b) = 95/5 to 5/95, more preferably (a)/(b) = 50/50 to 10/90. By selecting the value of (a)/(b) in this range, there can be obtained a soft film or sheet superior not only in properties but also in productivity and economy.

The MFR at 230°C at a load of 21.2 N, of the thermoplastic polymer (b) contained in the polymer composition constituting the second soft film or sheet of the present invention is preferably 0.01 to 100 g/10 min, more preferably 0.01 to 50 g/10 min, particularly preferably 0.05 to 15 g/10 min, in view of the extrudability, etc.

When the soft film or sheet of the present invention is produced by a molding method such as T-die extrusion, inflation, calendering or the like, the MFR at 230°C at a load of 21.2 N, of the hydrogenated diene-based copolymer (a) is preferably 0.1 to 100 g/10 min, more preferably 1.0 to 50 g/10 min, particularly preferably 2.0 to 30 g/10 min. With a MFR of less than 0.1 g/10 min, no sufficient extrusion speed is obtained, which may result in low productivity. Meanwhile, with a MFR of more than 100 g/10 min, formation of bubbles may be difficult when inflation molding is employed and, when T-die extrusion is employed, draw-down may be striking; in any case, productivity tends to be low. Incidentally, the hydrogenated diene-based copolymer (a) may be replaced by or used in combination with the above-mentioned modified hydrogenated diene-based copolymer.

In the soft film or sheet of the present invention can be used as necessary additives used in ordinary thermoplastic materials. There can be used, for example, plasticizer or reinforcing agent (e.g. phthalic acid ester), filler for rubber (e.g. paraffinic oil), filler (e.g. silica, talc or calcium carbonate), anti-oxidant, ultraviolet absorber, anti-static agent, lubricant, antibacterial agent, flame retardant, foaming agent, coloring agent, pigment, carbon fiber, metal fiber, glass beads, crosslinking agent, crosslinking aid and mixture thereof.

As a component constituting the soft film or sheet of the present invention, there may be used a thermoplastic material or a rubbery polymer, both other than the above-mentioned hydrogenated diene-based copolymer (a). Specifically, there can be used polybutene; polymethylpentene (e.g. poly-4-methyl-1-pentene); hydrogenated terpene resin; petroleum resin; polyisobutylene; polystyrene; polyalkyl acrylate (e.g. polymethyl acrylate or polyethyl acrylate); polyalkyl methacrylate (e.g. polymethyl methacrylate or polyethyl methacrylate); polybutadiene and/or hydrogenation product thereof; styrene-butadiene copolymer, styrene-isoprene copolymer, butadiene-isoprene copolymer and/or hydrogenation product thereof; ethylene-vinyl acetate copolymer; ethylene-vinyl alcohol copolymer; ethylene-acrylic acid copolymer; ethylene-methacrylic acid copolymer; ethylene-methyl acrylate copolymer; ethylene-methyl methacrylate copolymer; ethylene-ethyl acrylate copolymer; acrylic rubber; ethylene-based ionomer; etc. It is also possible to use a thermosetting polymer such as epoxy resin, phenolic resin, silicone resin or the like as long as the use amount thereof does not impair the properties of the soft film or sheet of the present invention.

The soft film or sheet of the present invention can be easily produced by a conventional known molding method such as T-die extrusion, inflation, calendering or the like. The soft film or sheet of the present invention can be subjected to stretching. For stretching, there can be employed a known mono-axial stretching method such as roll stretching, rolling, tenter transverse mono-axial stretching or the like, or a known bi-axial stretching method such as tenter bi-axial stretching, tubular bi-axial stretching or the like. The stretching temperature when stretching is conducted, is preferably normal temperature to the melting point of polypropylene. The stretching ratio is preferably 2 to 10-fold. The stretching ratios in MD (machine direction parallel to the direction of take-off) and in TD (transverse direction normal to the direction of take-off) need not be balanced and can be selected desirably depending upon the applications.

The soft film or sheet of the present invention is superior in transparency, flexibility, impact resistance and heat-sealing property. Therefore, it can be used suitably in extensive applications, that is, packaging of clothes such as shirt, stocking and the like; packaging of bedding such as futon, pillow and the like; packaging of various foods; packaging of daily sundries; packaging of industrial materials; lamination of rubber product, resin product, leather product, etc.; stretching tape used in paper diaper, etc.; industrial material such as dicing film or the like; protective film used in protection of building material or steel plate; base material for pressure-adhesive film; sheet application such as tray for edible meat or fresh fish, pack for vegetable or fruit, container for cold cake, or the like; household electric appliance application such as TV, stereo, electric cleaner or the like; interior or exterior automotive trim such as bumper part, body panel, side seal or the like; material for road pavement; water-proof or water-shielding sheet; packing for civil engineering; sundry; leisure goods; toy; industrial material; furniture; film or sheet for stationery such as writing material, transparent pocket, holder, file backbone or the like; medical device; and so forth.

3. Tube

Next, the embodiment of the tube of the present invention is described specifically. In the present specification, the "tube" includes a hose which contain various reinforcing materials at the surface or inside or whose surface has been subjected a surface-roughening (uneven) treatment or the like.

The tube of the present invention is made of a polymer composition comprising any of the above-mentioned hydrogenated diene-based copolymers (a) and the above-mentioned thermoplastic polymer (b) other than the hydrogenated diene-based copolymers (a) at a mass ratio of (a)/(b) = 99/1 to 50/50 [(a) + (b) = 100], preferably 90/10 to 55/45, more preferably 85/15 to 60/40. By using a polymer composition wherein a given proportion of the thermoplastic polymer (b) has been added to the hydrogenated diene-based copolymer (a), the present tube is superior in kinking and fretting resistance, has a good balance between strength and hardness, and is improved in heat resistance, processability, and strength. Further, since the present tube need not contain, as a plasticizer, for example, a chemical substance which may cause hormone disruption, the tube can be used safely and suitably even in applications which come in contact with foods and drinks.

The thermoplastic polymer (b) contained in the polymer composition constituting the tube of the present invention is preferred to be an olefin-based polymer, and a polyethylene or a polypropylene is more preferred. A polypropylene is particularly preferred because a composition superior in heat resistance can be obtained. By using a polypropylene as the thermoplastic polymer (b), the tube obtained is more improved in balance of heat resistance, processability and strength.

When a polypropylene is used as the thermoplastic polymer (b), the mass ratio of the hydrogenated diene-based copolymer (a) and the thermoplastic polymer (b) (polypropylene) is preferably (a)/(b) = 95/10 to 55/45, more preferably (a)/(b) = 85/15 to 60/40. By selecting the value of (a)/(b) in this range, there can be obtained a tube superior not only in properties but also in productivity and economy.

The MFR at 230°C at a load of 21.2 N, of the thermoplastic polymer (b) contained in the polymer composition constituting the tube of the present invention is preferably 0.01 to 100 g/10 min, more preferably 0.01 to 50 g/10 min, particularly preferably 0.05 to 15 g/10 min, in view of the extrudability, etc.

When the tube of the present invention is produced , for example, by extrusion molding, the MFR at 230°C at a load of 21.2 N, of the hydrogenated diene-based copolymer is preferably 0.1 to 100 g/10 min, more preferably 1.0 to 30 g/10 min, particularly preferably 2.0 to 20 g/10 min. With a MFR of less than 0.1 g/10 min, no sufficient extrusion speed is obtained, which may result in low productivity. Meanwhile, with a MFR of more than 100 g/10 min, draw-down may be striking, which tends to result in low productivity. Incidentally, the hydrogenated diene-based copolymer (a) may be replaced by or used in combination with the above-mentioned modified hydrogenated diene-based copolymer.

In the tube of the present invention can be used as necessary additives used in ordinary thermoplastic materials. There can be added, for example, plasticizer or reinforcing agent (e.g. phthalic acid ester), filler for rubber (e. g. paraffinic oil), filler (e.g. silica, talc or calcium carbonate), anti-oxidant, ultraviolet absorber, anti-static agent, lubricant, antibacterial agent, flame retardant, foaming agent, coloring agent, pigment, carbon fiber, metal fiber, glass beads, crosslinking agent, crosslinking aid and mixture thereof.

As a component constituting the tube of the present invention, there may be used a thermoplastic material or a rubbery polymer, both other than the above-mentioned hydrogenated diene-based copolymer (a). Specifically, there can be used polybutene; polymethylpentene (e.g. poly-4-methyl-1-pentene); hydrogenated terpene resin; petroleum resin; polyisobutylene; polystyrene; polyalkyl acrylate (e.g. polymethyl acrylate or polyethyl acrylate); polyalkyl methacrylate (e.g. polymethyl methacrylate or polyethyl methacrylate); polybutadiene and/or hydrogenation product thereof; styrene-butadiene copolymer, styrene-isoprene copolymer, butadiene-isoprene copolymer and/or hydrogenation product thereof; ethylene-vinyl acetate copolymer; ethylene-vinyl alcohol copolymer; ethylene-acrylic acid copolymer; ethylene-methacrylic acid copolymer; ethylene-methyl acrylate copolymer; ethylene-methyl methacrylate copolymer; ethylene-ethyl acrylate copolymer; acrylic rubber; ethylene-based ionomer; etc. It is also possible to use a thermosetting polymer such as epoxy resin, phenolic resin, silicone resin or the like as long as the addition amount thereof does not impair the properties of the tube of the present invention.

Next, the process for producing the tube of the present invention is described. First, the hydrogenated diene-based copolymer and the thermoplastic polymer are mixed at given proportions in order to obtain a polymer composition constituting the tube of the present invention. The mixing can be carried out using an appropriate mixer such as Banbury mixer, roll mill, extruder or the like. Melt kneading in extruder is preferred and melt kneading in double screw extruder is preferred particularly. By using a polymer composition or resin composition obtained by melt kneading in double screw extruder, there can be obtained a tube small in number of fish eyes and superior in appearance. Incidentally, the polymer composition obtained by melt kneading using a double screw extruder can ordinarily be pelletized and then used. The polymer composition is molded into a tubular or cylindrical form by a conventional known method such as extrusion or the like, whereby the tube of the present invention can be produced easily.

The tube of the present invention can be suitably used in extensive applications such as part for vehicle, part for light electrical appliance, part for household electrical appliance, industrial part and the like. Particularly for the properties of good balance of strength and hardness, superiority in kinking and fretting resistance, and no pollution of substance coming in contact, by hormone-disruptive substance, the tube of the present invention can be suitably used, for example, as a member for handling of foods and drinks, a part for vehicle, a part used for production of electronic parts, or a member for resin or rubber transfer.

As the member for handling of foods and drinks, there can be mentioned, for example, a tube used for transfer of cup drink in vending machine; a hose or tube used for transfer of raw material, intermediate or product in foods and drinks industry; a drain tube; and a drain hose. In order to enhance the smoothness and chemical resistance of the inner surface of the tube, the inner surface may preferably be coated with a thermoplastic resin such as polyethylene or the like, in an appropriate thickness. Also, a tape-like metal foil or synthetic resin may be preferably laminated on the outer surface of the tube, for further enhancement of the strength of the tube as well as for shielding of exterior odor.

As the part for vehicle, there can be mentioned, for example, a weather strip, a sealing member and a drain tube for washing liquid. As the member for resin or rubber transfer, there can be mentioned, for example, a hose for pneumatic transfer of resin or rubber pellets. It is also preferred that, for improved balance between strength and flexibility, the present hose is produced as an embossed hose comprising a thermoplastic resin composition of polyethylene, polypropylene or the like as a reinforcing agent, or as an embossed hose comprising a filler (e.g. talc)-added polyethylene or polypropylene composition as a reinforcing agent. Incidentally, as the process for producing an embossed hose, there can be mentioned processes described in JP-B-1984-30534, JP-A-1991-75111 and JP-A-1993-50525.

4. Multilayered Laminate

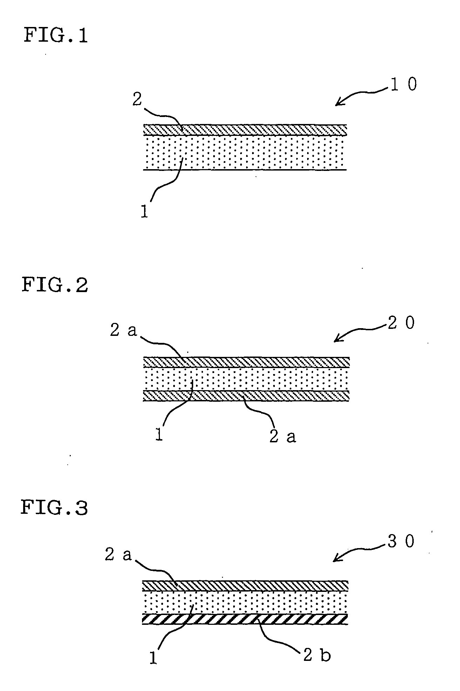

Next, the embodiment of the multilayered laminate of the present invention is described specifically. Fig. 1 is a sectional view schematically showing an embodiment of the multilayered laminate of the present invention. A multilayered laminate 10 of the present embodiment comprises a base material layer 1 and a surface layer 2 provided on one side of the base material layer 1. As described in detail below, the surface layer 2 is made of a polymer composition comprising an olefin-based resin (c) and any of the above-mentioned hydrogenated diene-based copolymers (a) at given proportions.

Also, as shown in Fig. 2, a multilayered laminate 20 of the present embodiment may comprise a base material layer 1 and surface layers 2 provided on both sides of the base material layer 1. Further, as in a multilayered laminate 30 of the present embodiment shown in Fig. 3, surface layers 2a and 2b different in composition may be provided on both sides of a base material layer 1. Incidentally, the material of the base material layer 1, etc. is described later.

In the first multilayered laminate of the present invention, the surface layer which is a constituent element thereof, is made of a polymer composition comprising an olefin-based resin (c) and any of the above-described hydrogenated diene-based copolymer (a) at a mass ratio of (c)/(a) = 95/5 to 20/80 [(c) + (a) = 100], preferably 95/5 to 50/50. Using a polymer composition wherein a given proportion of the olefin-based resin (c) is added to the hydrogenated diene-based copolymer (a), the multilayered laminate of the present invention is superior in fretting resistance, breaking-through resistance and flexibility. Further, having no necessity of containing, as a plasticizer, for example, a chemical substance which may cause hormone disruption, the present multilayered laminate can safely and suitably be used in applications which come in contact with foods and drinks.

When the multilayered laminate of the present invention is produced by a molding method such as T-die extrusion, inflation, calendering or the like, the MFR at 230°C at a load of 21.2 N, of the hydrogenated diene-based copolymer (a) is preferably 0.1 to 100 g/10 min, more preferably 1.0 to 50 g/10 min, particularly preferably 2.0 to 30 g/10 min. With a MFR of less than 0.1 g/10 min, no sufficient extrusion speed is obtained, which may result in low productivity. Meanwhile, with a MFR of more than 100 g/10 min, formation of bubbles may be difficult when inflation molding is employed and, when T-die extrusion is employed, draw-down may be striking; in any case, productivity tends to be low. Incidentally, the hydrogenated diene-based copolymer (a) may be replaced by or used in combination with the above-mentioned modified hydrogenated diene-based copolymer.

The olefin-based resin (c) is a resin obtained by polymerizing at least one kind of mono-olefin by a high-pressure or low-pressure method, and is preferably a polyethylene, a polypropylene, a polybutene-1 or a poly(4-methylpentene-1), more preferably a polypropylene. The olefin-based resin (c) may be a homopolymer or a copolymer shown below, obtained by copolymerizing a mono-olefin and other monomer. When the olefin-based resin (c) is a copolymer, preferred examples of the other monomer (component to be copolymerized) constituting the copolymer are a straight-chain α-olefin such as ethylene (a case is excluded wherein the main polymer is a polyethylene), propylene (a case is excluded wherein the main polymer is a polypropylene), butene-1 (a case is excluded wherein the main polymer is a polybutene-1), pentene-1, hexene-1, heptene-1, octene-1 or the like; a branched-chain α-olefin such as 4-methylpentene-1 (a case is excluded wherein the main polymer is 4-methylpentene-1), 2-methylpropene-1, 3-methylpentene-1, 5-methylhexene-1, 4-methylhexene-1, 4,4-dimethylpentene-1 or the like; a monocarboxylic acid such as acrylic acid, methacrylic acid or the like; a dicarboxylic acid such as maleic acid, fumaric acid or the like, or a mono-ester thereof; an acrylic acid or methacrylic acid ester such as methyl methacrylate, methyl acrylate, ethyl acrylate or the like; a vinyl ester of a saturated carboxylic acid, such as vinyl acetate or the like; an aromatic vinyl compound such as styrene, α-methylstyrene or the like; an acid anhydride such as maleic anhydride or the like; an α,β-unsaturated nitrile such as acrylonitrile or the like; a diene monomer such as dicyclopentadiene, ethylidenenorbornene or the like; and acrylamide and methacrylamide.

Of the above-mentioned copolymerizable monomers, those more preferred for producing a polypropylene copolymer are straight-chain α-olefins such as ethylene, butene-1, pentene-1, hexene-1, heptene-1, octene-1 and the like and those particularly preferred are ethylene and butene-1. These copolymerizable monomers may be used singly or in combination of two or more kinds. The amount of the copolymerizable monomers used is preferably 20% by mass or less, more preferably 10% by mass or less relative to the total of the copolymers. There is no particular restriction as to the type of the copolymer, and the copolymer may be any of, for example, a random type, a block type, a graft type and a mixed type thereof. However, when the copolymer is a polypropylene type polymer, there are preferred a propylene homopolymer or a random copolymer of propylene and one of the above-mentioned monomers.

By using, as the olefin-based resin (c), a propylene homopolymer or a propylene random copolymer, there can be formed a surface layer superior in fretting resistance, breaking-through resistance and flexibility as well as in balance of strength and hardness. The olefin-based resin (c) may be used in one kind or in combination of two or more kinds. As to the MFR at 230°C at a load of 21.2 N, of the olefin-based resin (c), there is no particular restriction as long as the resin (c) can be molded into a film-shaped or sheet-shaped surface layer. However, the MFR is preferably 0.5 to 15 g/10 min, more preferably 1 to 10 g/10 min when the resin (c) is a polypropylene type resin. By setting the MFR in the above range, there can be obtained a surface layer superior in moldability, etc. and a multilayered laminate comprising the surface layer.

The base material layer which is a constituent element of the multilayered laminate of the present invention, can be constituted by various materials. As preferred specific examples of such materials, there can be mentioned paper, metal foil, polyolefin, styrene-based resin, ethylene-based elastomer, and resin [e.g. "hydrogenated diene-based copolymer (a)" mentioned in this specification]. However, the base material layer is preferably made of a resin composition comprising the olefin-based rein (c) and a particular hydrogenated diene-based copolymer (d) at a mass ratio of (c)/(d) = 100/0 to 20/80, more preferably made of a resin composition comprising them at a mass ratio of (c)/(d) = 80/20 to 30/70, particularly preferably made of a resin composition comprising them at a mass ratio of (c)/(d) = 70/30 to 40/60, because, with a base material layer made of such a resin composition, there can be produced a multilayered laminate superior in fretting resistance, breaking-through resistance and flexibility and there can be used the process (multi-layer extrusion) for producing the multilayered laminate of the present invention. As the olefin-based resin (c) contained in the resin composition constituting the base material layer, there can be used the same olefin-based resin (c) as contained in the polymer composition constituting the surface layer. As the hydrogenated diene-based copolymer (d) also contained in the resin composition constituting the base material layer, there can be mentioned a hydrogenated diene-based copolymer wherein the hydrogenation ratio of the double bonds of conjugated diene portions thereof is 80% or more, preferably 90% or more, more preferably 95% or more and which has a number-average molecular weight of 50,000 to 700,000, preferably 100,000 to 600,000. When the hydrogenation ratio is less than 80%, the hydrogenated diene-based copolymer tends to be low in transparency, mechanical strength, heat resistance and weather resistance. When the number-average molecular weight is less than 50,000, the hydrogenated diene-based copolymer tends to show blocking when pelletized and, when blended with other resin or the like, tends to be inferior in mechanical strength and appearance of shaped material. Meanwhile, when the number-average molecular weight is more than 700,000, the hydrogenated diene-based copolymer tends to be low in processability.

As the hydrogenated diene-based copolymer (d), there can be mentioned hydrogenation products of diene-based polymers such as conjugated diene homopolymer, conjugated diene-vinyl aromatic compound random copolymer, block copolymer composed of a vinyl aromatic compound polymer block and conjugated diene polymer block, block copolymer composed of a vinyl aromatic compound polymer block and a vinyl aromatic compound/conjugated diene copolymer block and the like; and functional group-modified products thereof. These hydrogenated diene-based copolymers (d) can be produced, for example, by a process disclosed in JP-A-1991-72512.

There can also be used a modification product obtained by introducing at least one kind of functional group into the above-mentioned hydrogenated diene-based copolymer (d). As the functional group introduced, there can be mentioned, for example, carboxyl group, acid anhydride group, hydroxyl group, epoxy group, amino group, ammonium salt group, halogen atom-containing group, sulfonic group, and groups derived from these functional groups (e.g. ester group). These functional groups are introduced before or after the hydrogenation of hydrogenated diene-based copolymer (d) depending upon the kind of the functional group. As the hydrogenated diene-based copolymer (d) contained in the resin composition constituting the base material layer, there can also be used the above-mentioned hydrogenated diene-based copolymer (a) contained in the polymer composition constituting the surface layer.

In the surface layer of the multilayered laminate of the present invention can be used as necessary additives used in ordinary thermoplastic materials. There can be used, for example, plasticizer or reinforcing agent (e.g. phthalic acid ester), filler for rubber (e.g. paraffinic oil), filler, anti-static agent, lubricant, flame retardant, foaming agent, pigment, carbon fiber, metal fiber, glass beads, crosslinking agent, crosslinking aid, and mixture thereof.

As a component constituting the surface layer of the multilayered laminate of the present invention, there may be used a thermoplastic material or a rubbery polymer, both other than the above-mentioned hydrogenated diene-based copolymer (a). Specifically, there may be used polybutene; polymethylpentene (e.g. poly-4-methyl-1-pentene); hydrogenated terpene resin; petroleum resin; polyisobutylene; polystyrene; polyalkyl acrylate (e.g. polymethyl acrylate or polyethyl acrylate); polyalkyl methacrylate (e.g. polymethyl methacrylate or polyethyl methacrylate); polybutadiene and/or hydrogenation product thereof; styrene-butadiene copolymer, styrene-isoprene copolymer, butadiene-isoprene copolymer and/or hydrogenation product thereof; ethylene-vinyl acetate copolymer; ethylene-vinyl alcohol copolymer; ethylene-acrylic acid copolymer; ethylene-methacrylic acid copolymer; ethylene-methyl acrylate copolymer; ethylene-methyl methacrylate copolymer; ethylene-ethyl acrylate copolymer; acrylic rubber; ethylene-based ionomer; etc. It is also possible to use a thermosetting polymer such as epoxy resin, phenolic resin, silicone resin or the like as long as the use amount thereof does not impair the properties of the surface layer of the multilayered laminate of the present invention.

In the multilayered laminate of the present invention, the polymer composition constituting the surface layer and the resin composition of the base material layer when the base material layer is made of the resin composition, may contain as necessary an olefin-based (co)polymer such as ethylene-propylene copolymer (EPM), ethylene-butene-1 copolymer (EBM), ethylene-propylene-non-conjugated diene copolymer (EPDM), polybutene-1, polyethylene or the like, or a resin such as ionomer, ethylene-vinyl acetate copolymer (EVA), polyvinyl alcohol (PVA), ethylene-vinyl alcohol copolymer (EVOH) or the like, as long as the properties of the multilayered laminate of the present invention are not substantially impaired. The polymer composition and/or the resin composition may contain as necessary additives used in ordinary thermoplastic materials, as long as the properties of the multilayered laminate of the present invention are not substantially impaired. As such additives, there can be mentioned, for example, plasticizer or reinforcing agent (e.g. phthalic acid ester), filler for rubber (e.g. paraffinic oil), filler, anti-static agent, lubricant, flame retardant, foaming agent, pigment, carbon fiber, metal fiber, glass beads, crosslinking agent, crosslinking aid, anti-blocking agent, organic antibacterial agent, inorganic antibacterial agent, anti-oxidant, anti-fogging agent, coloring agent, ultraviolet absorber and mixture thereof.

Preferred examples of the anti-blocking agent are silica and zeolite, and the anti-blocking agent may be any of natural and synthetic products. As the anti-static agent, there are preferred a N,N-bis-(2-hydroxyethyl)-alkylamine having an alkyl group of 12 to 18 carbon atoms, and a glycerine-fatty acid ester. As the lubricant, a fatty acid amide is preferred and, as specific examples thereof, there can be mentioned erucic acid amide [Neutron S (trade name) produced by Nihon Seika Co.], behenic acid amide, stearic acid amide and oleic acid amide.

Next, the process for producing the multilayered laminate of the present invention is described. First, In order to obtain a polymer composition constituting the surface layer of the multilayered laminate of the present invention, an olefin-based resin (c) and a hydrogenated diene-based copolymer (a) are mixed at given proportions. In order to obtain a resin composition when the base material layer is made of this resin composition, an olefin-based resin (c) and a hydrogenated diene-based copolymer (d) are mixed at given proportions. These mixings can be conducted using an appropriate mixer such as Banbury mixer, roll mill, extruder or the like; however, melt kneading in extruder is preferred and melt kneading in double screw extruder is particularly preferred. By using a polymer composition and a resin composition, both obtained by melt kneading in double screw extruder, a multilayered laminate can be obtained which is small in number of fish eyes in the surface layer or the base material layer and superior in appearance. Incidentally, the polymer composition and the resin composition, both obtained by melt kneading in double screw extruder can ordinarily be pelletized and then used.

When the base material layer of the multilayered laminate of the present invention is made of a material other than a resin composition, specifically, a paper, a metal foil, a foamed film, a foamed sheet or the like, the multilayered laminate can be produced, for example, by producing a film-shaped or sheet-shaped surface layer from a polymer composition obtained by melt kneading or the like, according to a conventional known method such as inflation, T-die extrusion, calendering or the like, and then thermo-laminating the surface layer on the base material layer. The multilayered laminate can also be produced by extrusion-laminating the surface layer on the base material layer.

Meanwhile, when the base material layer of the multilayered laminate of the present invention is made of a resin composition, the multilayered laminate can be produced by subjecting a polymer composition and a resin composition, both obtained by melt kneading or the like, to co-extrusion and laminating a surface layer made of the polymer composition, on at least one side of a base material layer made of the resin composition. By using co-extrusion to laminate a surface layer on a base material layer, the multilayered laminate of the present invention can be produced easily with good production efficiency.

In conducting co-extrusion, a molding machine of co-extrusion type, specifically an inflation machine or a T-die extruder can be used suitably. The T-die of the T-die extruder may be any of multi-manifold type and feed block type. Incidentally, the multilayered laminate of the present invention can be produced also by methods other than co-extrusion, for example, (a) a method of producing a base material layer and a surface layer in a film shape or a sheet shape according to an ordinary molding method such as inflation, T-die extrusion or the like and then subjecting the two layers to thermo-laminating, and (b) a method of forming, on a base material layer or surface layer produced beforehand by the method (a), other layer by extrusion lamination.

As the method for co-extrusion, there can be employed a two layer co-extrusion method shown in Fig. 1, of laminating a surface layer 2 on one side of a base material layer 1; a three layer co-extrusion method shown in Fig. 2 or 3, of laminating surface layers 2a and 2b on two sides of a base material layer 1; and a four or more layer co-extrusion method. Lamination of surface layers 2a and 2b on a base material layer 1, shown in Fig. 2 or 3 is preferred in view of, for example, the balance of flexibility vs. anti-blocking property, fretting resistance and breaking-through resistance. The multilayered laminate of the present invention may be used by lamination of two or more of the present multilayered laminates, depending upon the application. The multilayered laminate of the present invention may also be used by lamination, for example, on a cloth of cotton, polyester or the like, or on a paper.

The thickness of the multilayered laminate of the present invention can be appropriately selected depending upon the properties required therefor or the application thereof. However, the thickness is preferably 10 μm or more, more preferably 20 μm or more in view of the moldability, retention of strength, etc. of the laminate. As to the upper limit of the thickness, there is no particular restriction, but the upper limit is sufficient if it is about 20 mm or less. Incidentally, the proportions of the thicknesses of the base material layer and surface layer of the multilayered laminate of the present invention can be appropriately selected depending upon the properties required for the laminate and the application thereof; however, the proportions are preferably base material layer/surface layer = 1/1 to 20/1, more preferably base material layer/surface layer = 1/1 to 8/1.

The multilayered laminate of the present invention is superior in fretting resistance, breaking-through resistance and flexibility. Accordingly, it can be suitably used in extensive applications such as material for apparel (e.g. poncho or raincoat), material for packaging (e.g. film for apparel packaging, film for stationery packaging, or film for medical packaging), and film or sheet (e.g. book cover, film for formation of electronic circuit substrate, dicing film, bag for medical waste, stationery, transcription film for medical hygiene material, surface-protecting film, cosmetic film, table cloth, desk mat, cutting sheet, or skin material for interior automotive trim).

5. Medical Resin Composition

Next, the embodiment of the medical resin composition of the present invention is described specifically. The medical resin composition of the present invention comprises any of the above-mentioned hydrogenated diene-based copolymers (a) and a polyolefin type resin (e) having a melting peak temperature of 100 to 200°C as measured by a differential scanning calorimetry (DSC). By mixing a particular polyolefin type resin (e) into the hydrogenated diene-based copolymer (a), there can be obtained a medical shaped article superior in fretting resistance and breaking-through resistance and subjectable to high-temperature steam sterilization. Further, the medical resin composition of the present invention need not contain, as a plasticizer, for example, a chemical substance which may cause hormone disruption; therefore, the present medical resin composition is particularly referred as a material constituting a medical shaped article which requires high safety, etc. Incidentally, the melting peak temperature of the polyolefin type resin (e) as measured by DSC is preferably 110 to 180°C, more preferably 130 to 170°C, in order to obtain a medical shaped article superior in fretting resistance and capable of sufficiently withstanding high-temperature steam sterilization.

As the polyolefin type resin (e), there can be mentioned polyethylene type resin, polypropylene type resin, polybutene resin, methylpentene resin, etc. As the polyethylene type resin, there can be mentioned, for example, low-density polyethylene, intermediate-density polyethylene, high-density polyethylene, linear low-density polyethylene, ethylene-propylene copolymer, ethylene-(meth)acrylic acid copolymer, ethylene-(meth)acrylic acid ester copolymer and ethylene-vinyl acetate copolymer. As the polypropylene type resin, there can be mentioned, for example, homopolypropylene, block polypropylene, random polypropylene, propylene-α-olefin copolymer, propylene-ethylene copolymer, propylene-butene copolymer and propylene-ethylene-butene copolymer. In the present invention, of these polyolefin type resins, a polypropylene type resin is particularly preferred because it can give a medical shaped article capable of better withstanding high-temperature steam sterilization.

In the medical resin composition of the present invention, the proportions of the hydrogenated diene-based copolymer (a) and the polyolefin type resin (e) are (a)/(e) = 90/10 to 10/90 [(a) + (e) = 100] in terms of mass ratio, more preferably (a)/(e) = 85/15 to 40/60, particularly preferably (a)/(e) = 85/15 to 50/50. When the proportion of the hydrogenated diene-based copolymer (a) is more than 90% by mass, the medical shaped article obtained tends to be insufficient in heat resistance. Meanwhile, when the proportion of the hydrogenated diene-based copolymer (a) is less than 10% by mass, the medical shaped article obtained tends to be insufficient in flexibility.

The MFR at 230°C at a load of 21.2 N, of the polyolefin type resin (e) contained in the medical resin composition of the present invention is preferably 0.01 to 100g/10 min, more preferably 0.01 to 50 g/10 min, particularly preferably 0.05 to 15 g/10 min, in view of the extrudability, etc. of the composition.

For example, when a medical shaped article is produced from the medical resin composition of the present invention by a molding method such as T-die extrusion, inflation, calendering or the like, the MFR at 230°C at a load of 21.2 N, of the hydrogenated diene-based copolymer is preferably 0.1 to 100 g/10 min, more preferably 1.0 to 50 g/10 min, particularly preferably 2.0 to 30 g/10 min. With a MFR of less than 0.1 g/10 min, no sufficient extrusion speed is obtained, which may result in low productivity. Meanwhile, with a MFR of more than 100 g/10 min, formation of bubbles may be difficult when inflation molding is employed and, when T-die extrusion is employed, draw-down may be striking; in any case, productivity tends to be low. Incidentally, the hydrogenated diene-based copolymer (a) may be replaced by or used in combination with the above-mentioned modified hydrogenated diene-based copolymer.

In the medical resin composition of the present invention can be used as necessary additives used in ordinary thermoplastic materials. There can be used, for example, plasticizer or reinforcing agent (e.g. phthalic acid ester), filler for rubber (e.g. paraffinic oil), filler (e.g. silica, talc or calcium carbonate), anti-oxidant, ultraviolet absorber, anti-static agent, lubricant, antibacterial agent, flame retardant, foaming agent, coloring agent, pigment, carbon fiber, metal fiber, glass beads, crosslinking agent, crosslinking aid, and mixture thereof.

As a component constituting the medical resin component of the present invention, there may be used a thermoplastic material or a rubbery polymer, both other than the above-mentioned hydrogenated diene-based copolymer. Specifically, there may be used polybutene; polymethylpentene (e.g. poly-4-methyl-1-pentene); hydrogenated terpene resin; petroleum resin; polyisobutylene; polystyrene; polyalkyl acrylate (e.g. polymethyl acrylate or polyethyl acrylate); polyalkyl methacrylate (e.g. polymethyl methacrylate or polyethyl methacrylate); polybutadiene and/or hydrogenation product thereof; styrene-butadiene copolymer, styrene-isoprene copolymer, butadiene-isoprene copolymer and/or hydrogenation product thereof; ethylene-vinyl acetate copolymer; ethylene-vinyl alcohol copolymer; ethylene-acrylic acid copolymer; ethylene-methacrylic acid copolymer; ethylene-methyl acrylate copolymer; ethylene-methyl methacrylate copolymer; ethylene-ethyl acrylate copolymer; acrylic rubber; ethylene-based ionomer; etc. It is also possible to use a thermosetting polymer such as epoxy resin, phenolic resin, silicone resin or the like as long as the use amount thereof does not impair the properties of the medical resin composition of the present invention.

6. Medical Shaped Article

Next, the embodiment of the medical shaped article of the present invention is described specifically. The medical shaped article of the present invention is made of any of the above-mentioned embodiments of the medical resin composition of the present invention. Thus, the medical shaped article is constituted by a medical resin composition obtained by mixing the hydrogenated diene-based copolymer (a) and a particular polyolefin type resin (e); therefore, it is a medical shaped article superior in fretting resistance and breaking-through resistance and subjectable to high-temperature steam sterilization. Further, not needing to contain, as a plasticizer, for example, a chemical substance which may cause hormone disruption, the medical shaped article of the present invention is suitable particularly in medical applications wherein high safety, etc. are required.

As the medical shaped article of the present invention, there can be mentioned containers (e.g. bottles, boxes and bags) for storing or transferring a liquid used in medical care (specifically, blood or blood component, physiological saline solution, electrolytic solution, dextran preparation, mannitol preparation, saccharose preparation, or amino acid preparation); tubes; medical instruments; and so forth. More specifically, there can be mentioned medical tube, catheter, clysis bag, blood bag, continuous ambulatory peritoneal dialysis (CAPD) bag, drainage bag for continuous ambulatory peritoneal dialysis (CAPD), etc. Incidentally, the medical shaped article of the present invention may be a single-layer structure or a multilayered laminate of multi-layer structure comprising a base material layer and a surface layer formed on at least on one side of the base material layer.

Next, the process for producing the medical shaped article of the present invention is described. In producing the medical shaped article of the present invention, first, a hydrogenated diene-based copolymer (a) and a polyolefin type resin (e) are mixed at predetermined proportions to prepare a medical resin composition. The mixing can be conducted using an appropriate mixer such as Banbury mixer, roll mill, extruder or the like; however, melt kneading in an extruder is preferred and melt kneading in a double screw extruder is particularly preferred. By using a composition obtained by melt kneading in a double screw extruder, a medical shaped article small in number of fish eyes and superior in appearance can be obtained. Incidentally, the medical resin composition obtained by melt kneading in a double screw extruder can ordinarily be pelletized and then used.

The medical resin composition obtained is molded into a desired shape, specifically a sheet, a tube, a container or the like, according to a conventional known method such as extrusion, inflation, T-die extrusion, calendering or the like, whereby the medical shaped article of the present invention can be produced easily.

When the medical shaped article of the present invention is produced as a multilayered structure, one or more kinds of medical resin compositions obtained by melt kneading or the like can be subjected to co-extrusion to laminate a surface layer on at least one side of a base material layer. In conducting co-extrusion, a molding machine of co-extrusion type, specifically an inflation machine or a T-die extruder can be used suitably. The T-die of the T-die extruder may be any of multi-manifold type and feed block type. Incidentally, the multilayered structure can be produced also by methods other than co-extrusion, for example, (a) a method of producing a base material layer and a surface layer in a film shape or a sheet shape according to an ordinary molding method such as inflation, T-die extrusion or the like and then subjecting the two layers to thermo-laminating, and (b) a method of forming, on a base material layer or surface layer produced beforehand by the method (a), other layer by extrusion lamination.

As the co-extrusion method, there can be employed a two layer co-extrusion method of laminating a surface layer on one side of a base material layer; a three layer co-extrusion method of laminating two same or different surface layers on both sides of a base material layer; and a multi-layer (four or more layers) co-extrusion method. Incidentally, lamination of two surface layers on both sides of a base material layer is preferred in view of the balance of flexibility vs. anti-blocking property, fretting resistance and breaking-through resistance. In a structure wherein two surface layers (an outer surface layer and an inner surface layer) are laminated on both sides of a base material layer (an intermediate base material layer), it is preferred to allow the intermediate base material layer (not coming in contact with a medical solution, etc.) and/or the outer surface layer (not coming in contact with a medical solution, etc.) to contain an ultraviolet absorber, for shielding from ultraviolet light. Also in a structure wherein two surface layers (an outer surface layer and an inner surface layer) are laminated on both sides of a base material layer (an intermediate base material layer), it is possible to allow the intermediate base material layer and/or the outer surface layer to have a color, for prevention of medical malpractice.

The total thickness of the medical shaped article of the present invention when it is a multilayered structure, can be appropriately selected depending upon the properties required therefor or the application thereof. However, the thickness is preferably 10 μm or more, more preferably 20 μm or more in view of the shapability, retention of strength, etc. of the shaped article. As to the upper limit of the thickness, there is no particular restriction, but the upper limit is sufficient if it is about 20 mm or less. Incidentally, the proportions of the thicknesses of the base material layer and surface layer can be appropriately selected depending upon the properties required for the medical shaped article and the application thereof; however, the proportions are preferably base material layer/surface layer = 1/1 to 20/1, more preferably base material layer/surface layer = 1/1 to 8/1.

In producing the medical shaped article of the present invention as a bag such as clysis bag, CAPD bag or the like, first, a sheet-shaped base material is produced by extrusion molding such as T-die extrusion, inflation or the like. The sheet-shaped base material may be in a unstretched state or in a stretched state. Then, the sheet-shaped base material is processed by an appropriate method such as thermoforming, blowing, stretching, cutting, heat-sealing or the like, whereby a bag of desired shape can be obtained. The inner or outer surface of the medical shaped article may be roughened (embossed) for improved anti-blocking property. Incidentally, of the above-mentioned extrusion moldings, the inflation is suitable for production of a medical shaped article because, in processing the base material produced by the inflation, into a bag, there is substantially no adhesion of germs and foreign matter onto the inside of the bag.

Examples

The present invention is described more specifically below by way of Examples. However, the present invention is in no way restricted by these Examples. Incidentally, in the following Examples and Comparative Examples, "parts" and "%" are based on mass unless specified otherwise. The methods used for measurement of the properties of the hydrogenated diene-based copolymers produced are described below.

[Hydrogenation ratio]

Calculated from the $^1$H-NMR spectrum obtained at 270 MHz using a carbon tetrachloride solution.

[Melt flow rate (MFR)]

Measured at 230°C at a load of 21.2 N according to JIS K 7210.

[Total styrene unit content (also called "total bound styrene content")]

Calculated from the $^1$H-NMR spectrum obtained at 270 MHz using a carbon tetrachloride solution.

[Vinyl configuration content (V)]

Vinyl configuration (1,2-configuration and 3,4-configuration) content (%) was calculated by the Hampton method using infrared analysis.

[BS proportion]

Calculated from the amounts fed, using the following expression.

BS proportion (%) =

[the total fed amount of the vinyl aromatic compound

contained in the block (B) of the hydrogenated diene-based

copolymer/the total fed amount of the total vinyl aromatic

compound contained in the hydrogenated diene-based copolymer]

x 100

[LS proportion]

A solution obtained by dissolving 30 mg of a sample in 0.6 ml of carbon tetrachloride was subjected to $^1$H-NMR (270 MHz) using tetramethylsilane as a reference substance. This was conducted at 23°C 50 times. Calculation was made using the following expression.

LS proportion (%) =

[(areal intensity of 6.8 to 6.0 ppm portion x 2.5)/(areal

intensity of 7.6 to 6.0 ppm portion)] x 100

[Melt viscosity]

Melt viscosity $\eta^*$ (complex dynamic viscosity) was measured under the conditions of temperature = 230°C, frequency = 0.1 Hz and strain = 0.1, using a 20-mm (diameter) cone plate (cone angle = 2°) and a viscoelasticity tester [MR-500 (trade name) produced by Rheology].

[Weight-average molecular weight (Mw) of hydrogenated diene-based copolymer]

Measured, in terms of polystyrene-reduced weight-average molecular weight, using gel permeation chromatography [room-temperature GPC, column = GMH-XL (trade name) produced by Tosoh Corporation].

1. Hydrogenated diene-based copolymers, shaped articles, and foamed materials

(1) Production Examples of hydrogenated diene-based Copolymers

[Production Example 1: Production of hydrogenated diene-based copolymer (H-1)]

Into an autoclave having an internal volume of 50 liters were fed 25 kg of deaerated and dehydrated cyclohexane and 400 g of styrene. Thereto were added 300 g of tetrahydrofuran and 3.5 g of n-butyllithium. Adiabatic polymerization from 50°C was conducted for 20 minutes. The reaction mixture was kept at 20°C, after which 3,500 g of 1,3-butadiene and 700 g of styrene were added, followed by adiabatic polymerization. After the conversion became roughly 100%, 400 g of styrene was added and polymerization was conducted.

After the completion of the polymerization, hydrogen gas was supplied and hydrogenation was conducted using a titanocene compound described in JP-A-2000-37632.

The hydrogenated diene-based copolymer (H-1) obtained had a hydrogenation ratio of 98%, a weight-average molecular weight of 120,000, a bound styrene content of 30% by mass, a BS proportion of 47%, a LS proportion of 48%, a vinyl configuration content in block B, of 73%, a MFR of 20 g/10 min, and a melt viscosity of 450 Pa·s. Incidentally, the results of property measurements of the hydrogenated diene-based copolymer are shown in Table 1.

In a similar manner but by changing the amounts of monomers, the amount of tetrahydrofuran added, the amount of catalyst, the polymerization temperature, the polymerization time, etc., there were produced hydrogenated diene-based copolymers H-2 to H-5, H-8 to H-13, H-16 and R-1 to R-10, all shown in Table 1 and Table 2. The results of property measurements of these hydrogenated diene-based copolymers are shown in Table 1 and Table 2. Incidentally, hydrogenated diene-based copolymers H-7 and H-15 were produced using tetrachlorosilane as a coupling agent.

[Production Example 2: Production of hydrogenated diene-based copolymer (H-6)]

Into an autoclave having an internal volume of 50 liters were fed 25 kg of deaerated and dehydrated and cyclohexane and 400 g of styrene. Thereto were added 150 g of tetrahydrofuran and 3.2 g of n-butyllithium. Adiabatic polymerization from 50°C was conducted for 20 minutes. The reaction mixture was kept at 20°C, after which 2,950 g of 1,3-butadiene and 1,200 g of styrene were added, followed by adiabatic polymerization. After the conversion became roughly 100%, 400 g of styrene was added and adiabatic polymerization was conducted for 20 minutes. Then, 50 g of 1,3-butadiene was added to conduct adiabatic polymerization.

After the completion of the polymerization, hydrogen gas was fed at a pressure of 0.4 MPa-G, and stirring was made for 20 minutes to react the hydrogen with the polymer-terminal lithium (active as living anion) to convert the lithium into lithium hydride. The reaction mixture was kept at 90°C; 1.5 g of tetrachlorosilane was added thereto; stirring was made for about 20 minutes; then, hydrogenation was conducted using a titanocene compound described in JP-A-2000-37632.

The hydrogenated diene-based copolymer (H-6) obtained had a hydrogenation ratio of 98%, a weight-average molecular weight of 130,000, a bound styrene content of 40% by mass, a BS proportion of 60%, a LS proportion of 36%, a vinyl configuration content in block B, of 56%, a MFR of 18 g/10 min, and a melt viscosity of 520 Pa·s. The results of property measurements of the hydrogenated diene-based copolymer are shown in Table 1. Incidentally, in the "structure 2" of the hydrogenated diene-based copolymer (H-6) of Table 1, "C" indicates a hydrogenated polybutadiene block. In a similar manner, a hydrogenated diene-based copolymer (H-14) was produced. The results of property measurements of the hydrogenated diene-based copolymer are shown in Table 2.

These hydrogenated diene-based copolymers were subjected to press molding by an electrical press molding machine (produced by Kansai Roll Co.) under the conditions of mold temperature = 190°C, pressurization and heating time = 10 minutes, and pressurization and cooling time = 5 minutes, to produce sheets (shaped articles) for property measurements, having a thickness of 2 mm, a lengthwise width of 120 mm and a transverse width of 120 mm. They were evaluated as described later. The results are shown in Table 1 and Table 2.

Table 1

| Kind of hydrogenated diene-based copolymer | H-1 | H-2 | H-3 | H-4 | H-5 | H-6 | H-7 |
|---|---|---|---|---|---|---|---|
| Structure* | Structure 1 | Structure 1 | Structure 1 | Structure 1 | Structure 1 | Structure 2 | Structure 3 |
| Mass fraction of block (A1) (%) | 8 | 9 | 8 | 10 | 10 | 8 | 14 |
| ST content of block (A1) (mass %) | 100 | 100 | 100 | 100 | 100 | 100 | 100 |
| Mass fraction of block (A2) (%) | 8 | 6 | 8 | 10 | 10 | 8 | – |
| ST content of block (A2) (mass %) | 100 | 100 | 100 | 100 | 100 | 100 | – |
| Mass fraction of block (B1) (%) | 84 | 85 | 84 | 80 | 80 | 83 | 86 |
| Mass fraction of block (C) (%) | – | – | – | – | – | 1 | – |
| Total bound styrene content (mass %) | 30 | 35 | 40 | 50 | 60 | 40 | 35 |
| BS proportion (%) | 47 | 57 | 60 | 60 | 67 | 60 | 60 |
| LS proportion (%) | 48 | 42 | 35 | 39 | 32 | 36 | 39 |
| Vinyl configuration content (%) | 73 | 73 | 69 | 60 | 63 | 56 | 45 |
| Hydrogenation ratio (%) | 98 | 98 | 98 | 98 | 98 | 98 | 98 |
| Melt viscosity (Pa·s) | 450 | 400 | 430 | 80 | 90 | 520 | 900 |
| MFR (g/10 min) | 20 | 26 | 22 | 95 | 80 | 18 | 30 |
| Weight-average molecular weight (x10,000) | 12 | 13 | 13 | 10 | 9 | 13 | 6 |
| Tensile strength (MPa) | 19 | 20 | 20 | 23 | 21 | 10 | 10 |
| Tensile elongation (%) | 660 | 670 | 580 | 470 | 430 | 500 | 450 |
| Hardness (Shore A) | 54 | 53 | 64 | 70 | 80 | 70 | 75 |

*Structure 1: A1-B1-A2

Structure 2: A1-B1-A2-C

Structure 3: (A1-B1-)4

Table 1—continued

| Kind of hydrogenated diene-based copolymer | R-1 | R-2 | R-3 | R-4 | R-5 | R-6 | R-7 |
|---|---|---|---|---|---|---|---|
| Structure* | Structure 1 | Structure 1 | Structure 1 | Structure 1 | Structure 1 | Structure 1 | Structure 1 |
| Mass fraction of block (A1) (%) | 15 | 1 | 14 | 8 | 8 | 5 | 15 |
| ST content of block (A1) (mass %) | 100 | 100 | 100 | 100 | 100 | 100 | 50 |
| Mass fraction of block (A2) (%) | 15 | 1 | 14 | 8 | 8 | 5 | 15 |
| ST content of block (A2) (mass %) | 100 | 100 | 100 | 100 | 100 | 100 | 50 |
| Mass fraction of block (B1) (%) | 70 | 98 | 72 | 84 | 84 | 90 | 70 |
| Mass fraction of block (C) (%) | – | – | – | – | – | – | – |
| Total bound styrene content (mass %) | 30 | 30 | 30 | 30 | 30 | 18 | 30 |
| BS proportion (%) | 0 | 93 | 7 | 47 | 47 | 44 | 50 |
| LS proportion (%) | 99 | 5 | 91 | 49 | 48 | 52 | 46 |
| Vinyl configuration content (%) | 71 | 72 | 70 | 25 | 80 | 70 | 73 |
| Hydrogenation ratio (%) | 98 | 98 | 98 | 98 | 98 | 98 | 98 |
| Melt viscosity (Pa·s) | ≧10000 | 50 | ≧10000 | 1600 | 280 | 330 | 60 |
| MFR (g/10 min) | 0.1 | 180 | 1 | 12 | 33 | 30 | 160 |
| Weight-average molecular weight (x10,000) | 12 | 13 | 10 | 13 | 13 | 13 | 10 |
| Tensile strength (MPa) | 23 | 5 | 21 | 17 | 15 | 7 | 3 |
| Tensile elongation (%) | 520 | 560 | 510 | 360 | 650 | 780 | 410 |
| Hardness (Shore A) | 75 | 50 | 68 | 60 | 52 | 48 | 56 |

*Structure 1: A1-B1-A2

Structure 2: A1-B1-A2-C

Structure 3: (A1-B1-)4

Table 2

| Kind of hydrogenated diene-based copolymer | H-9 | H-10 | H-11 | H-12 | H-13 | H-14 | H-15 | H-16 |
|---|---|---|---|---|---|---|---|---|
| Structure* | Structure 1 | Structure 1 | Structure 1 | Structure 1 | Structure 1 | Structure 2 | Structure 3 | Structure 1 |
| Mass fraction of block (A1) (%) | 8 | 9 | 8 | 10 | 10 | 8 | 14 | 8 |
| ST content of block (A1) (mass %) | 100 | 100 | 100 | 100 | 100 | 100 | 100 | 100 |
| Mass fraction of block (A2) (%) | 8 | 6 | 8 | 10 | 10 | 8 | – | 8 |
| ST content of block (A2) (mass %) | 100 | 100 | 100 | 100 | 100 | 100 | – | 94 |
| Mass fraction of block (B1) (%) | 84 | 85 | 84 | 80 | 80 | 83 | 86 | 84 |
| Mass fraction of block (C) (%) | – | – | – | – | – | 1 | – | – |
| Total bound styrene content (mass %) | 30 | 35 | 40 | 50 | 60 | 40 | 35 | 35 |
| BS proportion (%) | 47 | 57 | 60 | 60 | 67 | 60 | 60 | 56 |
| LS proportion (%) | 48 | 42 | 37 | 38 | 30 | 36 | 39 | 40 |
| Vinyl configuration content (%) | 70 | 68 | 60 | 61 | 68 | 61 | 48 | 71 |
| Hydrogenation ratio (%) | 98 | 98 | 98 | 98 | 98 | 98 | 98 | 98 |
| MFR (g/10 min) | 5 | 6 | 2 | 0.1 | 1 | 9 | 7 | 4 |
| Weight-average molecular weight (×10,000) | 16 | 16 | 19 | 23 | 20 | 19 | 8 | 17 |
| Tensile strength (MPa) | 22 | 23 | 26 | 23 | 23 | 12 | 11 | 19 |
| Tensile elongation (%) | 600 | 630 | 550 | 480 | 400 | 510 | 400 | 600 |
| Hardness (Shore A) | 55 | 56 | 68 | 72 | 80 | 71 | 77 | 55 |

*Structure 1: A1-B1-A2

Structure 2: A1-B1-A2-C

Structure 3: (A1-B1-)4

Table 2—continued

Table 2—continued

| Kind of hydrogenated diene-based copolymer | R-1 | R-2 | R-3 | R-4 | R-5 | R-6 | R-7 | R-8 | R-9 | R-10 |
|---|---|---|---|---|---|---|---|---|---|---|
| Structure* | Structure 1 | Structure 1 | Structure 1 | Structure 1 | Structure 1 | Structure 1 | Structure 1 | Structure 1 | Structure 1 | Structure 1 |
| Mass fraction of block (A1) (%) | 15 | 1 | 14 | 8 | 8 | 5 | 15 | 8 | 9 | 36 |
| ST content of block (A1) (mass %) | 100 | 100 | 100 | 100 | 100 | 100 | 50 | 100 | 100 | 100 |
| Mass fraction of block (A2) (%) | 15 | 1 | 14 | 8 | 8 | 5 | 15 | 8 | 6 | 12 |
| ST content of block (A2) (mass %) | 100 | 100 | 100 | 100 | 100 | 100 | 50 | 100 | 100 | 100 |
| Mass fraction of block (B1) (%) | 70 | 98 | 72 | 84 | 84 | 90 | 70 | 84 | 85 | 52 |
| Mass fraction of block (C) (%) | - | - | - | - | - | - | - | - | - | - |
| Total bound styrene content (mass %) | 30 | 30 | 30 | 30 | 30 | 18 | 30 | 65 | 15 | 50 |
| BS proportion (%) | 0 | 93 | 7 | 47 | 47 | 44 | 50 | 75 | 0 | 0 |
| LS proportion (%) | 99 | 5 | 91 | 49 | 48 | 52 | 46 | 25 | 99 | 99 |
| Vinyl configuration content (%) | 71 | 72 | 70 | 25 | 80 | 70 | 73 | 20 | 78 | 80 |
| Hydrogenation ratio (%) | 98 | 98 | 98 | 98 | 98 | 98 | 98 | 98 | 98 | 98 |
| MFR (g/10 min) | 0.1 | 180 | 1 | 12 | 33 | 30 | 160 | 3 | 26 | 2.5 |
| Weight-average molecular weight (x10,000) | 12 | 13 | 10 | 13 | 13 | 13 | 10 | 17 | 13 | 13 |
| Tensile strength (MPa) | 23 | 5 | 21 | 17 | 15 | 7 | 3 | 12 | 10 | 13 |
| Tensile elongation (%) | 520 | 560 | 510 | 360 | 650 | 780 | 410 | 490 | 900 | 610 |
| Hardness (Shore A) | 75 | 50 | 68 | 60 | 52 | 48 | 56 | 80 | 48 | 99 |

*Structure 1: A1-B1-A2

Structure 2: A1-B1-A2-C

Structure 3: (A1-B1-)4

EP 1 605 002 A1

Here, H-1 to H-16 are hydrogenated diene-based copolymers falling in the range of the present invention; and R-lto R-8 are hydrogenated diene-based copolymers deviating from the range of the present invention. R-1 is a case in which the block (B) contains no vinyl aromatic compound. R-2 and R-3 are each a case in which the BS proportion and the LS proportion deviate from the respective ranges of the present invention. R-4, R-5 and R-8 are each a case in which the vinyl configuration content deviates from the range of the present invention. R-6 is a case in which the content of total vinyl aromatic compound units deviates from the range of the present invention. R-7 is a case in which the block (A) contains a conjugated diene compound unit in an amount of 50% by mass.

(2) Various components

Component (a) is a hydrogenated diene-based copolymer having a structure shown in Table 1 or table 2. Component (b) is a polypropylene (an olefin-based resin) produced by SunAllomer Ltd.[PM 940 M (trade name), MFR = 30 g/10 min (230°C, 21.2 N load)]. Component (c) is an olefin-based thermoplastic elastomer (TPO) and was produced by the following method.

Into a 10-liter double-arm type pressure kneader (produced by Moriyama Co.) heated at 150°C were fed an ethylene/propylene/5-ethylidene-2-norbornene tertpolymer (ethylene content = 66% by mass, 5-ethylidene-2-norbornene content = 4.5% by mass, intrinsic viscosity [η] measured in decalin solvent at 135°C = 4.7), 70 parts of a paraffinic mineral oil type softening agent (Diana Process Oil PW 380 (trade name) produced by IDEMITSU KOSAN CO., LTD., content = 50% by mass), 25 parts of a propylene/ethylene random copolymer [Novatec PPFL 25 R (trade name) produced by Japan Polychem Corporation, MFR = 23 g/10 min (23°C, 21.2 N load)], 5 parts of a propylene/1-butene amorphous copolymer [APAO UT 2780 (trade name) produced by Ube Industries, Ltd., propylene content = 71 mole %, melt viscosity = 8,000 cSt, density = 0.87 g/cm$^3$, Mn = 6,500], 0.1 part of an anti-oxidant [Irganox 1010 (trade name) produced by Chiba Specialty Chemicals K.K.], and 0.2 part of a silicone oil [SH-200 (trade name) produced by Toray Dow-Corning Silicone Co., 100 cSt]. Kneading was conducted at 40 rpm for 20 minutes. Then, the molten composition was pelletized using a Feeder Ruder(trade name) (produced by Moriyama Co.) set at 180°C and 40 rpm. To the pellets obtained were added 1 part of 2,5-dimethyl-2,5-di(tert-butylperoxy)hexane [Perhexa 25 B-40 (trade name) produced by NOF Corporation] and 0.5 part of N,N'-m-phenylenebismaleimide [VULNOC PM (trade name) produced by Ouchi Shinko Kagaku Kogyo K.K.]. They were mixed in a Henschel mixer for 30 seconds. The mixture was extruded using a double screw extruder [PCM-45 produced by Ikegai Co.; an intermeshing co-rotating twin screw having a L/D ratio of 33.5 (L is the length of screw flight portion and D is the diameter of screw)] while applying a dynamic heat treatment under the conditions of 230°C, 300 rpm and 2 minutes (residence time), whereby a pellet-like, dynamically crosslinked type TPO was obtained.

(3) Evaluation of shape of powder

Properties indicating the shape of each powder were measured by the following methods, to evaluate the shape of the powder.

[Bulk specific gravity of powder]

The properties of a powder indicating the shape of the powder were measured according to the following methods, to evaluate the shape of the powder.

[Bulk specific gravity of powder]

100 ml of a powder was taken and weighed and the bulk specific gravity of the powder was calculated, according to JIS K 6721.

[Sphere-reduced average particle diameter of powder]

100 particles of a powder were taken randomly and their mass was determined. From the mass and the specific gravity of the polymer composition constituting the powder was calculated the average volume of the particles. There was calculated the diameter of a sphere having the same volume as the average volume of the particles, and the diameter was taken as the sphere-reduced average particle diameter of the powder.

(4) Evaluation of properties of shaped article

The properties of each shaped article were measured and evaluated according to the following methods.

[Tensile property (mechanical strength)]

The tensile strength and elongation of a shaped article were measured according to JIS K 6301.

[Hardness (flexibility)]

The Shore A hardness of a shaped article was measured according to ASTM D 2240. The hardness was evaluated based on the following criterion.

○: Superior in flexibility (hardness is less than 90).
X: Inferior in flexibility (hardness is more than 90).

[Appearance of shaped article]

The appearance of a shaped article was evaluated visually based on the following criterion.

○: There is no pinhole and emboss transferability is good.
X: Appearance is poor owing to the presence of pinhole and cutout, the inferiority of emboss transferability, the presence of uneven luster, etc.

[Mar resistance]

Using a Taber scratch tester (produced by Toyo Seiki Seisakusho K.K.), each shaped article was subjected to a scratch test with the applied load being increased by 50 g each. The presence of scratch on the surface of the shaped article was examined visually after the test, and the smallest load at which mar was formed, was taken as mar load, and the mar resistance of the shaped article was evaluated based on the following criterion.

○: Superior in mar resistance (mar load is more than 200 g).
X: Inferior in mar resistance (mar load is less than 200 g).

[Heat resistance]

A shaped article was allowed to stand at 110°C for 24 hours. A change in gloss value before and after the heating was measured and the heat resistance of the shaped article was evaluated based on the following criterion. The gloss value was measured using a digital photometer (GM-26D produced by Murakami Shikisaigijutsu Kenkyusho, reflection angle: 60°).

○: Superior in heat resistance (difference in gloss value: less than 1.0)
X: Inferior in heat resistance (difference in gloss value: more than 1.0)

[Weather resistance]

A shaped article was allowed to stand in Sunshine Weatherometer (produced by Suga Shikensha Co.) at a black panel temperature of 83°C (no rain) for 50 hours. The retention of tensile strength before and after the test was determined. The weather resistance of the shaped article was evaluated based on the following criterion.

○: Superior in weather resistance (the retention is more than 90%).
X: Inferior in weather resistance (the retention is less than 90%).

(5) Powder production and powder molding

(Example 1)

70 parts by mass of the hydrogenated diene-based copolymer (H-1) obtained in the above Production Examples and 30 parts by mass of an olefin-based resin (PM 940 M) were placed in a 30-mm (diameter) extruder (produced by Tanabe Plastic Co.) and kneaded at 190°C. The kneaded material was discharged from the die (outlet diameter: 1.0 mm) kept at 190°C, at a discharge speed of 1 kg/hr/hole. The discharged material was taken off at a take-off speed of 32 m/min and then returned to room temperature to obtain strands each of 0.8 mm in diameter. Then, the strands were cut by a pelletizer to obtain a powder composed of a polymer composition, having a bulk specific gravity of 0.42 and a sphere-reduced average particle diameter of 0.65 mm. The powder was subjected to press molding using an electrical press molding machine under the conditions of mold temperature = 190°C, pressurization and heating time = 10 minutes, and pressurization and cooling time = 5 minutes, to produce a sheet of 2 mm in thickness. The sheet was measured for tensile property, hardness and weather resistance and evaluated.

Then, the powder composed of a polymer composition was charged in an embossed electroforming mold (length 1200 mm x width 500 mm) of 250°C and allowed to stand for 5 seconds. Then, the mold was reversed to wipe off the surplus powder and was allowed to stand for 60 seconds in that state. Thereafter, cooling and release from the mold were made, whereby an embossed shaped article of 1 mm in thickness was obtained. The embossed shaped article was evaluated for appearance, mar resistance and heat resistance. The results of the evaluation are shown in Table 3.

(Examples 2 to 10)

According to the formulations shown in Table 3, powders each composed of a polymer composition was obtained in the same manner as in Example 1. From the powders were produced sheets and embossed shaped articles. They were evaluated for properties. The results are shown in Table 3.

Table 3

| | Exam.1 | Exam.2 | Exam.3 | Exam.4 | Exam.5 | Exam.6 | Exam.7 | Exam.8 | Exam.9 | Exam.10 |
|---|---|---|---|---|---|---|---|---|---|---|
| [Formulation] | | | | | | | | | | |
| Kind of hydrogenated diene-based copolymer | H-1 | H-2 | H-3 | H-4 | H-5 | H-6 | H-7 | H-8 | H-1 | H-1 |
| Content of hydrogenated diene-based copolymer (parts by mass) | 70 | 70 | 70 | 70 | 70 | 70 | 70 | 70 | 30 | 50 |
| Content of olefinic resin (parts by mass) | 30 | 30 | 30 | 30 | 30 | 30 | 30 | 30 | 0 | 50 |
| Content of TPO (parts by mass) | | | | | | | | | 70 | |
| [Powder] | | | | | | | | | | |
| Bulk specific gravity | 0.42 | 0.43 | 0.42 | 0.51 | 0.41 | 0.48 | 0.44 | 0.42 | 0.42 | 0.42 |
| Sphere-reduced average particle diameter (mm) | 0.65 | 0.63 | 0.61 | 0.50 | 0.65 | 0.55 | 0.58 | 0.60 | 0.64 | 0.63 |
| [Properties of shaped article] | | | | | | | | | | |
| Tensile strength (MPa) | 20 | 25 | 30 | 24 | 21 | 20 | 15 | 23 | 4.5 | 22 |
| Tensile elongation (%) | 710 | 660 | 610 | 500 | 460 | 460 | 400 | 590 | 360 | 510 |
| Hardness (Shore A) | 77○ | 74○ | 82○ | 83○ | 89○ | 87○ | 88○ | 75○ | 73○ | 89○ |
| Appearance | ○ | ○ | ○ | ○ | ○ | ○ | ○ | ○ | ○ | ○ |
| Mar resistance | 350○ | ≧500○ | 300○ | 350○ | 350○ | 200○ | 250○ | 450○ | 200○ | 200○ |
| Heat resistance | 0.6○ | 0.5○ | 0.5○ | 0.5○ | 0.6○ | 0.4○ | 0.5○ | 0.5○ | 0.6○ | 0.6○ |
| Weather resistance | 99○ | 98○ | 99○ | 99○ | 99○ | 99○ | 99○ | 99○ | 99○ | 99○ |

(Comparative Examples 1 to 8)

According to the formulations shown in Table 4, powders each composed of a polymer composition was obtained in the same manner as in Example 1. From the powders were produced sheets and embossed shaped articles. They were evaluated for properties. The results are shown in Table 4.

T a b l e   4

| | Comp. Exam.1 | Comp. Exam.2 | Comp. Exam.3 | Comp. Exam.4 | Comp. Exam.5 | Comp. Exam.6 | Comp. Exam.7 | Comp. Exam.8 |
|---|---|---|---|---|---|---|---|---|
| [Formulation] | | | | | | | | |
| Kind of hydrogenated diene-based copolymer | R-1 | R-2 | R-3 | R-4 | R-5 | R-6 | R-7 | - |
| Content of hydrogenated diene-based copolymer (parts by mass) | 70 | 70 | 70 | 70 | 70 | 70 | 70 | - |
| Content of olefinic resin (parts by mass) | 30 | 30 | 30 | 30 | 30 | 30 | 30 | - |
| Content of TPO (parts by mass) | | | | | | | | 100 |
| [Powder] | | | | | | | | |
| Bulk specific gravity | 0.25 | 0.45 | 0.30 | 0.35 | 0.43 | 0.44 | 0.43 | 0.50 |
| Sphere-reduced average particle diameter (mm) | 1.80 | 0.59 | 1.50 | 1.30 | 0.63 | 0.61 | 0.62 | 0.30 |
| [Properties of shaped article] | | | | | | | | |
| Tensile strength (MPa) | 12 | 8 | 10 | 6 | 9 | 10 | 8 | 7 |
| Tensile elongation (%) | 480 | 440 | 430 | 400 | 500 | 580 | 300 | 500 |
| Hardness (Shore A) | 94× | 89○ | 91× | 95× | 77○ | 76○ | 78○ | 69○ |
| Appearance | × | ○ | × | × | ○ | ○ | ○ | ○ |
| Mar resistance | 50× | 50× | 50× | 50× | 150× | 50× | 50× | ≦50× |
| Heat resistance | 0.6○ | 0.8○ | 0.7○ | 0.6○ | 2.1× | 0.6○ | 1.2× | 0.8○ |
| Weather resistance | 99○ | 99○ | 98○ | 99○ | 99○ | 99○ | 99○ | 99○ |

(6) Extrusion Molding

(Example 11)

2,100 g of a hydrogenated diene-based copolymer (H-9) and 900 g of an olefin-based resin (PM 940 M) were subjected to melt kneading at 190°C using a 40-mm (diameter) extruder (type: FS-40, produced by Ikegai Co.), to obtain 1,500 g of pellets. The pellets were extruded from the T-die (200 mm in width, 0.7 mm in lip-to-lip distance) fitted to the front end of a 20-mm (diameter) extruder (produced by Toyo Seiki Co.), under the conditions of extruder cylinder temperature = 190°C, T-die temperature = 200°C, take-off equipment roll temperature = 30°C, and take-off speed = 10 m/min. The extrudate was taken off by an take-off equipment to produce a sheet-like extrudate (shaped article) for property evaluation, having a thickness of 1 mm. The shaped article was measured for tensile property, hardness and weather resistance and evaluated. Further, the pellets were subjected to press molding using an electrical press molding machine (produced by Kansai Roll Co.) under the conditions of mold temperature = 190°C, pressurization and heating time = 10 minutes and pressurization and cooling time = 5 minutes, to produce an embossed sheet-like shaped article having a thickness of 1 mm. The shaped article was evaluated for mar resistance. The results are shown in Table 5.

(Examples 12 to 20)

According to the formulations shown in Table 5, sheet-like extrudates (shaped articles) for property evaluation were produced in the same manner as in Example 11. The shaped articles were evaluated for properties. The results are shown in Table 5.

Table 5

| | Exam.11 | Exam.12 | Exam.13 | Exam.14 | Exam.15 | Exam.16 | Exam.17 | Exam.18 | Exam.19 | Exam.20 |
|---|---|---|---|---|---|---|---|---|---|---|
| [Formulation] | | | | | | | | | | |
| Kind of hydrogenated diene-based copolymer | H-9 | H-10 | H-11 | H-12 | H-13 | H-14 | H-15 | H-16 | H-9 | H-9 |
| Content of hydrogenated diene-based copolymer (parts by mass) | 70 | 70 | 70 | 70 | 70 | 70 | 70 | 70 | 30 | 50 |
| Content of olefinic resin (parts by mass) | 30 | 30 | 30 | 30 | 30 | 30 | 30 | 30 | 0 | 50 |
| Content of TPO (parts by mass) | | | | | | | | | 70 | |
| [Properties of shaped article] | | | | | | | | | | |
| Tensile strength (MPa) | 22 | 26 | 33 | 24 | 23 | 20 | 17 | 24 | 5 | 23 |
| Tensile elongation (%) | 720 | 680 | 620 | 550 | 470 | 560 | 420 | 620 | 390 | 520 |
| Hardness (Shore A) | 79○ | 76○ | 83○ | 86○ | 88○ | 87○ | 88○ | 76○ | 77○ | 88○ |
| Mar resistance | 400○ | ≧500○ | 350○ | 400○ | 400○ | 350○ | 200○ | 450○ | 250○ | 250○ |
| Weather resistance | 99○ | 98○ | 99○ | 99○ | 99○ | 99○ | 99○ | 99○ | 99○ | 99○ |

(Comparative Examples 9 to 17)

According to the formulations shown in Table 6, sheet-like extrudates (shaped articles) for property evaluation were produced in the same manner as in Example 11. The shaped articles were evaluated for properties. The results are shown in Table 6.

(7) Press molding

Table 6

| | Comp. Exam.9 | Comp. Exam.10 | Comp. Exam.11 | Comp. Exam.12 | Comp. Exam.13 | Comp. Exam.14 | Comp. Exam.15 | Comp. Exam.16 | Comp. Exam.17 |
|---|---|---|---|---|---|---|---|---|---|
| [Formulation] | | | | | | | | | |
| Kind of hydrogenated diene-based copolymer | R-1 | R-2 | R-3 | R-4 | R-5 | R-6 | R-7 | – | R-8 |
| Content of hydrogenated diene-based copolymer (parts by mass) | 70 | 70 | 70 | 70 | 70 | 70 | 70 | – | 70 |
| Content of olefinic resin (parts by mass) | 30 | 30 | 30 | 30 | 30 | 30 | 30 | – | 30 |
| Content of TPO (parts by mass) | | | | | | | | 100 | |
| [Properties of shaped article] | | | | | | | | | |
| Tensile strength (MPa) | 12 | 9 | 10 | 7 | 9 | 10 | 8 | 7 | 12 |
| Tensile elongation (%) | 460 | 420 | 400 | 380 | 490 | 540 | 270 | 480 | 330 |
| Hardness (Shore A) | 94× | 89○ | 92× | 96× | 78○ | 76○ | 79○ | 69○ | 95× |
| Mar resistance | 50× | 50× | 50× | 50× | 150× | 50× | 100× | 50× | 200○ |
| Weather resistance | 99○ | 99○ | 99○ | 99○ | 99○ | 99○ | 99○ | 99○ | 99○ |

41

(Examples 21 to 25, Comparative Examples 18 to 20)

Each of the hydrogenated diene-based copolymers H-1 to H-5, R-1, R-9 and R-10 was made into a sheet-like material at 160°C using two 6-inch open rolls. Then, the sheet-like material was molded into a sheet of 2 mm in thickness using a press at 190°C at a gauge pressure of 150 kg. Each sheet was evaluated for properties. In a similar manner, a sheet of 1 mm in thickness was molded and measured for dynamic viscoelasticity (loss tangent peak temperature and loss tangent peak height). The shaped material (2 mm-thick sheet) was evaluated for properties shown in Table 7. The results are shown in Table 7. Incidentally, the measurement and evaluation methods for the "loss tangent peak temperature (°C)", "loss tangent peak height" and "weather resistance (stickiness)", shown in Table 7 are described below.

[Loss tangent peak temperature, loss tangent peak height]

Loss tangent peak temperature (°C) and loss tangent peak height were measured using RSA II (trade name, produced by Rheometric Co.), under the conditions of stretching mode, frequency used = 1 Hz, temperature elevation rate = 3°C/min and initial strain = 0.05%.

[Weather resistance (stickiness)]

A sample was subjected to 5 cycles of light irradiation under the following test conditions (1) to (3) show below, using a weathering tester under ultra-acceleration [Daipla Metal Weather (trade name) produced by Daipla-Wintes Co.]. The stickiness on the surface of the sample after the 5 cycles was evaluated based on the following criterion (confirmation by contact). Incidentally, in the following test conditions, conducting (1) and (2) each once in total time of 8 hours was defined as 1 cycle.

(1) Irradiation mode: black panel temperature = 63°C, humidity = 50% RH, time = 4 hours
(2) Non-irradiation mode: temperature = 30°C, humidity = 98% RH, time = 4 hours
(3) Raining: Before and after the non-irradiation mode, a shower was applied to the sample for 20 seconds each.

○: There is no stickiness or substantially no stickiness.
Δ: There is stickiness.
X: There is striking stickiness.

(Example 26, Comparative Example 21)

Compounding was conducted under the same conditions as in Example 21, according to the formulations shown in Table 7, to produce sheets (shaped articles for property evaluation). Each shaped article was evaluated for the properties shown in Table 7. The results are shown in Table 7.

(Comparative Example 22)

A shaped article for property evaluation was produced in the same manner as in Example 21, using the hydrogenated styrene-isoprene-styrene block copolymer (SEPS) (proportion of 1,2- and 3,4- configurations in total isoprene configuration in isoprene block = 50%, styrene content = 20%, molecular weight = 116,000), described in Table 7. The shaped article was evaluated for the properties shown in Table 7. The results are shown in Table 7.

T a b l e   7

| | Exam.21 | Exam.22 | Exam.23 | Exam.24 | Exam.25 | Exam.26 | Comp. Exam.18 | Comp. Exam.19 | Comp. Exam.20 | Comp. Exam.21 | Comp. Exam.22 |
|---|---|---|---|---|---|---|---|---|---|---|---|
| [Formulation] | | | | | | | | | | | |
| Kind of hydrogenated diene-based copolymer | H-1 | H-2 | H-3 | H-4 | H-5 | H-2 | R-1 | R-9 | R-10 | R-9 | SEPS* |
| Content of hydrogenated diene-based copolymer(parts by mass) | 100 | 100 | 100 | 100 | 100 | 70 | 100 | 100 | 100 | 70 | 100 |
| Kind of other resin | — | — | - | — | — | PP1 | - | — | — | PP1 | — |
| Content of other resin (parts by mass) | — | — | -- | — | — | 30 | — | — | — | 30 | — |
| [Properties of shaped article] | | | | | | | | | | | |
| Tensile strength (MPa) | 19 | 20 | 20 | 23 | 21 | 23.1 | 23 | 10 | 13 | 11.6 | 12 |
| Tensile elongation (%) | 660 | 670 | 580 | 470 | 430 | 620 | 520 | 900 | 610 | 790 | 720 |
| Hardness (Shore A) | 54 | 53 | 64 | 70 | 80 | 74 | 75 | 48 | 99 | 77 | 60 |
| Loss tangent peak temperature (°C) | -25.4 | -17.7 | -14.2 | -4.5 | 4.6 | -15.9 | -39 | -36 | -38.8 | -30.3 | -3 |
| Loss tangent peak height (-) | 1.01 | 1.49 | 0.69 | 0.6 | 0.49 | 0.99 | 1.1 | 1.64 | 0.25 | 0.38 | 1.5 |
| Weather resistance (stickiness) | O | O | O | O | O | O | O | O | O | O | Δ |

*Hydrogenated styrene-isoprene-styrene block copolymer

Proportion of 1,2- and 3,4-configurations in total

isoprene configuration of isoprene block: 50%

ST content: 20%

Molecular weight: 116,000

EP 1 605 002 A1

(8) Foam molding

(Examples 27 to 31, Comparative Example 23)

According to the formulations shown in Table 8, compositions for foamed material were obtained at 125°C using two open rolls. Then, each composition was crosslinked at 165°C for 12 minutes using a mold having a thickness of 12 mm. Each crosslinked material was exposed to the atmosphere to obtain foamed materials. The surface layer of each foamed material was removed by scooping, to obtain a foamed material sample of given thickness, having no skin layer. Each foamed material sample was evaluated for the properties shown in Table 8. The results are shown in Table 8. Incidentally, the "density (g/cm$^3$)", "hardness (Type-C) (°)" and "resilience(impact resilience) (%)" shown in Table 8 were measured according to the following methods.

[Density]

Measured at 23°C by an in-water replacement method (buoyancy method).

[Hardness (Type-C)]

Measured using a hardness tester (Type-C) for sponge, produced by Kobunshi Keiki Co.

[Resilience]

Measured at a sample thickness of 12.6 to 12.8 mm according to JIS K 6255. The value obtained at the fourth striking was taken as resilience.

| | Exam.27 | Exam.28 | Exam.29 | Exam.30 | Exam.31 | Comp. Exam23 |
|---|---|---|---|---|---|---|
| [Formulation] | | | | | | |
| Kind of hydrogenated diene-based copolymer | H-1 | H-2 | H-3 | H-5 | H-5 | R-9 |
| Content of hydrogenated diene-based copolymer(parts by mass) | 100 | 100 | 100 | 100 | 90 | 100 |
| Low-density polyethylene* | | | | | 10 | |
| Stearic acid | 1.5 | 1.5 | 1.5 | 1.5 | 1.5 | 1.5 |
| Zinc oxide | 5 | 5 | 5 | 5 | 5 | 5 |
| Calcium carbonate | 2 | 2 | 2 | 2 | 2 | 2 |
| Dicumyl peroxide (40% product) | 3.75 | 3.75 | 3.75 | 3.75 | 3.75 | 3.75 |
| Foaming agent | 2.5 | 2.5 | 2.5 | 2.5 | 2.5 | 2.5 |
| Crosslinking temperature (°C) | 165 | 165 | 165 | 165 | 165 | 165 |
| Crosslinking time (min) | 12 | 12 | 12 | 12 | 12 | 12 |
| [Properties of shaped article] | | | | | | |
| Density (g/cm$^3$) | 0.32 | 0.31 | 0.31 | 0.31 | 0.3 | 0.32 |
| Hardness (Type-C) (degree) | 26 | 26 | 30 | 32 | 32 | 26 |
| Resilience (%) | 48 | 35 | 30 | 19 | 21 | 70 |

*YF 30 (trade name), a product of Nippon Polychem,
    MFR: 1.1 g/10 min (190°C, 2.16 kg)

EP 1 605 002 A1

Table 8

(9) Evaluation

As is clear from Tables 1 to 6, the hydrogenated diene-based copolymers of the present invention were superior in flexibility and mechanical properties; the compositions (polymer compositions) thereof could give fine powders; and the shaped articles produced from the powders by powder molding and the sheet-like shaped articles produced from the compositions were highly flexible and superior in mechanical properties, appearance, mar resistance, heat resistance and weather resistance. In contrast, when there was used a hydrogenated diene-based copolymer whose block (B) contained no vinyl aromatic compound (Comparative Example 1), no fine powder was obtainable; and the sheet-like shaped article produced by using this hydrogenated diene-based copolymer was inferior in flexibility (hardness), appearance and mar resistance.

The sheet-like shaped article of Comparative Example 9 was inferior in mechanical strength, flexibility (hardness) and mar resistance. The sheet-like shaped articles of Comparative Example 2 and Comparative Example 10, each obtained by using a hydrogenated diene-based copolymer which was more than 80% in BS proportion and less than 10% in LS proportion, were insufficient in mechanical strength and mar resistance. When there was used a hydrogenated diene-based copolymer of less than 10% in BS proportion and more than 80% in LS proportion (Comparative Example 3) and also when there was used a hydrogenated diene-based copolymer of less than 30% in vinyl configuration content (Comparative Example 4), no fine powder was obtainable and the sheet-like shaped articles produced by using these hydrogenated diene-based copolymers were inferior in mechanical strength, flexibility, appearance and mar resistance. The sheet-like shaped articles of Comparative Example 11 and Comparative Example 12 were insufficient in mechanical strength, flexibility and mar resistance.

The sheet-like shaped article of Comparative Example 5 using a hydrogenated diene-based copolymer of more than 75% in vinyl configuration content was insufficient in heat resistance and mar resistance, and the sheet-like shaped article of Comparative Example 13 also obtained by using a hydrogenated diene-based copolymer of more than 75% in vinyl configuration content was insufficient in mar resistance. The sheet-like shaped articles of Comparative Example 6 and Comparative Example 14 each obtained by using a hydrogenated diene-based copolymer deviating from the range of the present invention in total bound styrene content were each inferior in mar resistance. Comparative Example 7 containing a conjugated diene compound in the block (A) was inferior in heat resistance and mar resistance, and Comparative Example 15 also containing a conjugated diene compound in the block (A) was inferior in mar resistance. The sheet-like shaped articles of Comparative Example 8 and Comparative Example 16, each obtained by using TPO were inferior in mar resistance. The sheet-like shaped article of Comparative Example 17 obtained by using a hydrogenated diene-based copolymer of less than 30% in vinyl configuration content was inferior in flexibility.

Also, as is clear from Table 7, the hydrogenated diene-based copolymers of the present invention were higher than Comparative Examples in loss tangent peak temperature and were superior in vibration-damping property at temperatures closer to normal temperature. In Examples 21 to 26 shown in Table 7, there was no stickiness in weathering test; in contrast, in Comparative Example 22, the loss tangent peak temperature was high but stickiness appeared in weathering test. Further, as is clear from Table 8, the foamed materials of Examples 27 to 31 according to the present invention, as compared with that of Comparative Example 23 having about the same density and about the same hardness, were low in resilience and superior in vibration-damping property and impact absorption.

2. Soft films or sheets

(1) Production examples of hydrogenated diene-based copolymers

[Production Example 3: Production of hydrogenated diene-based copolymer (H-17)]

Into an autoclave having an internal volume of 50 liters were fed 25 kg of deaerated and dehydrated cyclohexane and 200 g of styrene. Thereto were added 750 g of tetrahydrofuran and 2.8 g of n-butyllithium. Adiabatic polymerization from 50°C was conducted for 20 minutes. The reaction mixture was kept at 20°C, after which 3,700 g of 1,3-butadiene and 1,000 g of styrene were added, followed by adiabatic polymerization. After the conversion became roughly 100%, 100 g of styrene was added and polymerization was conducted.

After the completion of the polymerization, hydrogen gas was supplied and hydrogenation was conducted using a titanocene compound described in JP-A-2000-37632.

The hydrogenated diene-based copolymer (H-17) obtained had a hydrogenation ratio of 98%, a weight-average molecular weight of 260,000, a bound styrene content of 26% by mass, a BS proportion of 77%, a LS proportion of 21%, a vinyl configuration content in block B, of 73%, and a MFR of 10 g/10 min. Incidentally, the results of property measurements of the hydrogenated diene-based copolymer are shown in Table 9.

In a similar manner but by changing the amounts of monomers, the amount of tetrahydrofuran added, the amount of catalyst, the polymerization temperature, the polymerization time, etc., there were produced hydrogenated diene-based copolymers H-18 to H-20 and R-11 to R-12, all shown in Table 9. The results of property measurements of these hydrogenated diene-based copolymers are shown in Table 9.

T a b l e   9

| Kind of hydrogenated diene-based copolymer | H-17 | H-18 | H-19 | H-20 | R-11 | R-12 |
|---|---|---|---|---|---|---|
| Structure | A1B1A2 | A1B1A2 | A1B1A2 | A1B1A2 | A1B1A2 | A1B1A2 |
| Mass fraction of block (A1) (%) | 4 | 4 | 4 | 7 | 4 | 7 |
| ST content of block (A1) (mass %) | 100 | 100 | 100 | 100 | 100 | 100 |
| Mass fraction of block (A2) (%) | 2 | 2 | 2 | 7 | 2 | 7 |
| ST content of block (A2) (mass %) | 100 | 100 | 100 | 100 | 100 | 100 |
| Mass fraction of block (B1) (%) | 94 | 94 | 94 | 86 | 94 | 86 |
| Total bound styrene content (mass %) | 26 | 26 | 36 | 34 | 6 | 34 |
| BS proportion (%) | 77 | 77 | 83 | 59 | 0 | 59 |
| LS proportion (%) | 21 | 21 | 16 | 39 | 99 | 38 |
| Vinyl configuration content (%) | 73 | 73 | 69 | 72 | 74 | 30 |
| Hydrogenation ratio (%) | 98 | 98 | 98 | 98 | 98 | 98 |
| MFR (g/10 min) | 10 | 3.5 | 9.8 | 11 | 9.5 | 10 |
| Weight-average molecular weight (×10,000) | 26 | 30 | 27 | 14 | 24 | 11 |

(2) Films or sheets

(Examples 32 to 37, Comparative Examples 24 and 25)

Each of the hydrogenated diene-based copolymers H-17 to H-20, R-11 and R-12 and a polypropylene [F8577 (trade name) produced by Chisso Petrochemical Corporation, MFR = 8 g/10 min] were blended at the proportions shown in Table 10, using an extruder (outlet diameter = 50 mm, L/D = 36). The pellets obtained were kneaded at 180 to 240°C. The kneaded material was fed into a T-die and extruded at a die temperature of 210 to 230°C (the cooling roll was set at 40°C), to produce films each of 100 μm in thickness, of Examples 32 to 37 and Comparative Examples 24 and 25.

(Examples 38 and 39 and Comparative Example 26)

Each of the hydrogenated diene-based copolymers H-18 and R-11 and a polypropylene [F8577 (trade name) produced by Chisso Petrochemical Corporation, MFR = 8 g/10 min] were kneaded at 180 to 240°C at the proportions shown in Table 10, using an extruder (outlet diameter = 50 mm, L/D = 36). The kneaded material was fed into a T-die and extruded at a die temperature of 210 to 230°C (the cooling roll was set at 40°C), to produce sheets each of 2 mm in thickness, of Examples 38 and 39 and Comparative Example 26.

The films or sheets of Examples 32 to 39 and Comparative Examples 24 to 26 were measured for tensile break strength (MPa). The results of measurements are shown in Table 10. Also, these films or sheets were evaluated for fretting resistance and breakage resistance. The results are shown in Table 10. Incidentally, the measurement method for tensile break strength and the evaluation methods for fretting resistance and breakage resistance are shown below.

[Tensile break strength]

A sample was punched in a MD (a take-off direction) using a blade for punching-out of a No. 5 dumbbell described in JIS K 7127, and measurement was made at 500 mm/min.

[Fretting resistance]

The surface of a film or sheet was rubbed by allowing a shirting No. 3 to shuttle on the surface 100 times at a load of 500 g, using a Gakushin type fastness rubbing tester (produced by Yasuda Seiki Seisakusho K.K.) described in JIS L 0801. Then, the surface of the film or sheet was observed visually and three-level evaluation was made based on the following criterion.

○: There is no mar.
Δ: There is substantially no mar.
X: There is mar.

[Breakage resistance]

The easiness of hole making when a hole was made in a sheet manually using a cork porer (outer diameter = 8 mm, inner diameter = 6 mm), was evaluated based on the following criterion.

○: The cork porer penetrated into the sheet easily and hole formation was easy.
X: The cork porer did not penetrate into the sheet easily and hole formation was difficult.

Ｔａｂｌｅ　１０

| | Exam.32 | Exam.33 | Exam.34 | Exam.35 | Exam.36 | Exam.37 | Comp. Exam.24 | Comp. Exam.25 | Exam.38 | Exam.39 | Comp. Exam.26 |
|---|---|---|---|---|---|---|---|---|---|---|---|
| Kind of hydrogenated diene-based copolymer | H-17 | H-18 | H-19 | H-20 | H-18 | H-18 | R-11 | R-12 | H-18 | H-18 | R-11 |
| Compounding ratio(PP/hydrogenated diene-based copolymer) | 70/30 | 70/30 | 70/30 | 70/30 | 85/15 | 50/50 | 70/30 | 70/30 | 30/70 | 30/70 | 30/70 |
| Film thickness ($\mu$m) | 100 | 100 | 100 | 100 | 100 | 100 | 100 | 100 | — | — | — |
| Sheet thickness (mm) | — | — | — | — | — | — | — | — | 2 | 2 | 2 |
| Tensile break strength (MPa) | 7.8 | 8 | 8.3 | 9 | 8.1 | 7.8 | 5.2 | 7.9 | 21 | 22 | 8 |
| Fretting resistance | O | O | O | O | O | O | × | × | O | O | × |
| Breakage resistance | — | — | — | — | — | — | — | — | O | O | × |

(3) Evaluation

As is clear from Table 10, the films of Examples 32 to 37, as compared with those of Comparative Examples 24 and 25, were superior in fretting resistance. The sheets of Examples 38 and 39, as compared with that of Comparative Example 26, were superior in fretting resistance and breakage resistance. From these results, the superior properties of the soft films and sheets of the present invention were confirmed. 3. Tubes

(1) Production Examples of hydrogenated diene-based Copolymers

[Production Example 4: Production of hydrogenated diene-based copolymer (H-21)]

Into an autoclave having an internal volume of 50 liters were fed 25 kg of deaerated and dehydrated cyclohexane and 200 g of styrene. Thereto were added 750 g of tetrahydrofuran and 2.8 g of n-butyllithium. Adiabatic polymerization from 50°C was conducted for 20 minutes. The reaction mixture was kept at 20°C, after which 3,700 g of 1,3-butadiene and 1,000 g of styrene were added, followed by adiabatic polymerization. After the conversion became roughly 100%, 100 g of styrene was added and polymerization was conducted.
After the completion of the polymerization, hydrogen gas was supplied and hydrogenation was conducted using a titanocene compound described in JP-A-2000-37632.
The hydrogenated diene-based copolymer (H-21) obtained had a hydrogenation ratio of 98%, a weight-average molecular weight of 260,000, a bound styrene content of 26% by mass, a BS proportion of 77%, a LS proportion of 21%, a vinyl configuration content in block B, of 73%, and a MFR of 10 g/10 min. Incidentally, the results of property measurements of the hydrogenated diene-based copolymer are shown in Table 11.
In a similar manner but by changing the amounts of monomers, the amount of tetrahydrofuran added, the amount of catalyst, the polymerization temperature, the polymerization time, etc., there were produced hydrogenated diene-based copolymers H-22 to H-24 and R-13 to R-15, all shown in Table 11. The results of property measurements of these hydrogenated diene-based copolymers are shown in Table 11.

T a b l e   1 1

| Kind of hydrogenated diene-based copolymer | H-21 | H-22 | H-23 | H-24 | R-13 | R-14 | R-15 |
|---|---|---|---|---|---|---|---|
| Structure | A1B1A2 | A1B1A2 | A1B1A2 | A1B1A2 | A1B1A2 | A1B1A2 | A1B1A2 |
| Mass fraction of block (A1) (%) | 4 | 4 | 7 | 9 | 9 | 20 | 7 |
| ST content of block (A1) (mass %) | 100 | 100 | 100 | 100 | 100 | 100 | 100 |
| Mass fraction of block (A2) (%) | 2 | 2 | 7 | 6 | 6 | 20 | 7 |
| ST content of block (A2) (mass %) | 100 | 100 | 100 | 100 | 100 | 100 | 100 |
| Mass fraction of block (B1) (%) | 94 | 94 | 86 | 85 | 85 | 60 | 86 |
| Total bound styrene content (mass %) | 26 | 26 | 34 | 35 | 15 | 44 | 34 |
| BS proportion (%) | 77 | 77 | 59 | 57 | 0 | 9 | 59 |
| LS proportion (%) | 21 | 21 | 39 | 42 | 99 | 86 | 38 |
| Vinyl configuration content (%) | 73 | 73 | 72 | 68 | 74 | 74 | 28 |
| Hydrogenation ratio (%) | 98 | 98 | 98 | 98 | 98 | 98 | 98 |
| MFR (g/10 min) | 10 | 3.5 | 11 | 6 | 8 | 2.5 | 10 |
| Weight-average molecular weight (×10,000) | 26 | 30 | 14 | 16 | 13 | 9 | 11 |

(2) Tubes

(Example 40)

There were compounded 70 parts by mass of a hydrogenated diene-based copolymer (H-21), 30 parts by mass of a polypropylene [XF 1800 (trade name) produced by Chisso Petrochemical Corporation, MFR = 1.5 g/10 min] and 0.05 part by mass of erucic acid amide [Neutron S (trade name) produced by Nihon Seika Co.]. The compound was extruded from a die for tube at an extrusion temperature of 210°C using a 40-mm single screw extruder produced by Ikegai Co. The extrudate was taken off at a speed of about 5 m/min to produce a tube of Example 40 having an outer diameter of 5.5 mm and an inner diameter of 4 mm.

(Examples 41 to 45, Comparative Examples 27 to 29)

Tubes of Examples 41 to 45 and Comparative Examples 27 to 29 were produced in the same manner as in Example 40 except that there were used the hydrogenated diene-based copolymers and compounding ratios of hydrogenated diene-based copolymer/polypropylene, shown in Table 12.

The tubes of Examples 1 to 7 and Comparative Examples 1 to 3 were measured for tensile break strength (MPa) and hardness (°). The results of the measurements are shown in Table 12. Also, these tubes were evaluated for kinking and fretting resistance. The results are shown in Table 12. Incidentally, the measurement methods for tensile break strength and hardness and the evaluation methods for kinking and fretting resistance are shown below.

[Tensile break strength]

A tube was set between chucks having a gap of 5 cm between them. Measurement was made at a pulling speed of 500 mm/min.

[Kinking]

The two ends of a 150-mm (length) tube were fitted to the jigs of a tensile tester so that the distance between the jigs became 100 mm. In this state, the tube was compressed at a compression speed of 100 mm/min and the appearance of kink was observed visually. Three-level evaluation was made based on the following criterion.

○: Very good (kink appeared at a zig-to-zig distance of less than 3 cm.)
Δ: Good (kink appeared at a zig-to-zig distance of 3 cm to less than 4 cm.)
X: Bad ((kink appeared at a zig-to-zig distance of more than 4 cm.)

[Hardness]

A pressed sheet of 6.3 mm in thickness was produced by hot pressing and measured for hardness according to JIS K 6253.

[Fretting resistance]

The surface of three tubes fixed in an adjacent state was rubbed by allowing a shirting No. 3 to shuttle on the surface 100 times at a load of 500 g, using a Gakushin type fastness rubbing tester (produced by Yasuda Seiki Seisakusho K.K.) described in JIS L 0801. Then, the surface of the sample was observed visually and three-level evaluation was made based on the following criterion.

○: There is no mar.
X: There is mar.

T a b l e  1 2

| | Exam.40 | Exam.41 | Exam.42 | Exam.43 | Exam.44 | Exam.45 | Comp. Exam.27 | Comp. Exam.28 | Comp. Exam.29 |
|---|---|---|---|---|---|---|---|---|---|
| Kind of hydrogenated diene-based copolymer | H-21 | H-22 | H-23 | H-24 | H-22 | H-22 | R-13 | R-14 | R-15 |
| Compounding ratio(hydrogenated diene-based copolymer/PP) | 70/30 | 70/30 | 70/30 | 70/30 | 80/20 | 60/40 | 70/30 | 70/30 | 70/30 |
| Erucic amide compounded (parts by mass) | 0.05 | 0.05 | 0.05 | 0.05 | 0.05 | 0.05 | 0.05 | 0.05 | 0.05 |
| Tensile break strength (MPa) | 17 | 17 | 23 | 23 | 14 | 22 | 11 | 18 | 24 |
| Kinking | ○ | ○ | ○ | ○ | ○ | △ | × | × | × |
| Hardness (degree) | 68 | 68 | 73 | 74 | 60 | 85 | 72 | 90 | 83 |
| Fretting resistance | ○ | ○ | ○ | ○ | ○ | ○ | × | × | × |

EP 1 605 002 A1

(3) Evaluation

As is clear from Table 12, the tubes of Examples 40 to 45, as compared with those of Comparative Examples 27 to 29, were superior in kinking and fretting resistance. Although part of the tubes of Comparative Examples 27 to 29 was high in tensile break strength and hardness, the tubes of Examples 40 to 45 were very good in balance of these properties and superior in kinking and fretting resistance. From these results, the superior properties of the tubes of the present invention could be confirmed.

4. Multilayered laminates

(1) Production Examples of hydrogenated diene-based copolymers

[Production Example 5: Production of hydrogenated diene-based copolymer (H-25)]

Into an autoclave having an internal volume of 50 liters were fed 25 kg of deaerated and dehydrated cyclohexane and 200 g of styrene. Thereto were added 750 g of tetrahydrofuran and 2.8 g of n-butyllithium. Adiabatic polymerization from 50°C was conducted for 20 minutes. The reaction mixture was kept at 20°C, after which 3,700 g of 1,3-butadiene and 1,000 g of styrene were added, followed by adiabatic polymerization. After the conversion became roughly 100%, 100 g of styrene was added and polymerization was conducted.

After the completion of the polymerization, hydrogen gas was supplied and hydrogenation was conducted using a titanocene compound described in JP-A-2000-37632.

The hydrogenated diene-based copolymer (H-25) obtained had a hydrogenation ratio of 98%, a weight-average molecular weight of 260,000, a bound styrene content of 26% by mass, a BS proportion of 77%, a LS proportion of 21%, a vinyl configuration content in block B, of 73%, and a MFR of 10 g/10 min. Incidentally, the results of property measurements of the hydrogenated diene-based copolymer are shown in Table 13.

In a similar manner but by changing the amounts of monomers, the amount of tetrahydrofuran added, the amount of catalyst, the polymerization temperature, the polymerization time, etc., there were produced hydrogenated diene-based copolymers H-26 to H-28 and R-16 to R-17, all shown in Table 13. The results of property measurements of these hydrogenated diene-based copolymers are shown in Table 13.

Table 13

| Kind of hydrogenated diene-based copolymer | H-25 | H-26 | H-27 | H-28 | R-16 | R-17 |
|---|---|---|---|---|---|---|
| Structure | A1B1A2 | A1B1A2 | A1B1A2 | A1B1A2 | A1B1A2 | A1B1A2 |
| Mass fraction of block (A1) (%) | 4 | 4 | 4 | 7 | 4 | 7 |
| ST content of block (A1) (mass %) | 100 | 100 | 100 | 100 | 100 | 100 |
| Mass fraction of block (A2) (%) | 2 | 2 | 2 | 7 | 2 | 7 |
| ST content of block (A2) (mass %) | 100 | 100 | 100 | 100 | 100 | 100 |
| Mass fraction of block (B1) (%) | 94 | 94 | 94 | 86 | 94 | 86 |
| Total bound styrene content (mass %) | 26 | 26 | 36 | 34 | 6 | 34 |
| BS proportion (%) | 77 | 77 | 83 | 59 | 0 | 59 |
| LS proportion (%) | 21 | 21 | 16 | 39 | 99 | 38 |
| Vinyl configuration content (%) | 73 | 73 | 69 | 72 | 74 | 30 |
| Hydrogenation ratio (%) | 98 | 98 | 98 | 98 | 98 | 98 |
| MFR (g/10 min) | 10 | 3.5 | 9.8 | 11 | 9.5 | 10 |
| Weight-average molecular weight (×10,000) | 26 | 30 | 27 | 14 | 24 | 11 |

(2) Multilayered laminates

(Example 46)

There were compounded 85 parts by mass of an olefin-based resin (c) [component (c), random PP, F 8577 (trade name) produced by Chisso Corporation, MFR = 8 g/10 min] and 15 parts by mass of the above-mentioned hydrogenated diene-based copolymer [component (a), H-25]. The compound was melt-kneaded using a double screw extruder [PCM-45 (trade name) produced by Ikegai Co.] and then pelletized to obtain pellets which were a polymer composition for surface layer. In a similar manner, 60 parts by mass of the component (c) and 40 parts by mass of a hydrogenated diene-based copolymer (d) [component (d), DYNARON 1320 P (trade name) produced by JSR Corporation, MFR = 3.5 g/10 min, styrene content = 10%] were melt-kneaded and then pelletized to obtain pellets which were a resin composition for base material layer. These compositions were fed into an extruder (a product of Modern Machinery Co., 65 mm in diameter for base material layer and 50 mm in diameter for surface layer) provided with a T-die with a feed block and capable of forming a three-layer film, and were subjected to three-layer co-extrusion at an extrusion temperature of 240°C at a cooling roll temperature of 40°C to produce a sheet-like three-layer laminate (Example 46) having a thickness of 100 μm and a surface layer/base material layer/surface layer thickness ratio of 1/4/1.

(Examples 47 to 53, Comparative Examples 30 to 33)

Sheet-like three-layer laminates (Examples 47 to 53, Comparative Examples 30 to 33) were produced in the same manner as in Example 46 except that there were used the formulations of the polymer compositions for surface layers, the formulations of the resin compositions for base material layers, the thicknesses of the laminates, and the thickness ratios of the individual layers of the laminates, all shown in Table 14.
The three-layer laminates (sheets) of Examples 46 to 53 and Comparative Examples 30 to 33 were measured for Young's modulus (MPa) and tensile break strength (MPa). The results of measurements are shown in Table 14. Also, the sheets were evaluated for fretting resistance and breaking-through resistance. The results are shown in Table 14. Incidentally, the measurement methods for Young's modulus and tensile break strength and the evaluation methods for fretting resistance and breaking-through resistance are shown below.

[Young's modulus]

Initial Young's modulus was measured when a rectangular test piece of 1 cm in width was pulled at a pulling rate of 5 mm. Incidentally, a smaller Young's modulus obtained can be interpreted to give superior flexibility.

[Tensile break strength]

A sample was punched in a MD (a take-off direction) using a blade for punching-out of a No. 5 dumbbell described in JIS K 7127, and measurement was made at 500 mm/min.

[Fretting resistance]

The surface (surface layer) of a sheet was rubbed by allowing a shirting No. 3 to shuttle on the surface 100 times at a load of 500 g, using a Gakushin type fastness rubbing tester (produced by Yasuda Seiki Seisakusho K.K.) described in JIS L 0801. Then, the surface of the sheet was observed visually and two-level evaluation was made based on the following criterion.

○: There is no mar.
X: There is mar.

[Breaking-through resistance]

The easiness of hole making when a hole was made in a sheet manually using a cork porer (outer diameter = 8 mm, inner diameter = 6 mm), was evaluated in two levels based on the following criterion.

○: The cork porer did not penetrate into the sheet easily and hole formation was difficult.
X: The cork porer penetrated into the sheet easily and hole formation was easy.

Ｔａｂｌｅ　１４

| | Exam.46 | Exam.47 | Exam.48 | Exam.49 | Exam.50 | Exam.51 | Exam.52 | Exam.53 |
|---|---|---|---|---|---|---|---|---|
| Formulation | | | | | | | | |
| Surface layer | | | | | | | | |
| Content of component (c)*1 (mass %) | 85 | 85 | 85 | 85 | 70 | 60 | 70 | 70 |
| Kind of hydrogenated diene-based copolymer | H-25 | H-26 | H-27 | H-28 | H-26 | H-26 | H-26 | H-26 |
| Content of hydrogenated diene-based Copolymer (mass %) | 15 | 15 | 15 | 15 | 30 | 40 | 30 | 30 |
| Base material layer | | | | | | | | |
| Content of component (c)*1 (mass %) | 60 | 60 | 60 | 60 | 50 | 50 | 50 | 50 |
| Content of component (d)*2 (mass %) | 40 | 40 | 40 | 40 | 50 | 50 | 50 | 50 |
| Thickness ($\mu$ m) | 100 | 100 | 100 | 100 | 100 | 100 | 1500 | 1500 |
| Thickness ratio | 1/4/1 | 1/4/1 | 1/4/1 | 1/4/1 | 1/4/1 | 1/4/1 | 1/4/1 | 1/6/1 |
| Properties | | | | | | | | |
| Young's modulus (MPa) | 250 | 260 | 300 | 320 | 180 | 150 | 100 | 90 |
| Tensile break strength (Mpa) | 7 | 7.5 | 8.1 | 8 | 7.4 | 7 | 13 | 11 |
| Fretting resistance | O | O | O | O | O | O | O | O |
| Breaking-through resistance | — | — | — | — | — | — | O | O |

*1: A random PP produced by Chisso Corporation (trade name: F8577, MFR = 8)

*2: A hydrogenated diene-based polymder produced by JSR(trade name: Dynalon 1320P, MFR = 3.5, styrene content =10%)

EP 1 605 002 A1

T a b l e   1 4 — c o n t i n u e d

| Formulation | Comp. Exam.30 | Comp. Exam.31 | Comp. Exam.32 | Comp. Exam.33 |
|---|---|---|---|---|
| Surface layer | | | | |
| Content of component (c)*1 (mass %) | 85 | 85 | 100 | 70 |
| Kind of hydrogenated diene-based copolymer | R-16 | R-17 | | R-16 |
| Content of hydrogenated diene-based Copolymer (mass %) | 15 | 15 | | 30 |
| Base material layer | | | | |
| Content of component (c)*1 (mass %) | 60 | 60 | 100 | 50 |
| Content of component (d)*2 (mass %) | 40 | 40 | | 50 |
| Thickness ($\mu$m) | 100 | 100 | 100 | 1500 |
| Thickness ratio | 1/4/1 | 1/4/1 | 1/4/1 | 1/4/1 |
| Properties | | | | |
| Young's modulus (MPa) | 230 | 350 | 570 | 98 |
| Tensile break strength (Mpa) | 6 | 7.4 | 19 | 11 |
| Fretting resistance | × | × | × | × |
| Breaking-through resistance | — | — | — | × |

*1: A random PP produced by Chisso Corporation (trade name: F8577, MFR = 8)

*2: A hydrogenated diene-based polymder produced by JSR(trade name: Dynalon 1320P, MFR = 3.5, styrene content =10%)

As is clear from Table 14, the sheets of Examples 46 to 53 were superior in flexibility, high in tensile break strength and superior in fretting resistance. In contrast, the sheets of Comparative Examples 30 and 31 were insufficient in fretting resistance although they were not much inferior to the sheets of the Examples in tensile break strength.

When the sheet of Example 52 was compared with that of Comparative Example 33 in breaking-through resistance, the former sheet (multilayered laminate) of the present invention, having the same thickness as the latter sheet, was superior in breaking-through resistance.

5. Medical shaped articles

(1) Production Examples of hydrogenated diene-based copolymers

[Production Example 6: Production of hydrogenated diene-based copolymer (H-29)]

Into an autoclave having an internal volume of 50 liters were fed 25 kg of deaerated and dehydrated cyclohexane and 200 g of styrene. Thereto were added 750 g of tetrahydrofuran and 2.8 g of n-butyllithium. Adiabatic polymerization from 50°C was conducted for 20 minutes. The reaction mixture was kept at 20°C, after which 3,700 g of 1,3-butadiene and 1,000 g of styrene were added, followed by adiabatic polymerization. After the conversion became roughly 100%, 100 g of styrene was added and polymerization was conducted.

After the completion of the polymerization, hydrogen gas was supplied and hydrogenation was conducted using a titanocene compound described in JP-A-2000-37632.

The hydrogenated diene-based copolymer (H-29) obtained had a hydrogenation ratio of 98%, a weight-average molecular weight of 260,000, a bound styrene content of 26% by mass, a BS proportion of 77%, a LS proportion of 21%, a vinyl configuration content in block B, of 73%, and a MFR of 10 g/10 min. Incidentally, the results of property measurements of the hydrogenated diene-based copolymer are shown in Table 15.

In a similar manner but by changing the amounts of monomers, the amount of tetrahydrofuran added, the amount of catalyst, the polymerization temperature, the polymerization time, etc., there were produced hydrogenated diene-based copolymers H-30 to H-31 and R-18 to R-19, all shown in Table 15. The results of property measurements of these hydrogenated diene-based copolymers are shown in Table 15.

T a b l e   1 5

| Kind of hydrogenated diene-based copolymer | H-29 | H-30 | H-31 | R-18 | R-19 |
|---|---|---|---|---|---|
| Structure | A1B1A2 | A1B1A2 | A1B1A2 | A1B1A2 | A1B1A2 |
| Mass fraction of block (A1) (%) | 4 | 4 | 9 | 9 | 9 |
| ST content of block (A1) (mass %) | 100 | 100 | 100 | 100 | 100 |
| Mass fraction of block (A2) (%) | 2 | 2 | 6 | 6 | 6 |
| ST content of block (A2) (mass %) | 100 | 100 | 100 | 100 | 100 |
| Mass fraction of block (B1) (%) | 94 | 94 | 85 | 85 | 85 |
| Total bound styrene content (mass %) | 26 | 26 | 35 | 15 | 35 |
| BS proportion (%) | 77 | 77 | 57 | 0 | 57 |
| LS proportion (%) | 21 | 21 | 42 | 99 | 40 |
| Vinyl configuration content (%) | 73 | 73 | 68 | 74 | 28 |
| Hydrogenation ratio (%) | 98 | 98 | 98 | 98 | 98 |
| MFR (g/10 min) | 10 | 3.5 | 6 | 8 | 10 |
| Weight-average molecular weight (x10,000) | 26 | 30 | 16 | 13 | 11 |

(2) Medical shaped articles [(three-different-layer laminates (sheets)]

(Example 54)

There were compounded 70 parts by mass of a polyolefin type resin [random PP, F 8577 (trade name) produced by Chisso Corporation, MFR = 8 g/10 min] and 30 parts by mass of the above-mentioned hydrogenated diene-based copolymer (H-29). The compound was melt-kneaded using a double screw extruder [PCM-45 (trade name) produced by Ikegai Co.] and then pelletized to obtain pellets which were a polymer composition for surface layer. In a similar manner, 50 parts by mass of the above polyolefin type resin and 50 parts by mass of a hydrogenated diene-based copolymer [DYNARON 1320 P (trade name) produced by JSR Corporation, MFR = 3.5 g/10 min, styrene content = 10%] were melt-kneaded and then pelletized to obtain pellets which were a resin composition for base material layer. These compositions and the above polyolefin type resin were fed into an extruder (a product of Modern Machinery Co., 65 mm in diameter for base material layer and 50 mm in diameter for surface layer) provided with a T-die with a feed block and capable of forming a three-different-layer film, and were subjected to three-layer co-extrusion at an extrusion temperature of 240°C at a cooling roll temperature of 40°C to produce a sheet-like three-different-layer laminate (Example 54) having a thickness of 200 μm and a surface layer/base material layer/surface layer thickness ratio of 1/4/1.

(Examples 55 and 56, Comparative Examples 34 to 36)

Sheet-like three-different-layer laminates (Examples 55 and 56, Comparative Examples 34 to 36) were produced in the same manner as in Example 54 except that there were used the formulations of the polymer compositions for surface layers and the formulations of the resin compositions for base material layers, all shown in Table 2.
The three-different-layer laminates (sheets) of Examples 54 to 56 and Comparative Examples 34 to 36 were measured for Young's modulus (MPa) and tensile break strength (MPa). The results of measurements are shown in Table 16. Also, the sheets were evaluated for fretting resistance and breaking-through resistance. The results are shown in Table 16. Incidentally, the measurement methods for Young's modulus and tensile break strength and the evaluation methods for fretting resistance, breaking-through resistance and steam sterilization resistance are shown below.

[Young's modulus]

Initial Young's modulus was measured when a rectangular test piece of 1 cm in width was pulled at a pulling rate of 5 mm. Incidentally, a smaller Young's modulus obtained can be interpreted to give superior flexibility.

[Tensile break strength]

A sample was punched in a MD (a take-off direction) using a blade for punching-out of a No. 5 dumbbell described in JIS K 7127, and measurement was made at 500 mm/min.

[Fretting resistance]

The surface (surface layer) of a sheet was rubbed by allowing a shirting No. 3 to shuttle on the surface 100 times at a load of 500 g, using a Gakushin type fastness rubbing tester (produced by Yasuda Seiki) described in JIS L 0801. Then, the surface of the sheet was observed visually and two-level evaluation was made based on the following criterion.

○: There is no mar.
X: There is mar.

[Breaking-through resistance]

The easiness of hole making when a hole was made in a sheet manually using a cork porer (outer diameter = 8 mm, inner diameter = 6 mm), was evaluated based on the following criterion.

○: The cork porer did not penetrate into the sheet easily and hole formation was difficult.
X: The cork porer penetrated into the sheet easily and hole formation was easy.

[Steam sterilization resistance]

A sheet was treated in an autoclave of 121°C for 30 minutes, then cooled to room temperature, and taken out. The resulting sheet was evaluated based on the following criterion.

○: There was no deformation.
X: There was deformation.

T a b l e   1 6

61

| | Exam.54 | Exam.55 | Exam.56 | Comp. Exam.34 | Comp. Exam.35 | Comp. Exam.36 |
|---|---|---|---|---|---|---|
| Formulation | | | | | | |
| Surface layer (outer layer) | | | | | | |
|   Content of polyolefin resin*1 (mass %) | 70 | 70 | 70 | 70 | 70 | 100 |
|   Kind of hydrogenated diene–based copolymer | H–29 | H–30 | H–31 | R–18 | R–19 | – |
|   Content of hydrogenated diene–based copolymer (mass %) | 30 | 30 | 30 | 30 | 30 | – |
| Base material layer | | | | | | |
|   Content of polyolefin resin*1 (mass %) | 50 | 50 | 50 | 50 | 50 | 100 |
|   Content of hydrogenated diene–based copolymer*2 (mass %) | 50 | 50 | 50 | 50 | 50 | – |
| Surface layer (inner layer) | | | | | | |
|   Content of polyolefin resin *1 (mass %) | 100 | 100 | 100 | 100 | 100 | 100 |
| Thickness ($\mu$ m) | 200 | 200 | 200 | 200 | 200 | 200 |
| Thickness ratio | 1/4/1 | 1/4/1 | 1/4/1 | 1/4/1 | 1/4/1 | 1/4/1 |
| Properties | | | | | | |
|   Young's modulus (MPa) | 260 | 270 | 310 | 260 | 340 | 550 |
|   Tensile break strength (MPa) | 7 | 7.2 | 8 | 5.9 | 7.5 | 13 |
|   Fretting resistance | ○ | ○ | ○ | × | × | × |
|   Breaking–through resistance | ○ | ○ | ○ | × | × | × |
|   Steam sterilization resistance | ○ | ○ | ○ | ○ | ○ | ○ |

*1: A random PP produced by Chisso Corporation (trade name: F8577, MFR = 8)

*2: A hydrogenated diene–based polymder produced by JSR (trade name: Dynalon 1320P, MFR = 3.5, styrene content =10%)

EP 1 605 002 A1

(3) Evaluation [three-different-layer laminates (sheets)]

As is clear from Table 16, the sheets of Examples 54 to 56 were superior in flexibility, high in tensile break strength and superior in fretting resistance, breaking-through resistance and steam sterilization resistance. In contrast, the sheets of Comparative Examples 34 and 35 were insufficient in fretting resistance and breaking-through resistance although they were not much inferior to the sheets of the Examples in tensile break resistance. The sheet of Comparative Example 36 was about equal in steam sterilization resistance but inferior in flexibility.

(4) Medical shaped articles (tubes)

(Example 57)

There were compounded 80 parts by mass of a hydrogenated diene-based copolymer (H-29), 20 parts by mass of a polypropylene [XF 1800 (trade name) produced by Chisso Petrochemical Corporation, MFR = 1.5 g/10 min], 0.05 part by mass of erucic acid amide [Neutron S (trade name) produced by Nihon Seika Co.] and 0.1 part by mass of glycerine monostearate [Rikemal S 100 (trade name) produced by Riken Vitamin Co.]. The compound was extruded from a die for tube at an extrusion temperature of 210°C using a 40-mm single screw extruder produced by Ikegai Co. The extrudate was taken off at a speed of about 5 m/min to produce a tube of Example 57 having an outer diameter of 5.5 mm and an inner diameter of 4 mm.

(Examples 58 and 59, Comparative Examples 37 and 38)

Tubes of Examples 58 and 59 and Comparative Examples 37 and 38 were produced in the same manner as in Example 57 except that there were used the hydrogenated diene-based copolymers shown in Table 17.

The tubes of Examples 57 to 59 and Comparative Examples 37 and 38 were measured for tensile break strength (MPa) and hardness (°). The results of the measurements are shown in Table 17. Also, these tubes were evaluated for kinking and fretting resistance. The results are shown in Table 17. Incidentally, the measurement methods for tensile break strength and hardness and the evaluation methods for kinking and fretting resistance are shown below.

[Tensile break strength]

A tube was set between chucks having a gap of 5 cm between them. Measurement was made at a pulling speed of 500 mm/min.

[Kinking]

The two ends of a 150-mm (length) tube were fitted to the jigs of a tensile tester so that the distance between the jigs became 100 mm. In this state, the tube was compressed at a compression speed of 100 mm/min and the occurrence of kink was observed visually. Three-level evaluation was made based on the following criterion.

○: Very good (kink occurred at a zig-to-zig distance of less than 3 cm.)
Δ: Good (kink occurred at a zig-to-zig distance of 3 cm to less than 4 cm.)
X: Bad ((kink occurred at a zig-to-zig distance of more than 4 cm.)

[Hardness]

A pressed sheet of 6.3 mm in thickness was produced by hot pressing and measured for hardness according to JIS K 6253.

[Fretting resistance]

The surface of three tubes fixed in an adjacent state was rubbed by allowing a shirting No. 3 to shuttle on the surface 100 times at a load of 500 g, using a Gakushin type fastness rubbing tester (produced by Yasuda Seiki Seisakusho K.K.) described in JIS L 0801. Then, the surface of the sample was observed visually and three-level evaluation was made based on the following criterion.

○: There is no mar.
X: There is mar.

Table 17

| | Exam.57 | Exam.58 | Exam.59 | Comp. Exam.37 | Comp. Exam.38 |
|---|---|---|---|---|---|
| Kind of hydrogenated diene-based copolymer | H-29 | H-30 | H-31 | R-18 | R-19 |
| Compounding ratio(hydrogenated diene-based copolymer/PP) | 80/20 | 80/20 | 80/20 | 80/20 | 80/20 |
| Erucic amide compounded (parts by mass) | 0.05 | 0.05 | 0.05 | 0.05 | 0.05 |
| Glycerine monostearate compounded (parts by mass) | 0.1 | 0.1 | 0.1 | 0.1 | 0.1 |
| Tensile break strength (MPa) | 14 | 14 | 19 | 9 | 14 |
| Kinking | ○ | ○ | ○ | △ | × |
| Hardness (degree) | 60 | 60 | 67 | 65 | 84 |
| Fretting resistance | ○ | ○ | ○ | × | × |

(5) Evaluation (tubes)

As is clear from Table 17, the tubes of Examples 57 to 59, as compared with those of Comparative Examples 37 and 38, were superior in kinking and fretting resistance. Although part of the tubes of Comparative Examples 37 and38 were superior in tensile break strength and flexibility, the tubes of Examples 57 to 59 were very good in balance of these properties and superior in kinking and fretting resistance. From these results, the superior properties of the tubes of the present invention could be confirmed.

Industrial Applicability

The hydrogenated diene-based copolymer having a particular structure, according to the present invention is per se superior in processability, flexibility, weather resistance, vibration-damping property and mechanical properties, and can give a shaped article which is highly flexible and is superior in mechanical properties, appearance, mar resistance, weather resistance, heat resistance, vibration-damping property and processability. The polymer composition of the present invention is highly flexible and is superior in mechanical properties, appearance, weather resistance, vibration-damping property and heat resistance. The shaped article of the present invention is superior in flexibility, weather resistance, vibration-damping resistance and mechanical properties. The composition for foamed material according to the present invention is superior in processability and can provide a foamed material superior in flexibility, mechanical properties and vibration-damping property. The foamed material of the present invention is superior in flexibility and mechanical properties and is highly superior in vibration-damping property.

Therefore, the shaped article of the hydrogenated diene-based copolymer having a particular structure, according to the present invention, particularly the shaped article of a composition of the above copolymer and an olefin-based polymer, can be used in the following extensive applications. That is, automotive applications such as bumper, mall as exterior trim, gasket for wind shielding, gasket for door shielding, gasket for trunk sealing, roof side rail, emblem, inner panel, door trim, skin material for inner or outer trim (e.g. console box), weather strip and the like; mar-resistant leather sheet; aircraft and ship applications such as sealing material, skin material for inner or outer trim, and the like; civil engineering and construction applications such as sealing material, skin material for inner or outer trim, water-proof sheet, and the like; general machinery and equipment applications such as sealing material and the like; light electric appliance applications such as packing, skin material, housing and the like; roll and cleaning blade for information appliances; film for electronic parts; protective film and sealing material used in production of flat panel display (FPD) for semiconductor, liquid crystal display apparatus, etc.; protective film for image (e.g. picture); decorative film for construction material; part for medical instruments; electric wire; and ordinary processed products such as daily sundry, sporting goods, impact-absorbing sponge for sole, impact-absorbing sponge for insole; cap insole, packaging material for impact absorption, cushioning material and the like.

The soft film or sheet of the present invention is superior in strength, fretting resistance and breakage resistance. Therefore, it can be suitably used in extensive applications, that is, packaging of clothes such as shirt, stocking and the like; packaging of bedding such as futon, pillow and the like; packaging of various foods; packaging of daily sundries; packaging of industrial materials; lamination of rubber product, resin product, leather product, etc.; stretching tape used in paper diaper, etc.; industrial material such as dicing film or the like; protective film used in protection of building material or steel plate; base material for pressure-sensitive adhesive film; sheet application such as tray for edible meat or fresh fish, pack for vegetable or fruit, container for cold cake, or the like; household electric appliance application such as TV, stereo, electric cleaner or the like; interior or exterior automotive trim such as bumper part, body panel, side seal or the like; material for road pavement; water-proof or water-shielding sheet; packing for civil engineering; daily sundry; leisure goods; toy; industrial material; furniture; film or sheet for stationery such as writing material, transparent pocket, holder, file backbone or the like; medical device; and so forth.

Meanwhile, the tube of the present invention is superior in kinking and fretting resistance and good in balance of strength and hardness. Therefore, it can be suitably used in extensive applications such as vehicle parts, parts for light electrical appliance, parts for home electrical appliance, industrial parts, members for handling of foods and drinks, members for transfer of resin or rubber, and the like.

The multilayered laminate of the present invention is superior in fretting resistance, breaking-through resistance and flexibility. Therefore, it can be suitably used in extensive applications such as material for apparel (e.g. poncho or raincoat), material for packaging (e.g. film for apparel packaging, film for stationery packaging, or film for medical packaging), and film or sheet (e.g. book cover, film for formation of electronic circuit substrate, dicing film, bag for medical waste, stationery, transcription film for medical hygiene material, surface-protecting film, cosmetic film, table cloth, desk mat, cutting sheet, or skin material for interior automotive trim).

The medical shaped article of the present invention is superior in fretting resistance and breaking-through resistance and can withstand high-pressure steam sterilization. Therefore, it can be suitably used as a container (including a bag) for storing or transferring a blood, a blood component or a medical solution, a tube, a medical instrument, etc.; more specifically, as a medical tube, a catheter, a clysis bag, a blood bag, a continuous ambulatory peritoneal dialysis (CAPD) bag, a drainage bag for continuous ambulatory peritoneal dialysis (CAPD), etc.

**Claims**

1. A hydrogenated diene-based copolymer which is obtained by hydrogenating a block copolymer containing at least two polymer blocks (A) composed mainly of a vinyl aromatic compound and at least one vinyl aromatic compound-conjugated diene compound copolymer block (B), and satisfies the following conditions (1) to (3):

(1) a content of the total vinyl aromatic compound units in the hydrogenated diene-based copolymer is 20 to 70% by mass,
(2) a proportion (BS) of the content of the vinyl aromatic compound unit contained in the block (B), to the content of the total vinyl aromatic compound units in the hydrogenated diene-based copolymer is 10 to 80%, and
(3) a content of the vinyl configuration derived from the conjugated diene compound, in the hydrogenated diene-based copolymer is 30 to 75%.

2. A hydrogenated diene-based copolymer which is obtained by hydrogenating a block copolymer containing at least two polymer blocks (A) composed mainly of a vinyl aromatic compound and at least one vinyl aromatic compound-conjugated diene compound copolymer block (B), and satisfies the following conditions (1) to (3):

(1) a content of the total vinyl aromatic compound units in the hydrogenated diene-based copolymer is 20 to 70% by mass,
(2) a proportion (LS) of the content of the long-chain vinyl aromatic compound unit to the content of the total vinyl aromatic compound units in the hydrogenated diene-based copolymer is 10 to 80%, and
(3) a content of the vinyl configuration derived from the conjugated diene compound, in the hydrogenated diene-based copolymer is 30 to 75%.

3. A hydrogenated diene-based copolymer according to Claim 1 or 2, wherein at least 90% of the double bonds derived from the conjugated diene compound is hydrogenated.

4. A hydrogenated diene-based copolymer according to any of Claims 1 to 3, which has a melt flow rate (MFR) of 10 to 200 g/10 min when measured at 230°C at a load of 21.2 N.

5. A hydrogenated diene-based copolymer according to any of Claims 1 to 3, which has a melt flow rate (MFR) of 0.01 to 100 g/10 min when measured at 230°C at a load of 21.2 N.

6. A hydrogenated diene-based copolymer according to any of Claims 1 to 4, which has a melt viscosity of 2,000 Pa·s or less at 230°C at 0.1 Hz.

7. A polymer composition comprising a hydrogenated diene-based copolymer (a) set forth in any of Claims 1 to 6 and a thermoplastic polymer (b) other than the hydrogenated diene-based copolymer (a), at a mass ratio of (a)/(b) = 99/1 to 1/99 [(a) + (b) = 100].

8. A polymer composition according to Claim 7, wherein the thermoplastic polymer (b) is a propylene-based polymer.

9. A powder obtained by subjecting a polymer composition set forth in Claim 8, to mechanical grinding, die face cutting or strand cutting.

10. A powder according to Claim 9, which has a bulk specific gravity of 0.38 or more and a sphere-reduced average particle diameter of 1.2 mm or less.

11. A shaped article obtained by subjecting a powder set forth in Claim 9 or 10, to powder molding.

12. A shaped article obtained by subjecting a hydrogenated diene-based copolymer set forth in Claim 5, to extrusion molding.

13. A shaped article obtained by subjecting to extrusion molding a polymer composition set forth in Claim 5, comprising a hydrogenated diene-based copolymer (a) and a thermoplastic polymer (b) at a mass ratio of (a)/(b) = 99/1 to 1/99 [(a) + (b) = 100].

**14.** A composition for foamed material, comprising a hydrogenated diene-based copolymer set forth in any of Claims 1 to 6 and a foaming agent.

**15.** A composition for foamed material according to Claim 14, further comprising a thermoplastic polymer other than the hydrogenated diene-based copolymer.

**16.** A foamed material obtained by foaming a composition for foamed material set forth in Claim 14 or 15.

**17.** A soft film or sheet made of a hydrogenated diene-based copolymer set forth in any of Claims 1 to 6.

**18.** A soft film or sheet made of a polymer composition comprising a hydrogenated diene-based copolymer (a) set forth in any of Claims 1 to 6 and a thermoplastic polymer (b) other than the hydrogenated diene-based copolymer (a), at a mass ratio of (a)/(b) = 99/1 to 1/99 [(a) + (b) = 100].

**19.** A soft film or sheet according to Claim 17 or 18, wherein the thermoplastic polymer (b) is an olefin-based polymer.

**20.** A soft film or sheet according to Claim 19, wherein the olefin-based polymer is a propylene-based polymer.

**21.** A tube made of a polymer composition comprising a hydrogenated diene-based copolymer (a) set forth in any of Claims 1 to 6 and a thermoplastic polymer (b) other than the hydrogenated diene-based copolymer (a), at a mass ratio of (a)/(b) = 99/1 to 50/50 [(a) + (b) = 100].

**22.** A multilayered laminate comprising a base material layer and a surface layer formed on at least one side of the base material layer, wherein the surface layer is made of a polymer composition comprising an olefin-based resin (c) and a hydrogenated diene-based copolymer (a) set forth in any of Claims 1 to 6, at a mass ratio of (c)/(a) = 95/5 to 20/80 [(c) + (a) = 100].

**23.** A multilayered laminate according to Claim 22, wherein the base material layer is made of a resin composition comprising the olefin-based resin (c) and a hydrogenated diene-based copolymer (d) at a mass ratio of (c)/(d) = 100/0 to 20/80 [(c) + (d) = 100].

**24.** A process for producing a multilayered laminate comprising a base material layer and a surface layer formed on at least one side of the base material layer, which process comprises a step of subjecting to co-extrusion a polymer composition comprising an olefin-based resin (c) and a below-described hydrogenated diene-based copolymer (a) at a mass ratio of (c)/(a) = 95/5 to 20/80 [(c) + (a) = 100] and a resin composition comprising the olefin-based resin (c) and a hydrogenated diene-based copolymer (d) at a mass ratio of (c)/(d) = 100/0 to 20/80 [(c) + (d) = 100], to form a surface layer made of the polymer composition on at least one side of a base material layer made of the resin composition.

A hydrogenated diene-based copolymer (a) which is obtained by hydrogenating a block copolymer containing at least two polymer blocks (A) composed mainly of a vinyl aromatic compound and at least one vinyl aromatic compound-conjugated diene compound copolymer block (B) and which satisfies the following conditions (1) to (3):

(1) a content of the total vinyl aromatic compound units in the hydrogenated diene-based copolymer is 20 to 70% by mass,
(2) a proportion (BS) of the content of the vinyl aromatic compound unit contained in the block (B), to the content of the total vinyl aromatic compound units in the hydrogenated diene-based copolymer is 10 to 80%, and
(3) a content of the vinyl configuration derived from the conjugated diene compound, in the hydrogenated diene-based copolymer is 30 to 75%.

**25.** A medical resin composition comprising a hydrogenated diene-based copolymer set forth in any of Claims 1 to 6 and a polyolefin type resin having a melting peak temperature of 100 to 200°C as measured by a differential scanning calorimetry (DSC).

**26.** A medical resin composition according to Claim 25, wherein the proportions of the hydrogenated diene-based copolymer (a) and the polyolefin type resin (e) are (a)/(e) = 90/10 to 10/90 [(a) + (e) = 100] in terms of mass ratio.

**27.** A medical resin composition according to Claim 25 or 26, wherein the polyolefin type resin is a polypropylene type resin.

28. A medical shaped article made of a medical resin composition set forth in any of Claims 25 to 27.

29. A medical shaped article according to Claim 28, which is a medical tube, a cathetel, a clysis bag, a blood bag, a bag for continuous ambulatory peritoneal dialysis (CAPD), or a drainage bag for continuous ambulatory peritoneal dialysis (CAPD).

FIG.1

FIG.2

FIG.3

FIG.4

**EP 1 605 002 A1**

<table>
<tr><td colspan="2" align="center">INTERNATIONAL SEARCH REPORT</td><td>International application No.<br>PCT/JP2004/003313</td></tr>
</table>

A. CLASSIFICATION OF SUBJECT MATTER
    $Int.Cl^7$  C08F297/04, 8/04, C08L53/02

According to International Patent Classification (IPC) or to both national classification and IPC

B.  FIELDS SEARCHED

Minimum documentation searched (classification system followed by classification symbols)
    $Int.Cl^7$  C08F297/04, 8/04, C08L53/02

Documentation searched other than minimum documentation to the extent that such documents are included in the fields searched

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 3-72512 A  (Japan Synthetic Rubber Co., Ltd.),<br>27 March, 1991 (27.03.91),<br>Claims; examples<br>& EP 398758 A2          & EP 709413 A1<br>& DE 69032963 C         & DE 69033210 C<br>& US 5191024 A1         & US 5306779 A1<br>& US 5346964 A1 | 1-8,12-29 |
| X | JP 2-305814 A  (Japan Synthetic Rubber Co., Ltd.),<br>19 December, 1990 (19.12.90),<br>Claims; examples<br>& EP 398758 A2          & EP 709413 A1<br>& DE 69032963 C         & DE 69033210 C<br>& US 5191024 A1         & US 5306779 A1<br>& US 5346964 A1 | 1-8,12-29 |

☒  Further documents are listed in the continuation of Box C.        ☐  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    05 April, 2004 (05.04.04) | Date of mailing of the international search report<br>    20 April, 2004 (20.04.04) |
|---|---|
| Name and mailing address of the ISA/<br>    Japanese Patent Office | Authorized officer |
| Facsimile No. | Telephone No. |

Form PCT/ISA/210 (second sheet) (January 2004)

**EP 1 605 002 A1**

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-170844 A (Japan Synthetic Rubber Co., Ltd.), 09 July, 1993 (09.07.93), Full text (Family: none) | 1-29 |
| A | JP 11-130828 A (Asahi Chemical Industry Co., Ltd.), 18 May, 1999 (18.05.99), Full text (Family: none) | 1-29 |

Form PCT/ISA/210 (continuation of second sheet) (January 2004)